(19) Europäisches Patentamt
European Patent Office
Office européen des brevets

(11) EP 1 900 779 A1

(12) # EUROPEAN PATENT APPLICATION
published in accordance with Art. 153(4) EPC

(43) Date of publication:
**19.03.2008 Bulletin 2008/12**

(21) Application number: **06732661.1**

(22) Date of filing: **16.05.2006**

(51) Int Cl.:
***C09B 23/00*** *(2006.01)* ***B41M 5/26*** *(2006.01)*

(86) International application number:
**PCT/JP2006/310087**

(87) International publication number:
**WO 2006/123807 (23.11.2006 Gazette 2006/47)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.05.2005 JP 2005143484**
**06.01.2006 JP 2006001914**

(71) Applicant: **Mitsui Chemicals, Inc.**
**Tokyo 105-7117 (JP)**

(72) Inventors:
- **NISHIMOTO, Taizo**
  **Sodegaura-shi,**
  **Chiba 299-0265 (JP)**
- **TAKAHASHI, Eiichi**
  **Sodegaura-shi,**
  **Chiba 299-0265 (JP)**
- **MURAYAMA, Shunsuke**
  **Sodegaura-shi,**
  **Chiba 299-0265 (JP)**
- **ASO, Yoshiaki**
  **Sodegaura-shi,**
  **Chiba 299-0265 (JP)**
- **OGISO, Akira**
  **Sodegaura-shi,**
  **Chiba 299-0265 (JP)**
- **KOHSAKA, Akihiro**
  **Yao-shi,**
  **Osaka 581-0034 (JP)**
- **YOSHIDA, Takafumi**
  **Yao-shi,**
  **Osaka 581-0034 (JP)**
- **SASAKI, Hiroyuki**
  **Yao-shi,**
  **Osaka 581-0034 (JP)**
- **KATO, Kenichi**
  **Yao-shi,**
  **Osaka 581-0034 (JP)**
- **TERAO, Hiroshi**
  **Yao-shi,**
  **Osaka 581-0034 (JP)**
- **KUMAGAE, Yojiro**
  **Yao-shi,**
  **Osaka 581-0034 (JP)**

(74) Representative: **Stuart, Ian Alexander et al**
**Mewburn Ellis LLP**
**York House**
**23 Kingsway**
**London WC2B 6HP (GB)**

(54) **TRIMETHINE DIMER COMPOUND AND OPTICAL RECORDING MEDIUM USING SAME**

(57) Disclosed is a trimethine dimer compound represented by the following general formula (I) and optical recording medium containing such a compound in a recording layer.

EP 1 900 779 A1

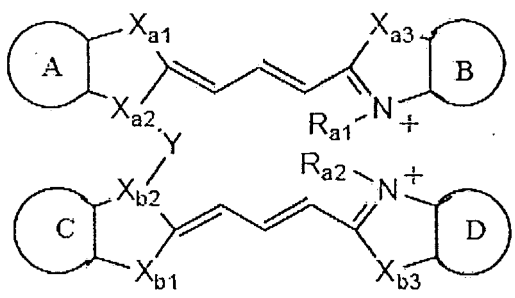

$b(Z^{a-})$ (I)

(I)(In the formula, symbols are as in the description. When both $X_{a2}$ and $X_{b2}$ are imino groups, one of $X_{a1}$, $X_{b1}$, $X_{a3}$ and $X_{b3}$ is necessarily a 1-alkyl-1-benzylmethylene group which may have a substituent, a 1,1-dibenzylmethylene group which may have a substituent or a cycloalkane-1,1-diyl group having 3 to 6 carbon atoms which may have a substituent.)

## Description

### TECHNICAL FIELD

The present invention relates to an optical recording medium capable of recording and reproducing at a higher density as compared to the past using a trimethine dimer compound.

### BACKGROUND ART

As a medium capable of recording and reproducing data such as images, pictures, voices and the like, a CD-R using an organic dye as a recording material has been widely known. At present, with the increase in an amount of data to be handled, the spread of an optical recording medium capable of recording and reproducing with higher capacity as compared to the CD-R has been demanded. A DVD-R using an organic dye as a recording material like the CD-R has been developed as a medium for the next generation and commercialized into products.

A structure of the DVD-R in general is shown in Fig. 1, in which a recording layer 2, a reflective layer 3 and a protective layer (or adhesive layer) 4 are formed on a transparent resin substrate 1 having lands and grooves, and a substrate 5 is further formed thereon depending on the situation.

In the DVD-R, an outgoing wavelength of a laser light for high-density recording is in the vicinity of from 630nm to 680 nm which is shorter than that in the CD-R. As dyes of an organic dye-based optical recording medium for use at such a short wavelength, there have been proposed a trimethine compound, an azo compound, a porphyrin compound, in addition thereto, indigo dyes, a dioxazine compound, a coumarin compound, a perylene compound, a naphtholactam compound, a triphenylmethane compound, a subphthalocyanine compound, a dibenzopyran compound, a dipyrromethene compound and the like.

Of these compounds, an optical recording medium using a trimethine compound has been reviewed from the facts that it is excellent in optical properties and capable of coping with high density optical recording media.

On the other hand, as shown in high recording speed for CD-Rs, in DVD-Rs, an optical recording medium corresponding to a 8×, 12× or higher, 16× speed as compared to the standard recording speed has also been demanded. Furthermore, there has been demanded realization of an optical recording medium capable of conducting good recording, even though recorded at any speed of from the standard recording speed to higher recording speed.

However, for high speed recording, particularly recording at a 12× or higher speed, a problem of insufficient sensitivity caused by limited output of a recording laser, a problem of increasing thermal interference among recording pits due to heat generated when forming pits or a problem of deteriorated jitter or the like has been manifested.

In Japanese Patent Laid-open No. 1999-53761, Japanese Patent Laid-open No. 2000-108510, Japanese Patent Laid-open No. 2000-289335 and the like, there has been disclosed a trimethine compound with a nitro group introduced thereinto. In Japanese Patent Laid-open No. 2002-52829, there has been disclosed a trimethine compound with a spiro ring introduced into a specific position. In all of these documents, there has been described that the sensitivity to a recording laser was good. However, there have not been described the sensitivity at the time of high-speed recording and deterioration of jitter caused by thermal interference.

In Japanese Patent Laid-open No. 2003-231359, Japanese Patent Laid-open No. 2005-54150, Japanese Patent Laid-open No. 2005-53875, there has been described a trimethine compound with a benzyl group introduced into a specific position, and there has been described that a decomposition temperature was lowered due to the introduction of a benzyl group for coping with high-speed recording. However, there have not been described high-speed recording properties for 12x or higher recording and there are still rooms of improvement.

On the other hand, in Japanese Patent No. 3627892, there has been described a cyanine dimer, but a substituent was limited and there has not been described high-speed recording.

Patent Document 1: Japanese Patent Laid-open No. 1999-53761
Patent Document 2: Japanese Patent Laid-open No. 2000-108510
Patent Document 3: Japanese Patent Laid-open No. 2000-289335
Patent Document 4: Japanese Patent Laid-open No. 2002-52829
Patent Document 5: Japanese Patent Laid-open No. 2003-231359
Patent Document 6: Japanese Patent Laid-open No. 2005-54150
Patent Document 7: Japanese Patent Laid-open No. 2005-53875
Patent Document 8: Japanese Patent No. 3627892

### DISCLOSURE OF THE INVENTION

An object of the present invention is to provide a high-density optical recording medium which is capable of recording and reproducing by a short wavelength laser having a wavelength of 520 to 690 nm using a novel trimethine

dimer compound, is excellent in the sensitivity at a 12× or higher speed as well as the standard recording speed, has small thermal interference when forming pits, and has excellent recording properties.

The present inventors have conducted an extensive study to solve the above-mentioned objects and as a result, have found that by using a trimethine compound of a dimer structure totally different from the past, it is possible to obtain a high-density optical recording medium which is also excellent in the sensitivity for recording at a 12x or higher speed as well as the standard recording speed, has small thermal interference when forming pits and has excellent recording properties. Thus, the present invention has been completed.

That is, the present invention relates to:

[1] a trimethine dimer compound represented by the following general formula (I),

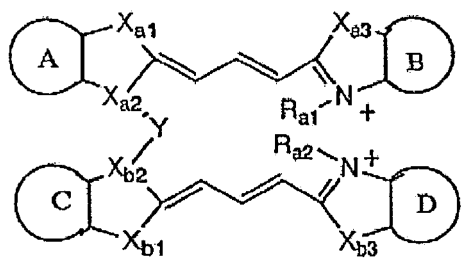

$b(Z^{a-})$ (I)

wherein, in the formula, A, B, C and D each independently represents a benzene ring which may have a substituent or a naphthalene ring which may have a substituent; $X_{a1}$, $X_{b1}$, $X_{a3}$ and $X_{b3}$ each independently represent an oxygen atom, a sulfur atom, a selenium atom, a methylene group which may have a substituent, a cycloalkane-1,1-diyl group having 3 to 6 carbon atoms which may have a substituent or an imino group which may have a substituent; $X_{a2}$ and $X_{b2}$ each independently represent an imino group or a methylene group which may have a substituent; $R_{a1}$ and $R_{a2}$ each independently represent an alkyl group which may have a substitutent or a benzyl group which may have a substitutent;

in b ($Z^{a-}$), Z- represents an anion; a and b represent an integer of 1 to 2, with the proviso that a × b = 2; and

Y represents the following general formula (II), (III) or (IV), with the proviso that, when both $X_{a2}$ and $X_{b2}$ are imino groups, one of $X_{a1}$, $X_{b1}$, $X_{a3}$ and $X_{b3}$ is necessarily a 1-alkyl-1-benzylmethylene group which may have a substituent, a 1,1-dibenzylmethylene group which may have a substituent or a cycloalkane-1,1-diyl group having 3 to 6 carbon atoms which may have a substituent,

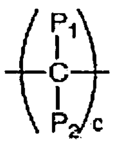

(II)

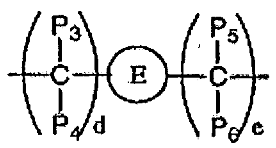

(III)

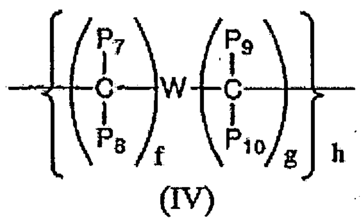

(IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4 ; h represents an integer of 1 to 2; and a ring E represents a benzene ring or a naphthalene ring;

[2] the trimethine dimer compound as set forth in [1] represented by the following general formula (V),

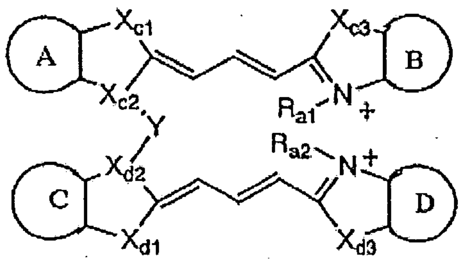

b($Z^{a-}$) (V)

wherein, in the formula, A, B, C and D each independently represent a benzene ring which may have a substituent or a naphthalene ring which may have a substituent; $X_{c1}$, $X_{d1}$, $X_{c3}$ and $X_{d3}$ each independently represent an oxygen atom, a sulfur atom, a selenium atom, a 1,1-dialkylmethylene group, a 1-alkyl-1-benzylmethylene group which may have a substituent, a 1,1-dibenzylmethylene group which may have a substituent, a cycloalkane-1,1-diyl group having 3 to 6 carbon atoms which may have a substituent, an N-alkylimino group which may have a substituent or an N-benzylimino group which may have a substituent; $X_{c2}$ and $X_{d2}$ each independently represent an imino group or a methylene group which may have a substituent; $R_{a1}$ and $R_{a2}$ each independently represent an alkyl group which may have a substitutent or a benzyl group which may have a substitutent;
in b($Z^{a-}$), Z- represents an anion; a and b represent an integer of 1 to 2, with the proviso that a $\times$ b = 2; and
Y represents the following general formula (II), (III) or (IV),
with the proviso that both $X_{c1}$ and $X_{c2}$, or both $X_{d1}$ and $X_{d2}$ are not imino groups at the same time, and when both $X_{c2}$ and $X_{d2}$ are imino groups, one of $X_{c1}$, $X_{d1}$, $X_{c3}$ and $X_{d3}$ is necessarily a 1-alkyl-1-benzylmethylene group which may have a substituent, a 1,1-dibenzylmethylene group which may have a substituent or a cycloalkane-1,1-diyl group having 3 to 6 carbon atoms which may have a substituent,

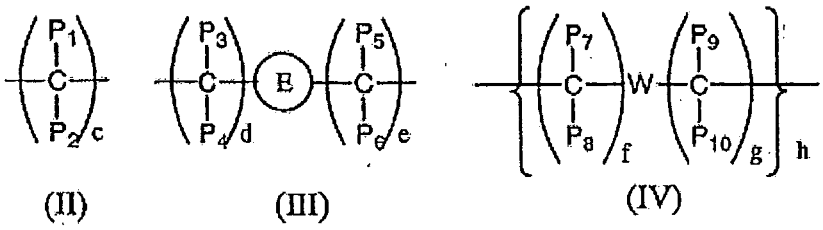

(II) (III) (IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring;
[3] the trimethine dimer compound as set forth in [2] represented by the following general formula (VI),

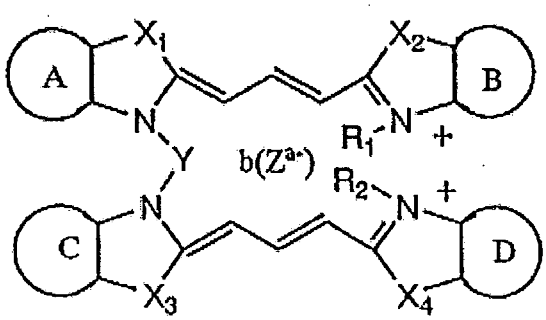

(VI)

wherein, in the formula, A, B, C and D each independently represent a benzene ring which may have a substituent or a naphthalene ring which may have a substituent; $X_1$, $X_2$, $X_3$ and $X_4$ each independently represent a 1,1-dialkylmethylene group, a 1-alkyl-1-benzylmethylene group which may have a substituent, a 1,1-dibenzylmethylene group

which may have a substituent or a cycloalkane-1,1-diyl group having 3 to 6 carbon atoms which may have a substituent; $R_1$ and $R_2$ each independently represent an alkyl group which may have a substitutent; in $b(Z^{a-})$, $Z^-$ represents an anion; a and b represent an integer of 1 to 2, with the proviso that $a \times b = 2$; and Y represents the following general formula (II), (III) or (IV), with the proviso that one of $X_1$, $X_2$, $X_3$ and $X_4$ is necessarily a 1-alkyl-1-benzylmethylene group which may have a substituent, a 1,1-dibenzylmethylene group which may have a substituent or a cycloalkane-1,1-diyl group having 3 to 6 carbon atoms which may have a substituent,

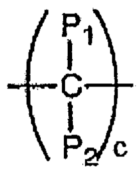
(II)

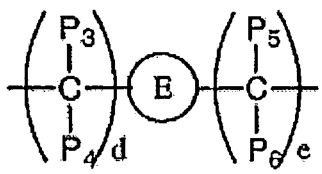
(III)

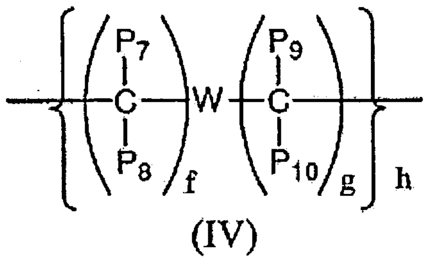
(IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a.thiocarbonyl residue; c represents an integer of 1 to 8; d to e represent an integer of 0 to 4; f to g represent an integer of 1 to 4; h represents an integer of 1 to 2; and a ring E represents a benzene ring or a, naphthalene ring;

[4] the trimethine dimer compound as set forth in [3] represented by the following general formula (VII),

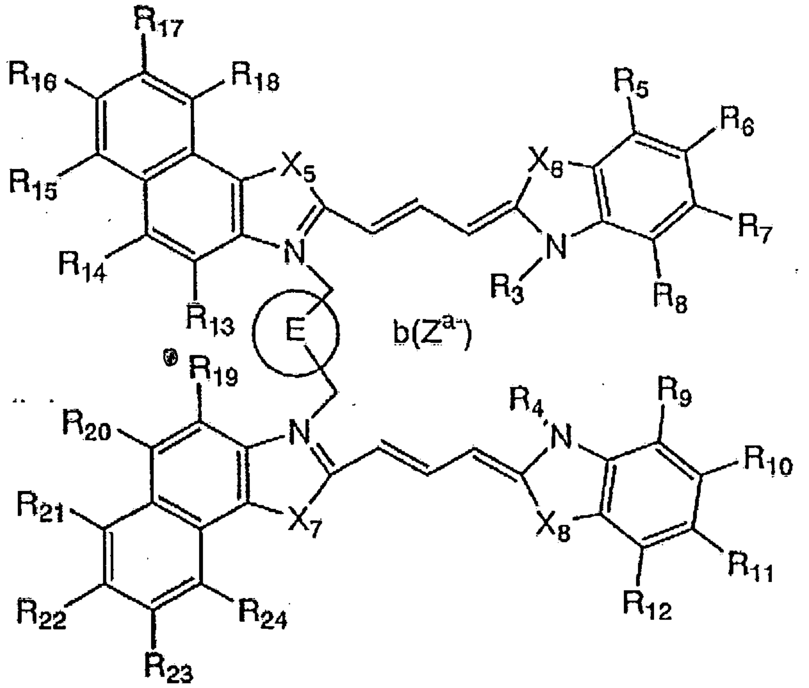
(VII)

wherein, in the formula, $X_5$, $X_6$, $X_7$ and $X_8$ each independently represent a 1,1-dialkylmethylene group, a 1-alkyl-1-benzylmethylene group which may have a substituent, a 1,1-dibenzylmethylene group which may have a substituent or a cycloalkane-1,1-diyl group having 3 to 6 carbon atoms which may have a substituent; $R_3$ and $R_4$ each independently represent an alkyl group which may have a substitutent; $R_5$ to $R_{24}$ each independently represent a hydrogen atom, a halogen atom, a nitro group, an alkyl group or an alkoxy group; a ring E represents a benzene ring or a naphthalene ring; in $b(Z^{a-})$, $Z^-$ represents an anion; a and b represent an integer of 1 to 2, with the proviso that $a \times b = 2$; and one of $X_5$, $X_6$, $X_7$ and $X_8$ is necessarily a 1-alkyl-1-benzylmethylene group which may have a substitutent, a 1,1-dibenzylmethylene group which may have a substituent or a cycloalkane-1,1-diyl group having

3 to 6 carbon atoms which may have a substituent;
[5] the trimethine dimer compound as set forth in [3] represented by the following general formula (VIII),

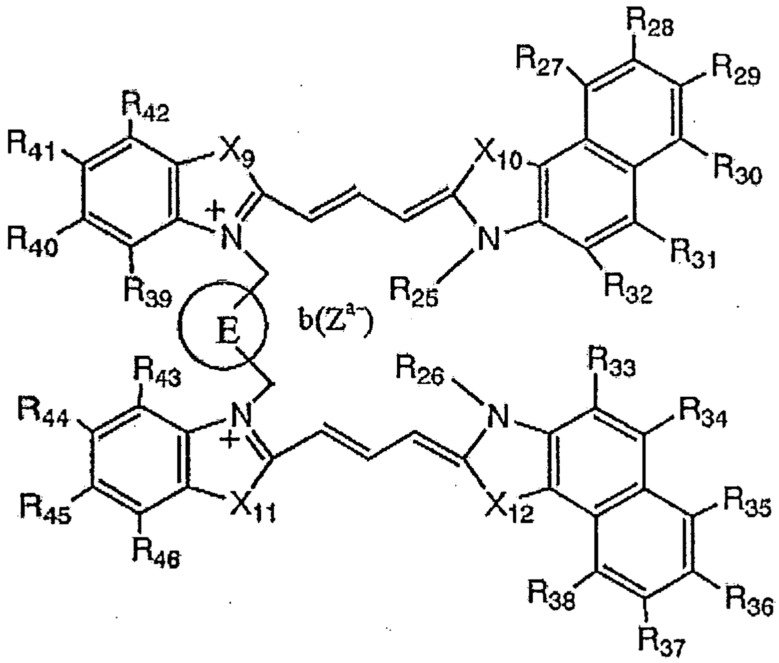

(VIII)

wherein, in the formula, $X_9$, $X_{10}$, $X_{11}$ and $X_{12}$ each independently represent a 1,1-dialkylmethylene group, a 1-alkyl-1-benzylmethylene group which may have a substitutent, a 1,1-dibenzylmethylene group which may have a substituent or a cycloalkane-1,1-diyl group having 3 to 6 carbon atoms which may have a substituent; $R_{25}$ and $R_{26}$ each independently represent an alkyl group which may have a substitutent; $R_{27}$ to $R_{46}$ each independently represent a hydrogen atom, a halogen atom, a nitro group, an alkyl group or an alkoxy group; a ring E represents a benzene ring or a naphthalene ring; in $b(Z^{a-})$, $Z^-$ represents an anion; a and b represent an integer of 1 to 2, with the proviso that a $\times$ b = 2; and one of $X_9$, $X_{10}$, $X_{11}$ and $X_{12}$ is necessarily a 1-alkyl-1-benzylmethylene group which may have a substitutent, a 1,1-dibenzylmethylene group which may have a substituent or a cycloalkane-1,1-diyl group having 3 to 6 carbon atoms which may have a substituent;
[6] the trimethine dimer compound as set forth in [2] represented by the following general formula (IX),

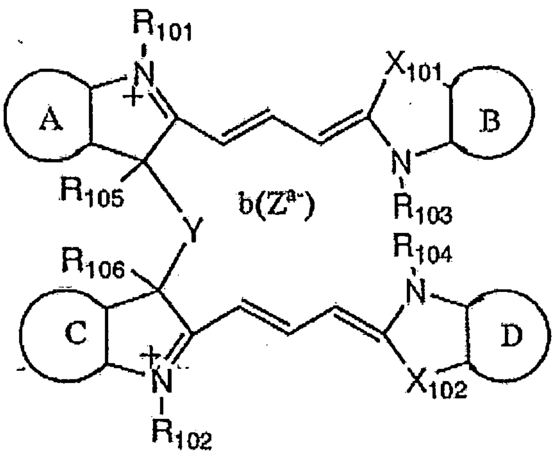

(IX)

wherein, in the formula, A, B, C and D each independently represent a benzene ring which may have a substituent or a naphthalene ring which may have a substituent; $X_{101}$ and $X_{102}$ each independently represent an oxygen atom, a sulfur atom, a selenium atom, a 1,1-dialkylmethylene group which may have a substituent, a 1-alkyl-1-benzylmethylene group which may have a substituent, a 1,1-dibenzylmethylene group which may have a substituent or a cycloalkane-1,1-diyl group having 3 to 6 carbon atoms which may have a substituent; $R_{101}$ to $R_{106}$ each independently represent an alkyl group which may have a substitutent or a benzyl group which may have a substitutent; in b($Z^{a-}$), $Z^-$ represents an anion; a and b represent an integer of 1 to 2, with the proviso that a $\times$ b = 2; and Y represents the following general formula (II), (III) or (IV),

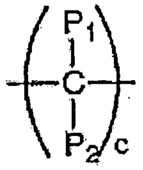
(II)

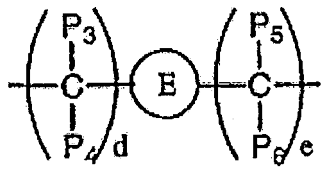
(III)

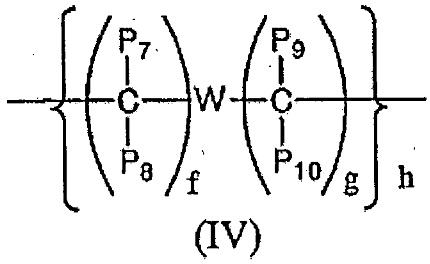
(IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring;

[7] the trimethine dimer compound as set forth in [6] represented by the following general formula (X),

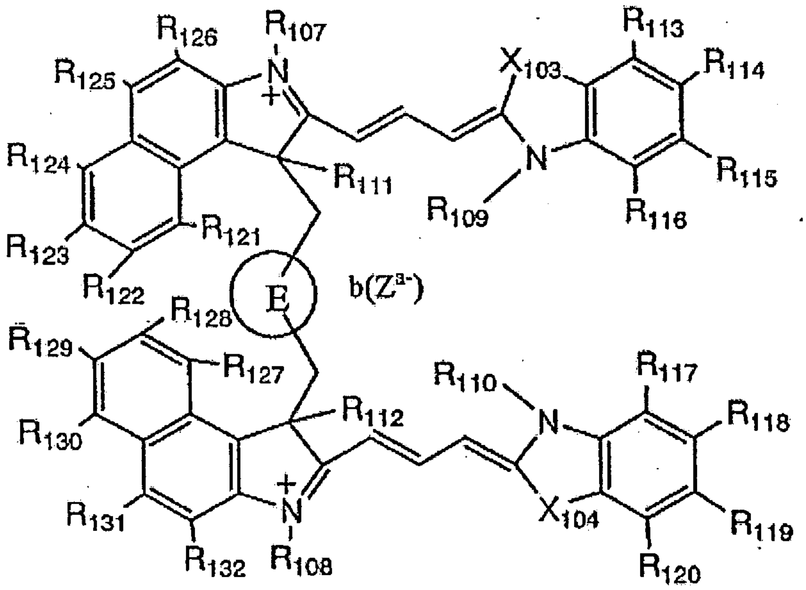
(X)

wherein, in the formula, $X_{103}$ and $X_{104}$ each independently represent an oxygen atom, a sulfur atom, a selenium atom, a 1,1-dialkylmethylene group which may have a substituent, a 1-alkyl-l-benzylmethylene group which may have a substituent, a 1,1-dibenzylmethylene group which may have a substituent or a cycloalkane-1,1-diyl group having 3 to 6 carbon atoms which may have a substituent; $R_{107}$ to $R_{112}$ each independently represent an alkyl group which may have a substitutent or a benzyl group which may have a substitutent; $R_{113}$ to $R_{132}$ each independently represent a hydrogen atom, a halogen atom, a nitro group, an alkyl group or an alkoxy group; a ring E represents a benzene ring or a naphthalene ring; in b ($Z^{a-}$), $Z^-$ represents an anion; and a and b represent an integer of 1 to 2, with the proviso that a $\times$ b = 2;

[8] the trimethine dimer compound as set forth in [6] represented by the following general formula (XI),

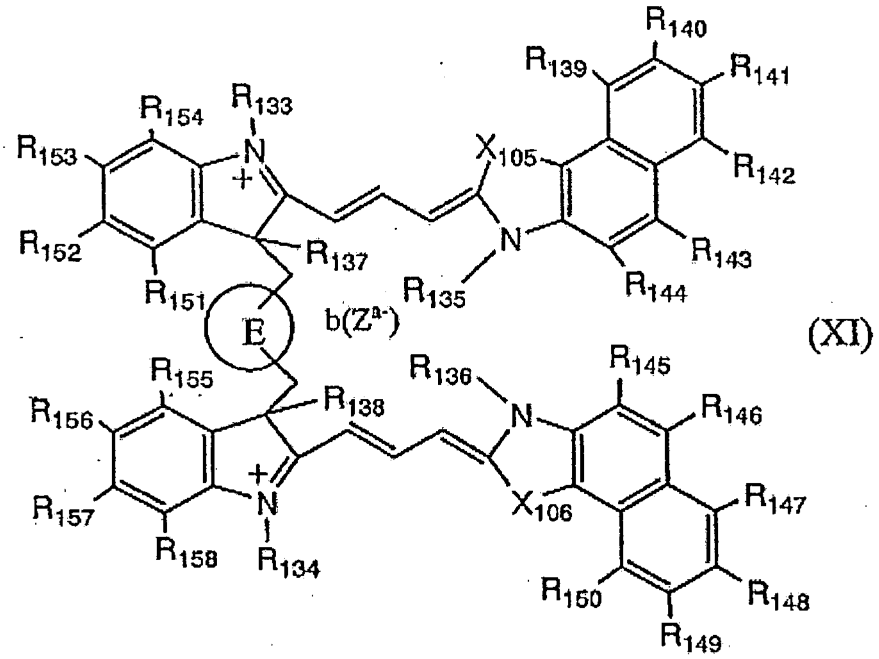

(XI)

wherein, in the formula, $X_{105}$ and $X_{106}$ each independently represent an oxygen atom, a sulfur atom, a selenium atom, a 1,1-dialkylmethylene group which may have a substitutent, a 1-alkyl-1-benzylmethylene group which may have a substitutent, a 1,1-dibenzylmethylene group which may have a substituent or a cycloalkane-1,1-diyl group having 3 to 6 carbon atoms which may have a substituent; $R_{133}$ to $R_{138}$ each independently represent an alkyl group which may have a substitutent or a benzyl group which may have a substitutent; $R_{139}$ to $R_{158}$ each independently represent a hydrogen atom, a halogen atom, a nitro group, an alkyl group or an alkoxy group; a ring E represents a benzene ring or a naphthalene ring; in b ($Z^{a-}$), $Z^-$ represents an anion; and a and b represent an integer of 1 to 2, with the proviso that a × b = 2; and

[9] an optical recording medium having at least a recording layer containing an organic dye and a reflective layer on a substrate, using at least one kind of the trimethine dimer compounds as set forth in any one of [1] to [8] as an organic dye.

By using the trimethine dimer compound of the present invention as a recording layer, it is possible to provide a write-once read-many optical recording medium capable of recording and reproducing by a laser having a wavelength of 520 to 690 nm and having excellent recording properties even for recording at a 12x or higher speed as well as the standard recording speed.

BRIEF DESCRIPTION OF THE DRAWINGS

The aforementioned objects and other objects, characteristics and advantages become further clear by the appropriate embodiments to be described below and the following drawings accompanied thereto.

Fig. 1 is a cross-sectional structure illustrating a layer construction of the present invention and the existing optical recording medium.

Fig. 2 is a view illustrating a signal eye pattern.

BEST MODE FOR CARRYING OUT THE INVENTION

The present invention will be illustrated in detail below.

The trimethine dimer compound of the present invention refers to a trimethine dimer compound represented by the following general formula (I),

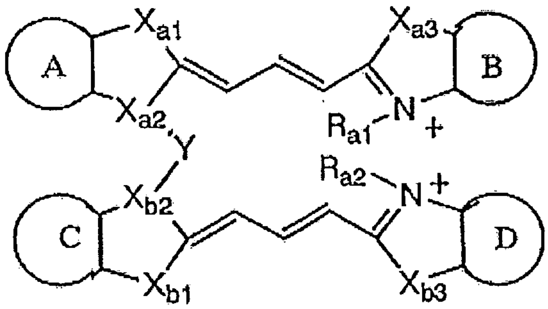

b($Z^{a-}$) (I)

wherein, in the formula, A, B, C and D each independently represents a benzene ring which may have a substituent or a naphthalene ring which may have a substituent; $X_{a1}$, $X_{b1}$, $X_{a3}$ and $X_{b3}$ each independently represent an oxygen atom, a sulfur atom, a selenium atom, a methylene group which may have a substituent, a cycloalkane-1,1-diyl group having 3 to 6 carbon atoms which may have a substituent or an imino group which may have a substituent; $X_{a2}$ and $X_{b2}$ each independently represent an imino group or a methylene group which may have a substituent; $R_{a1}$ and $R_{a2}$ each independently represent an alkyl group which may have a substitutent or a benzyl group which may have a substitutent; in b($Z^{a-}$), $Z^-$ represents an anion; a and b represent an integer of 1 to 2, with the proviso that a $\times$ b = 2; and Y represents the following general formula (II), (III) or (IV), with the proviso that, when both $X_{a2}$ and $X_{b2}$ are imino groups, one of $X_{a1}$, $X_{b1}$, $X_{a3}$ and $X_{b3}$ is necessarily a 1-alkyl-1-benzylmethylene group which may have a substituent, a 1,1-dibenzylmethylene group which may have a substituent or a cycloalkane-1,1-diyl group having 3 to 6 carbon atoms which may have a substituent,

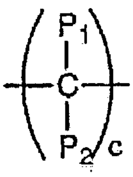

(II)

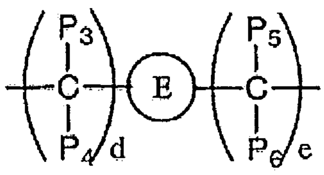

(III)

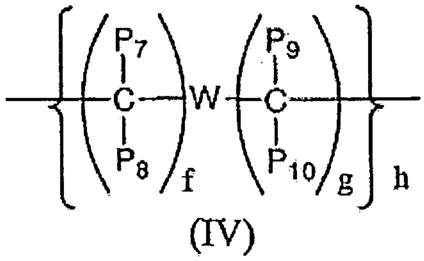

(IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring.

In the trimethine dimer compound represented by the general formula (I), A, B, C and D each independently represent a benzene ring which may have a substituent or a naphthalene ring which may have a substituent.

Examples of the substituent as described above include a halogen atom, a formyl group, a hydroxy group, a cyano group, a nitro group, an amino group, an alkyl group which may have a substituent, an alkoxy group which may have a substituent, an acyl group which may have a substituent, an alkenyl group which may have a substituent, a hydroxyalkyl group which may have a substituent, an alkoxycarbonyl group which may have a substituent, an alkylamino group which may have a substituent, a dialkylamino group which may have a substituent, an alkoxycarbonylalkyl group which may have a substituent, an alkylthio group which may have a substituent, an alkylsulfonyl group which may have a substituent, an alkylcarbonylamino group which may have a substituent, a phenyl group which may have a substituent, a metalocenyl group which may have a substituent and the like.

More specifically, there can be exemplified, for example, a halogen atom, a formyl group, a hydroxy group, a cyano group, a nitro group, an amino group, an alkyl group having 1 to 8 carbon atoms which may have a substituent, an alkoxy group having 1 to 8 carbon atoms which may have a substituent, an acyl group having 2 to 7 carbon atoms which may have a substituent, an alkenyl group having 2 to 6 carbon atoms which may have a substituent, a hydroxyalkyl group having 1 to 6 carbon atoms which may have a substituent, an alkoxycarbonyl group having 2 to 7 carbon atoms which may have a substituent, an alkylamino group having 1 to 6 carbon atoms which may have a substituent, a

dialkylamino group having 2 to 8 carbon atoms which may have a substituent, an alkoxycarbonylalkyl group having 3 to 7 carbon atoms which may have a substituent, an alkylthio group having 1 to 6 carbon atoms which may have a substituent, an alkylsulfonyl group having 1 to 6 carbon atoms which may have a substituent, an alkylcarbonylamino group having 2 to 6 carbon atoms which may have a substituent, a phenyl group which may have a substituent, a metalocenyl group which may have a substituent and the like.

Further specifically, there can be exemplified, for example, a halogen atom, a formyl group, a hydroxy group, a cyano group, a nitro group, an amino group, an alkyl group having 1 to 8 carbon atoms, an alkoxy group having 1 to 8 carbon atoms, an acyl group having 2 to 7 carbon atoms, an alkenyl group having 2 to 6 carbon atoms, a hydroxyalkyl group having 1 to 6 carbon atoms, an alkoxycarbonyl group having 2 to 7 carbon atoms, an alkylamino group having 1 to 6 carbon atoms, a dialkylamino group having 2 to 8 carbon atoms, an alkoxycarbonylalkyl group having 3 to 7 carbon atoms, an alkylthio group having 1 to 6 carbon atoms, an alkylsulfonyl group having 1 to 6 carbon atoms, an alkylcarbonylamino group having 2 to 6 carbon atoms, a phenyl group which may have a substituent, a metalocenyl group which may have a substituent and the like.

Herein, specific examples of the substituents of A, B, C and D in the general formula (I) include halogen atoms such as a fluorine atom, a chlorine atom, a bromine atom and the like; a formyl group; a hydroxyl group; a carboxyl group; a cyano group; a nitro group; an amino group;

alkyl groups having 1 to 8 carbon atoms such as a methyl group, a trifluoromethyl group, an ethyl group, a pentafluoroethyl group, an n-propyl group, an isopropyl group, an n-butyl group, a sec-butyl group, a tert-butyl group, an n-pentyl group, an n-hexyl group, a cyclopropyl group, a cyclobutyl group, a cyclopentyl group, a cyclohexyl group, a 1,2,2-trimethylbutyl group, a 1,1,2-trimethylbutyl group, a 1-ethyl-2-methylpropyl group, an n-heptyl group, a 2-methylhexyl group, a 3-methylhexyl group, a 4-methylhexyl group, a 5-methylhexyl group, a 2,4-dimethylpentyl group, an n-octyl group, a 2-ethylhexyl group, a 2, 5-dimethylhexyl group, a 2,5,5-triethylpentyl group, a 2,4-dimethylhexyl group, a 2,2,4-trimethylpentyl group and the like;

alkoxy groups having 1 to 8 carbon atoms such as a methoxy group, an ethoxy group, an n-propoxy group, an isopropoxy group, an n-butoxy group, a tert-butoxy group, a sec-butoxy group, an n-pentyloxy group, an iso-pentyloxy group, an n-hexyloxy group, an n-octyloxy group, a methoxymethoxy group, an ethoxyethoxy group, a 3-(iso-propyloxy)propyloxy group and the like;

acyl groups having 2 to 7 carbon atoms such as an acetyl group, a propiolic group, a butyryl group, an isobutyryl group, a valeryl group, an isovaleryl group, a pivaloyl group, a hexanoyl group, a heptanoyl group and the like;

alkenyl groups having 2 to 6 carbon atoms such as a vinyl group, a propenyl group, a butenyl group, a pentenyl group, a hexenyl group, a cyclopentenyl group, a cyclohexenyl group and the like;

hydroxyalkyl groups having 1 to 6 carbon atoms such as a hydroxymethyl group, a hydroxyethyl group and the like;

alkoxycarbonyl groups having 2 to 7 carbon atoms such as a methoxycarbonyl group, an ethoxycarbonyl group, an n-propoxycarbonyl group, an isopropoxycarbonyl group, an n-butoxycarbonyl group, a tert-butoxycarbonyl group, a sec-butoxycarbonyl group, an n-pentyloxycarbonyl group, an n-hexyloxycarbonyl group and the like;

alkylamino groups having 1 to 6 carbon atoms such as a methylamino group, an ethylamino group, an n-propylamino group, an n-butylamino group and the like;

dialkylamino groups having 2 to 8 carbon atoms such as a dimethylamino group, a diethylamino group, a di-n-propylamino group, a di-n-butylamino group and the like;

alkoxycarbonylalkyl groups having 3 to 7 carbon atoms such as a methoxycarbonylmethyl group, an ethoxycarbonylmethyl group, an n-propoxycarbonylmethyl group, an isopropoxycarbonylethyl group, a phenoxycarbonyl group and the like;

alkylthio groups having 1 to 6 carbon atoms such as a methylthio group, an ethylthio group, an n-propylthio group, a tert-butylthio group, a sec-butylthio group, an n-pentylthio group, an n-hexylthio group and the like;

alkylsulfonyl groups having 1 to 6 carbon atoms such as a methylsulfonyl group, a trifluoromethylsulfonyl group, an ethylsulfonyl group, a pentafluoroethylsulfonyl group, an n-propylsulfonyl group, an isopropylsulfonyl group, an n-butylsulfonyl group, a tert-butylsulfonyl group, a sec-butylsulfonyl group, an n-pentylsulfonyl group, an n-hexylsulfonyl group and the like;

alkylcarbonylamino groups having 2 to 6 carbon atoms such as a methylcarbonylamino group, an ethylcarbonylamino group, an n-propylcarbonylamino group, an isopropylcarbonylamino group, an n-butylcarbonylamino group, a tert-butylcarbonylamino group, a sec-butylcarbonylamino group, an n-pentylcarbonylamino group and the like;

aryl groups such as a phenyl group, a 4-methylphenyl group, a 4-tert-butylphenyl group, a biphenyl group, a 4-trifluoromethylphenyl group, a 4-methoxyphenyl group, a 4-chlorophenyl group, a 4-fluorophenyl group, a naphthalene-1-yl group, a naphthalene-2-yl group and the like; and

metalocenyl groups such as a ferrocenyl group, a titanocenyl group, a chronocenyl group, a ruthenocenyl group and the like.

In the trimethine dimer compound represented by the general formula (I), $X_{a1}$, $X_{b1}$, $X_{a3}$ and $X_{b3}$ each independently represent an oxygen atom, a sulfur atom, a selenium atom, a methylene group which may have a substituent,

a cycloalkane-1,1-diyl group having 3 to 6 carbon atoms which may have a substituent or an imino group which may have a substituent; and $X_{a2}$ and $X_{b2}$ each independently represent an imino group or a methylene group which may have a substituent. However, when both $X_{a2}$ and $X_{b2}$ are imino groups, one of $X_{a1}$, $X_{b1}$, $X_{a3}$ and $X_{b3}$ is necessarily a 1-alkyl-1-benzylmethylene group which may have a substituent, a 1, 1-dibenzylmethylene group which may have a substituent or a cycloalkane-1,1-diyl group having 3 to 6 carbon atoms which may have a substituent.

Preferably, as in the following general formulae (IX) to (XI), both of $X_{a1}$ and $X_{b1}$ are imino groups. Incidentally, a compound of the formula (IX) is preferable, and compounds of the formulae (X) and (XI) are further preferable from the viewpoint of recording properties for high-speed recording at a 12x or higher speed.

Examples of the aforementioned substituent include, for example, the same as specific examples cited as the substituent of a benzene ring which may have a substituent or a naphthalene ring which may have a substituent in the aforementioned A, B, C and D.

Furthermore, examples of the methylene group which may have a substituent include, for example, a 1,1-dialkylmethylene group, a 1-alkyl-1-benzylmethylene group which may have a substituent, a 1,1-dibenzylmethylene group which may have a substituent and the like.

More specifically, there can be exemplified, for example, 1, 1-dialkylmethylene groups such as a 1,1-dimethylmethylene group, a 1,1-diethylmethylene group, a 1,1-di-n-propylmethylene group, a 1,1-di-n-butylmethylene group, a 1-ethyl-1-methylmethylene group, a 1-methyl-1-propylmethylene group, a 1-butyl-1-methylmethylene group, a 1-ethyl-1-propylmethylene group, a 1-ethyl-1-butylmethylene group, a 1-cyclohexylmethyl-1-methylmethylene group and the like;

1-alkyl-1-benzylmethylene groups which may have a substituent such as a 1-benzyl-1-methylmethylene group, a 1-benzyl-1-ethylmethylene group, a 1-benzyl-1-propylmethylene group, a 1-benzyl-1-butylmethylene group, a 1-(4-nitrobenzyl)-1-methylmethylene group, a 1-(4-chlorobenzyl)-1-methylmethylene group, a 1-(4-bromobenzyl)-1-methylmethylene group, a 1-(4-methylbenzyl)-1-methylmethylene group and the like;

1,1-dibenzylmethylene groups which may have a substituent such as a 1,1-dibenzylmethylene group, a 1,1-di(4-nitrobenzyl)methylene group, a 1,1-di(4-chlorobenzyl)methylene group, a 1,1-di(4-bromobenzyl)methylene group, a 1,1-di(4-methylbenzyl)methylene group and the like; and

cycloalkane-1,1-diyl groups having 3 to 6 carbon atoms which may have a substituent such as a cyclobutane-1,1-diyl group, a cyclopentane-1,1-diyl group, a cyclohexyl-1,1-diyl group, a 4-methylcyclohexyl-1,1-diyl group, a 4-ethylcyclohexyl-1,1-diyl group, a 4-tert-butylcyclohexyl-1,1-diyl group and the like.

In the trimethine dimer compound represented by the general formula (I), $R_{a1}$ and $R_{a2}$ each independently represent an alkyl group which may have a substitutent or a benzyl group which may have a substitutent.

Specific examples of $R_{a1}$ and $R_{a2}$ include linear, branched or cyclic alkyl groups having 1 to 20 carbon atoms such as a methyl group, an ethyl group, an n-propyl group, an iso-propyl group, an n-butyl group, an iso-butyl group, a sec-butyl group, a t-butyl group, an n-pentyl group, a 2-methylbutyl group, a 1-methylbutyl group, a neo-pentyl group, a 1,2-dimethylpropyl group, a cyclo-pentyl group, an n-hexyl group, a 4-methylpentyl group, a 3-methylpentyl group, a 2-methylpentyl group, a 1-methylpentyl group, a 3,3-dimethylbutyl group, a 2,3-dimethylbutyl group, a 1,3-dimethylbutyl group, a 2,2-dimethylbutyl group, a 1,2-dimethylbutyl group, a 1,1-dimethylbutyl group, a 3-ethylbutyl group, a 2-ethylbutyl group, a 1-ethylbutyl group, a 1;2,2-trimethylbutyl group, a 1,1,2-trimethylbutyl group, a 1-ethyl-2-methylpropyl group, a cyclo-hexyl group, an n-heptyl group, a 2-methylhexyl group, a 3-methylhexyl group, a 4-methylhexyl group, a 5-methylhexyl group, a 2,4-dimethylpentyl group, an n-octyl group, a 2-ethylhexyl group, a 2, 5-dimethylhexyl group, a 2,5,5-triethylpentyl group, a 2,4-dimethylhexyl group, a 2,2,4-trimethylpentyl group, an n-nonyl group, a 3,5,5-trimethylhexyl group, an n-decyl group, a 4-ethyloctyl group, a 4-ethyl-4,5-dimethylhexyl group, an n-undecyl group, an n-dodecyl group, a 1, 3, 5, 7-tetramethyloctyl group, a 4-butyloctyl group, a 6,6-diethyloctyl group, an n-tridecyl group, a 6-methyl-4-butyloctyl group, a 6,6-diethyloctyl group, an n-tetradecyl group, an n-pentadecyl group, a 3,5-dimethylheptyl group, a 2,6-dimethylheptyl group, a 2,4-dimethylheptyl group, a 2,2,5,5-tetramethylhexyl group, a 1-cyclo-pentyl-2,2-dimethylpropyl group, a 1-cyclo-hexyl-2,2-dimethylpropyl group and the like;

halogenoalkyl groups such as a chloromethyl group, a dichloromethyl group, a fluoromethyl group, a trifluoromethyl group, a 2,2,2-trifluoroethyl group, a pentafluoroethyl group, a heptafluoroisopropyl group, a heptafluoro-n-propyl group, a 2,2,3,3,3-pentafluoropropyl group, a nonafluoro-n-butyl group, a nonafluoro-tert-butyl group, a 2,2,3,3,4,4,4-heptafluorobutyl group, a 2,2,3,4,4,4-hexafluorobutyl group, a perfluoroisopentyl group, a 2,2,3,3,4,4,5,5-octafluoropentyl group, a heptafluoro-sec-pentyl group, a perfluorohexyl group, a perfluoroisohexyl group, a perfluoroheptyl group, a perfluorooctyl group, a perfluorocyclohexyl group, a 4-trifluoromethylcyclohexyl group and the like;

alkoxyalkyl groups such as a methoxyethyl group, an ethoxyethyl group, an iso-propyloxyethyl group, a 3-methoxypropyl group, a 2-methoxybutyl group and the like;

dialkylaminoalkyl groups having 4 to 12 carbon atoms such as a 2-dimethylaminoethyl group, a 3-dimethylaminopropyl group, a 4-dimethylaminobutyl group, a 2-diethylaminoethyl group, a 3-diethylaminopropyl group, a 4-diethylaminobutyl group, a 2-di-n-propylaminoethyl group, a 3-di-n-propylaminopropyl group, a 4-di-n-propylaminobutyl group, a 2-di-n-butylaminoethyl group, a 3-di-n-butylaminopropyl group, a 4-di-n-butylaminobutyl group and the like;

alkyl groups which may have a substitutent such as alkoxycarbonylalkyl groups having 3 to 7 carbon atoms including a

methoxycarbonylmethyl group, an ethoxycarbonylmethyl group, an n-propoxycarbonylmethyl group, an isopropoxycarbonylethyl group, a phenoxycarbonyl group and the like;

a benzyl group, a 4-methylbenzyl group, a 3-methylbenzyl group, a 2-methylbenzyl group, a 4-ethylbenzyl group, a 4-isopropylbenzyl group, a 4-n-butylbenzyl group, a 4-isobutylbenzyl group, a 4-sec-butylbenzyl group, a 4-tert-butylbenzyl group, a 4-n-pentylbenzyl group, a 4-isopentylbenzyl group, a 4-trifluoromethylbenzyl group, a 4-methoxymethylbenzyl group, a 4-methylthiobenzyl group, a 2,4-dimethylbenzyl group, a 4-chlorobenzyl group, a 4-bromobenzyl group, a 4-fluorobenzyl group, a 2,4-dichlorobenzyl group, a 4-nitrobenzyl group, a 4-methyl-2-nitrobenzyl group, a 4-chloro-2-nitrobenzyl group and a 4-bromo-2-nitrobenzyl group.

In the trimethine dimer compound represented by the general formula (I), in b ($Z^{a-}$), $Z^-$ represents an anion; and a and b represent an integer of 1 to 2, with the proviso that a $\times$ b = 2.

Specific examples of the anion represented by $Z^{a-}$ include halogen anions such as iodine, bromine, chlorine, fluorine and the like; inorganic anions such as a perchloric acid anion, a chloric acid anion, a thiocyanic acid anion, a hexafluorophosphate anion, a hexafluoroantimonate anion, a boron tetrafluoride anion and the like; organic sulfonic acid anions such as a benzenesulfonic acid anion, a toluene-1,4-disulfonic acid anion, a toluenesulfonic acid anion, a trifluoromethanesulfonic acid anion, a naphthalene-1-sulfonic acid anion, a naphthalene-2-sulfonic acid anion, a naphthalene-1,4-disulfonic acid anion, a naphthalene-1,5-disulfonic acid anion, a naphthalene-1,8-disulfonic acid anion and the like; metalocene compound anions such as ferrocenesulfonic acid, ferrocenecarboxylic acid and the like; and quencher anions such as azo a compound metal chelate anion, a benzenedithiol metal complex anion and the like.

In the trimethine dimer compound represented by the general formula (I), Y represents the following general formula (II), (III) or (IV),

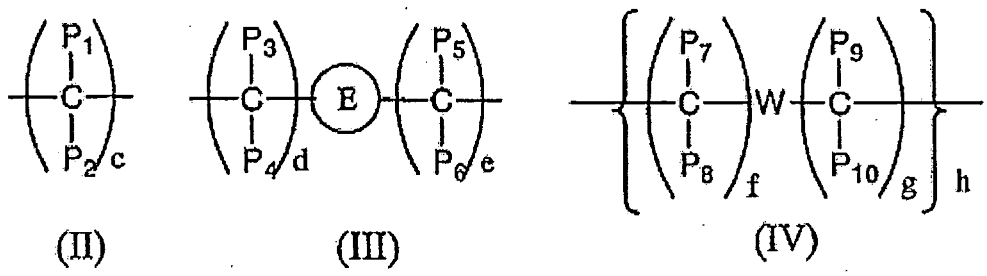

(II) (III) (IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring.

Here, in the general formulae (II), (III) and (IV), $P_1$ to $P_{10}$ each independently represent a hydrogen atom or an alkyl group.

Specific examples of $P_1$ to $P_{10}$ include a hydrogen atom, an alkyl group such as a methyl group, an ethyl group, an n-propyl group, an iso-propyl group, an n-butyl group, an iso-butyl group, a sec-butyl group, a tert-butyl group, an n-pentyl group, an iso-pentyl group, a sec-pentyl group, a tert-pentyl group, a neo-pentyl group, an n-hexyl group, an iso-hexyl group, an n-heptyl group, an iso-heptyl group, an n-octyl group, an iso-octyl group and the like.

In the general formulae (II), (III) and (IV), W represents a sulfur atom, an oxygen atom, an imine residue which may have a substituent, a carbonyl residue or a thiocarbonyl residue.

Specific examples of W include a sulfur atom, an oxygen atom, imine residues such as an N-methylimine group, an N-ethylimine group, an N-n-propylimine group, an N-iso-propylimine group, an N-n-butylimine group, an N-iso-butylimine group, an N-tert-butylimine group, an N-n-pentylimine group, an N-iso-pentylimine group, an N-tert-pentylimine group, an N-neo-pentylimine group, an N-n-hexylimine group, an N-iso-hexylimine group, an N-n-heptylimine group, an N-iso-heptylimine group, an N-n-octylimine group, an N-iso-octylimine group, a phenylimine group, an acetylimine group and the like; a carbonyl residue, a thiocarbonyl residue and the like.

In the formulae (II), (III) and (IV), c represents an integer of 1 to 8; d to e represent an integer of 0 to 4; f to g represent an integer of 1 to 4; and h represents an integer of 1 to 2.

In the formulae (II), (III) and (IV), a ring E represents a benzene ring or a naphthalene ring.

Specific examples of the ring E include a benzene ring and a naphthalene ring.

Of dimer compounds of the above formula (I), a trimethine dimer compound of the following formula (V) can be preferably used. Here, in the formula (V), $X_{c1}$, $X_{d1}$, $X_{c2}$, $X_{d2}$, $X_{c3}$ and $X_{d3}$ each correspond to $X_{a1}$, $X_{b1}$, $X_{a2}$, $X_{b2}$, $X_{a3}$ and $X_{b3}$ of the formula (I),

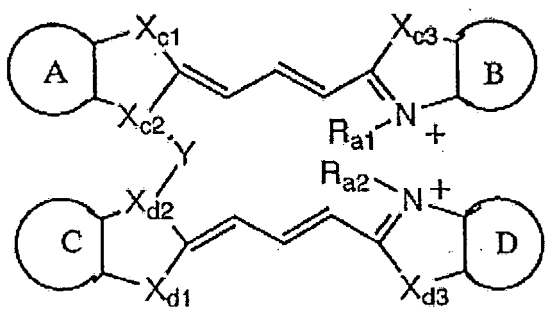

b($Z^{a-}$) (V)

wherein, in the formula, A, B, C and D each independently represent a benzene ring which may have a substituent or a naphthalene ring which may have a substituent; $X_{c1}$, $X_{d1}$, $X_{c3}$ and $X_{d3}$ each independently represent an oxygen atom, a sulfur atom, a selenium atom, a 1,1-dialkylmethylene group, a 1-alkyl-l-benzylmethylene group which may have a substituent, a 1,1-dibenzylmethylene group which may have a substituent, a cycloalkane-1,1-diyl group having 3 to 6 carbon atoms which may have a substituent, an N-alkylimino group which may have a substituent or an N-benzylimino group which may have a substituent; $X_{c2}$ and $X_{d2}$ each independently represent an imino group or a methylene group which may have a substituent; $R_{a1}$ and $R_{a2}$ each independently represent an alkyl group which may have a substitutent or a benzyl group which may have a substitutent;

in b ($Z^{a-}$), Z- represents an anion; a and b represent an integer of 1 to 2, with the proviso that a $\times$ b = 2; and

Y represents the following general formula (II), (III) or (IV),

with the proviso that both $X_{c1}$ and $X_{c2}$, or both $X_{d1}$ and $X_{d2}$ are not imino groups at the same time, and when both $X_{c2}$ and $X_{d2}$ are imino groups, one of $X_{c1}$, $X_{d1}$, $X_{c3}$ and $X_{d3}$ is necessarily a 1-alkyl-1-benzylmethylene group which may have a substituent, a 1,1-dibenzylmethylene group which may have a substituent or a cycloalkane-1,1-diyl group having 3 to 6 carbon atoms which may have a substituent,

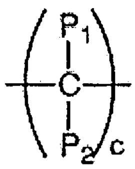

(II)

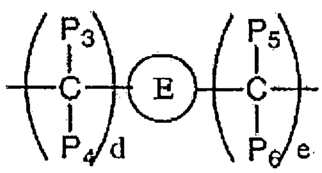

(III)

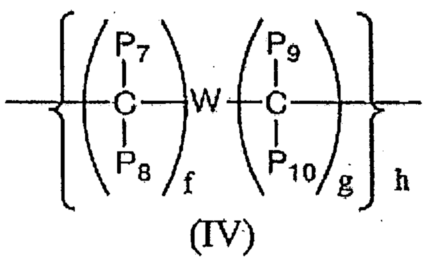

(IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring.

In the trimethine dimer compound represented by the general formula (V), A, B, C and D each independently represent a benzene ring which may have a substituent or a naphthalene ring which may have a substituent.

Examples of the substituent in the above include a halogen atom, a formyl group, a hydroxy group, a cyano group, a nitro group, an amino group, an alkyl group which may have a substituent, an alkoxy group which may have a substituent, an acyl group which may have a substituent, an alkenyl group which may have a substituent, a hydroxyalkyl group which may have a substituent, an alkoxycarbonyl group which may have a substituent, an alkylamino group which may have a substituent, a dialkylamino group which may have a substituent, an alkoxycarbonylalkyl group which may have a substituent, an alkylthio group which may have a substituent, an alkylsulfonyl group which may have a substituent, an alkylcarbonylamino group which may have a substituent, a phenyl group which may have a substituent, a metalocenyl group which may have a substituent and the like.

More specifically, there can be cited, for example, a halogen atom, a formyl group, a hydroxy group, a cyano group, a nitro group, an amino group, an alkyl group having 1 to 8 carbon atoms which may have a substituent, an alkoxy group having 1 to 8 carbon atoms which may have a substituent, an acyl group having 2 to 7 carbon atoms which may have a substituent, an alkenyl group having 2 to 6 carbon atoms which may have a substituent, a hydroxyalkyl group having 1 to 6 carbon atoms which may have a substituent, an alkoxycarbonyl group having 2 to 7 carbon atoms which

may have a substituent, an alkylamino group having 1 to 6 carbon atoms which may have a substituent, a dialkylamino group having 2 to 8 carbon atoms which may have a substituent, an alkoxycarbonylalkyl group having 3 to 7 carbon atoms which may have a substituent, an alkylthio group having 1 to 6 carbon atoms which may have a substituent, an alkylsulfonyl group having 1 to 6 carbon atoms which may have a substituent, an alkylcarbonylamino group having 2 to 6 carbon atoms which may have a substituent, a phenyl group which may have a substituent, a metalocenyl group which may have a substituent and the like.

Further specifically, there can be cited, for example, a halogen atom, a formyl group, a hydroxy group, a cyano group, a nitro group, an amino group, an alkyl group having 1 to 8 carbon atoms, an alkoxy group having 1 to 8 carbon atoms, an acyl group having 2 to 7 carbon atoms, an alkenyl group having 2 to 6 carbon atoms, a hydroxyalkyl group having 1 to 6 carbon atoms, an alkoxycarbonyl group having 2 to 7 carbon atoms, an alkylamino group having 1 to 6 carbon atoms, a dialkylamino group having 2 to 8 carbon atoms, an alkoxycarbonylalkyl group having 3 to 7 carbon atoms, an alkylthio group having 1 to 6 carbon atoms, an alkylsulfonyl group having 1 to 6 carbon atoms, an alkylcarbonylamino group having 2 to 6 carbon atoms, a phenyl group which may have a substituent, a metalocenyl group which may have a substituent and the like.

Herein, specific examples of the substituents of A, B, C and D in the general formula (V) include halogen atoms such as a fluorine atom, a chlorine atom, a bromine atom and the like; a formyl group; a hydroxyl group; a carboxyl group; a cyano group; a nitro group; an amino group;

alkyl groups having 1 to 8 carbon atoms such as a methyl group, a trifluoromethyl group, an ethyl group, a pentafluoroethyl group, an n-propyl group, an isopropyl group, an n-butyl group, a sec-butyl group, a tert-butyl group, an n-pentyl group, an n-hexyl group, a cyclopropyl group, a cyclobutyl group, a cyclopentyl group, a cyclohexyl group, a 1,2,2-trimethylbutyl group, a 1,1,2-trimethylbutyl group, a 1-ethyl-2-methylpropyl group, an n-heptyl group, a 2-methylhexyl group, a 3-methylhexyl group, a 4-methylhexyl group, a 5-methylhexyl group, a 2,4-dimethylpentyl group, an n-octyl group, a 2-ethylhexyl group, a 2,5-dimethylhexyl group, a 2,5,5-triethylpentyl group, a 2,4-dimethylhexyl group, a 2,2,4-trimethylpentyl group and the like;

alkoxy groups having 1 to 8 carbon atoms such as a methoxy group, an ethoxy group, an n-propoxy group, an isopropoxy group, an n-butoxy group, a tert-butoxy group, a sec-butoxy group, an n-pentyloxy group, an iso-pentyloxy group, an n-hexyloxy group, an n-octyloxy group, a methoxymethoxy group, an ethoxyethoxy group, a 3-(iso-propyloxy)propyloxy group and the like;

acyl groups having 2 to 7 carbon atoms such as an acetyl group, a propiolic group, a butyryl group, an isobutyryl group, a valeryl group, an isovaleryl group, a pivaloyl group, a hexanoyl group, a heptanoyl group and the like;

alkenyl groups having 2 to 6 carbon atoms such as a vinyl group, a propenyl group, a butenyl group, a pentenyl group, a hexenyl group, a cyclopentenyl group, a cyclohexenyl group and the like;

hydroxyalkyl groups having 1 to 6 carbon atoms such as a hydroxymethyl group, a hydroxyethyl group and the like;

alkoxycarbonyl groups having 2 to 7 carbon atoms such as a methoxycarbonyl group, an ethoxycarbonyl group, an n-propoxycarbonyl group, an isopropoxycarbonyl group, an n-butoxycarbonyl group, a tert-butoxycarbonyl group, a sec-butoxycarbonyl group, an n-pentyloxycarbonyl group, an n-hexyloxycarbonyl group and the like;

alkylamino groups having 1 to 6 carbon atoms such as a methylamino group, an ethylamino group, an n-propylamino group, an n-butylamino group and the like;

dialkylamino groups having 2 to 8 carbon atoms such as a dimethylamino group, a diethylamino group, a di-n-propylamino group, a di-n-butylamino group and the like;

alkoxycarbonylalkyl groups having 3 to 7 carbon atoms such as a methoxycarbonylmethyl group, an ethoxycarbonylmethyl group, an n-propoxycarbonylmethyl group, an isopropoxycarbonylethyl group, a phenoxycarbonyl group and the like;

alkylthio groups having 1 to 6 carbon atoms such as a methylthio group, an ethylthio group, an n-propylthio group, a tert-butylthio group, a sec-butylthio group, an n-pentylthio group, an n-hexylthio group and the like;

alkylsulfonyl groups having 1 to 6 carbon atoms such as a methylsulfonyl group, a trifluoromethylsulfonyl group, an ethylsulfonyl group, a pentafluoroethylsulfonyl group, an n-propylsulfonyl group, an isopropylsulfonyl group, an n-butylsulfonyl group, a tert-butylsulfonyl group, a sec-butylsulfonyl group, an n-pentylsulfonyl group, an n-hexylsulfonyl group and the like;

alkylcarbonylamino groups having 2 to 6 carbon atoms such as a methylcarbonylamino group, an ethylcarbonylamino group, an n-propylcarbonylamino group, an isopropylcarbonylamino group, an n-butylcarbonylamino group, a tert-butylcarbonylamino group, a sec-butylcarbonylamino group, an n-pentylcarbonylamino group and the like;

aryl groups such as a phenyl group, a 4-methylphenyl group, a 4-tert-butylphenyl group, a biphenyl group, a 4-trifluoromethylphenyl group, a 4-methoxyphenyl group, a 4-chlorophenyl group, a 4-fluorophenyl group, a naphthalene-1-yl group, a naphthalene-2-yl group and the like; and

metalocenyl groups such as a ferrocenyl group, a titanocenyl group, a chronocenyl group, a ruthenocenyl group and the like.

In the trimethine dimer compound represented by the general formula (V), $X_{c1}$, $X_{d1}$, $X_{c3}$ and $X_{d3}$ each independently represent an oxygen atom, a sulfur atom, a selenium atom, 1,1-dialkylmethylene group, a 1-alkyl-1-benzylmethylene group which may have a substituent, a 1,1-dibenzylmethylene group which may have a substituent, a cycloalkane-1,1-diyl group having 3 to 6 carbon atoms which may have a substituent, an N-alkylimino group which may have a substituent or an N-benzylimino group which may have a substituent; and $X_{c2}$ and $X_{d2}$ each independently represent an imino group or a methylene group which may have a substituent, with the proviso that both $X_{c1}$ and $X_{c2}$, or both $X_{d1}$ and $X_{d2}$ are not imino groups at the same time, and when both $X_{c2}$ and $X_{d2}$ are imino groups, one of $X_{c1}$, $X_{d1}$, $X_{c3}$ and $X_{d3}$ is necessarily a 1-alkyl-1-benzylmethylene group which may have a substituent, a 1, 1-dibenzylmethylene group which may have a substituent or a cycloalkane-1,1-diyl group having 3 to 6 carbon atoms which may have a substituent.

Examples of the aforementioned substituent include, for example, the same as specific examples cited as the substituent of a benzene ring which may have a substituent or a naphthalene ring which may have a substituent in the aforementioned A, B, C and D.

Meanwhile, as a 1,1-dialkylmethylene group, a 1-alkyl-1-benzylmethylene group which may have a substituent, a 1,1-dibenzylmethylene group which may have a substituent or a cycloalkane-1,1-diyl group having 3 to 6 carbon atoms which may have a substituent, more specifically,
there can be exemplified, for example, 1,1-dialkylmethylene groups such as a 1,1-dimethylmethylene group, a 1,1-diethylmethylene group, a 1,1-di-n-propylmethylene group, a 1,1-di-n-butylmethylene group, a 1-ethyl-1-methylmethylene group, a 1-methyl-1-propylmethylene group, a 1-butyl-1-methylmethylene group, a 1-ethyl-1-propylmethylene group, a 1-ethyl-1-butylmethylene group, a 1-cyclohexylmethyl-1-methylmethylene group and the like;
1-alkyl-1-benzylmethylene groups which may have a substituent such as a 1-benzyl-1-methylmethylene group, a 1-benzyl-1-ethylmethylene group, a 1-benzyl-1-propylmethylene group, a 1-benzyl-1-butylmethylene group, a 1-(4-nitrobenzyl)-1-methylmethylene group, a 1-(4-chlorobenzyl)-1-methylmethylene group, a 1-(4-bromobenzyl)-1-methylmethylene group, a 1-(4-methylbenzyl)-1-methylmethylene group and the like;
1,1-dibenzylmethylene groups which may have a substituent such as a 1,1-dibenzylmethylene group, a 1,1-di(4-nitrobenzyl)methylene group, a 1,1-di(4-chlorobenzyl)methylene group, a 1,1-di(4-bromobenzyl)methylene group, 1,1-di (4-methylbenzyl)methylene group and the like; and
cycloalkane-1,1-diyl groups having 3 to 6 carbon atoms which may have a substituent such as a cyclobutane-1,1-diyl group, a cyclopentane-1,1-diyl group, a cyclohexyl-1,1-diyl group, a 4-methylcyclohexyl-1,1-diyl group, a 4-ethylcyclohexyl-1,1-diyl group, a 4-tert-butylcyclohexyl-1,1-diyl group and the like.

Furthermore, in an N-alkylimino group which may have a substituent or an N-benzylimino group which may have a substituent, examples of alkyl and benzyl include the same as the alkyl group and benzyl group exemplified as an alkyl group which may have a substitutent or a benzyl group which may have a substitutent in $R_{a1}$ and $R_{a2}$ of the trimethine dimer compound represented by the general formula (I).

In the trimethine dimer compound represented by the general formula (V), $R_{a1}$ and $R_{a2}$ each independently represent an alkyl group which may have a substitutent or a benzyl group which may have a substitutent.

Specific examples of $R_{a1}$ and $R_{a2}$ include linear, branched or cyclic alkyl groups having 1 to 20 carbon atoms such as a methyl group, an ethyl group, an n-propyl group, an iso-propyl group, an n-butyl group, an iso-butyl group, a sec-butyl group, a t-butyl group, an n-pentyl group, a 2-methylbutyl group, a 1-methylbutyl group, a neo-pentyl group, a 1,2-dimethylpropyl group, a cyclo-pentyl group, an n-hexyl group, a 4-methylpentyl group, a 3-methylpentyl group, a 2-methylpentyl group, a 1-methylpentyl group, a 3,3-dimethylbutyl group, a 2,3-dimethylbutyl group, a 1,3-dimethylbutyl group, a 2,2-dimethylbutyl group, a 1,2-dimethylbutyl group, a 1,1-dimethylbutyl group, a 3-ethylbutyl group, a 2-ethylbutyl group, a 1-ethylbutyl group, a 1,2,2-trimethylbutyl group, a 1,1,2-trimethylbutyl group, a 1-ethyl-2-methylpropyl group, a cyclo-hexyl group, an n-heptyl group, a 2-methylhexyl group, a 3-methylhexyl group, a 4-methylhexyl group, a 5-methylhexyl group, a 2,4-dimethylpentyl group, an n-octyl group, a 2-ethylhexyl group, a 2, 5-dimethylhexyl group, a 2,5,5-triethylpentyl group, a 2,4-dimethylhexyl group, a 2,2,4-trimethylpentyl group, an n-nonyl group, a 3,5,5-trimethylhexyl group, an n-decyl group, a 4-ethyloctyl group, a 4-ethyl-4,5-dimethylhexyl group, an n-undecyl group, an n-dodecyl group, a 1,3,5,7-tetramethyloctyl group, a 4-butyloctyl group, a 6,6-diethyloctyl group, an n-tridecyl group, a 6-methyl-4-butyloctyl group, a 6,6-diethyloctyl group, an n-tetradecyl group, an n-pentadecyl group, a 3,5-dimethylheptyl group, a 2,6-dimethylheptyl group, 2,4-dimethylheptyl group, a 2,2,5,5-tetramethylhexyl group, a 1-cyclo-pentyl-2,2-dimethylpropyl group, a 1-cyclo-hexyl-2,2-dimethylpropyl group and the like;
halogenoalkyl groups such as a chloromethyl group, a dichloromethyl group, a fluoromethyl group, a trifluoromethyl group, a 2,2,2-trifluoroethyl group, a pentafluoroethyl group, a heptafluoroisopropyl group, a heptafluoro-n-propyl group, a 2,2,3,3,3-pentafluoropropyl group, a nonafluoro-n-butyl group, a nonafluoro-tert-butyl group, a 2,2,3,3,4,4,9-heptafluorobutyl group, a 2,2,3,4,4,4-hexafluorobutyl group, a perfluoroisopentyl group, a 2,2,3,3,4,4,5,5-octafluoropentyl group, a heptafluoro-sec-pentyl group, a perfluorohexyl group, a perfluoroisohexyl group, a perfluoroheptyl group, a perfluorooctyl group, a perfluorocyclohexyl group, a 4-trifluoromethylcyclohexyl group and the like;
alkoxyalkyl groups such as a methoxyethyl group, an ethoxyethyl group, an iso-propyloxyethyl group, a 3-methoxypropyl group, a 2-methoxybutyl group and the like;
dialkylaminoalkyl groups having 4 to 12 carbon atoms such as a 2-dimethylaminoethyl group, a 3-dimethylaminopropyl

group, a 4-dimethylaminobutyl group, a 2-diethylaminoethyl group, a 3-diethylaminopropyl group, a 4-diethylaminobutyl group, a 2-di-n-propylaminoethyl group, a 3-di-n-propylaminopropyl group, a 4-di-n-propylaminobutyl group, a 2-di-n-butylaminoethyl group, a 3-di-n-butylaminopropyl group, a 4-di-n-butylaminobutyl group and the like;
alkyl groups which may have a substitutent such as alkoxycarbonylalkyl groups having 3 to 7 carbon atoms including a methoxycarbonylmethyl group, an ethoxycarbonylmethyl group, an n-propoxycarbonylmethyl group, an isopropoxycarbonylethyl group, a phenoxycarbonyl group and the like;
a benzyl group, a 4-methylbenzyl group, a 3-methylbenzyl group, a 2-methylbenzyl group, a 4-ethylbenzyl group, a 4-isopropylbenzyl group, a 4-n-butylbenzyl group, a 4-isobutylbenzyl group, a 4-sec-butylbenzyl group, a 4-tert-butylbenzyl group, a 4-n-pentylbenzyl group, a 4-isopentylbenzyl group, a 4-trifluoromethylbenzyl group, a 4-methoxymethylbenzyl group, a 4-methylthiobenzyl group, a 2,4-dimethylbenzyl group, a 4-chlorobenzyl group, a 4-bromobenzyl group, a 4-fluorobenzyl group, a 2,4-dichlorobenzyl group, a 4-nitrobenzyl group, a 4-methyl-2-nitrobenzyl group, a 4-chloro-2-nitrobenzyl group and a 4-bromo-2-nitrobenzyl group.

For the trimethine dimer compound represented by the general formula (V), in $b(Z^{a-})$, Z- represents an anion; and a and b represent an integer of 1 to 2, with the proviso that $a \times b = 2$.

Specific examples of the anion represented by $Z^{a-}$ include halogen anions such as iodine, bromine, chlorine, fluorine and the like; inorganic anions such as a perchloric acid anion, a chloric acid anion, a thiocyanic acid anion, a hexafluorophosphate anion, a hexafluoroantimonate anion, a boron tetrafluoride anion and the like; organic sulfonic acid anions such as a benzenesulfonic acid anion, a toluene-1,4-disulfonic acid anion, a toluenesulfonic acid anion, a trifluoromethanesulfonic acid anion, a naphthalene-1-sulfonic acid anion, a naphthalene-2-sulfonic acid anion, a naphthalene-1,4-disulfonic acid anion, a naphthalene-1,5-disulfonic acid anion, a naphthalene-1,8-disulfonic acid anion and the like; metalocene compound anions such as ferrocenesulfonic acid, ferrocenecarboxylic acid and the like; and quencher anions such as an azo compound metal chelate anion, a benzenedithiol metal complex anion and the like.

In the trimethine dimer compound represented by the general formula (V), Y represents the following general formula (II), (III) or (IV),

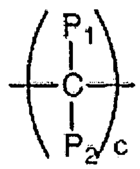

(II)

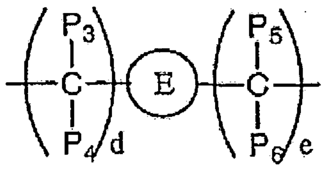

(III)

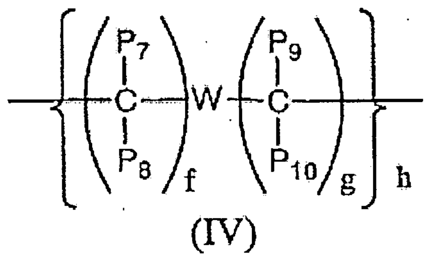

(IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring.

Herein, $P_1$ to $P_{10}$ in the general formulae (II), (III) and (IV) each independently represent a hydrogen atom or an alkyl group.

Specific examples of $P_1$ to $P_{10}$ include a hydrogen atom, an alkyl group such as a methyl group, an ethyl group, an n-propyl group, an iso-propyl group, an n-butyl group, an iso-butyl group, a sec-butyl group, a tert-butyl group, an n-pentyl group, an iso-pentyl group, a sec-pentyl group, a tert-pentyl group, a neo-pentyl group, an n-hexyl group, an iso-hexyl group, an n-heptyl group, an iso-heptyl group, an n-octyl group, an iso-octyl group and the like.

In the general formulae (II), (III) and (IV), W represents a sulfur atom, an oxygen atom, an imine residue which may have a substituent, a carbonyl residue or a thiocarbonyl residue.

Specific examples of W include a sulfur atom, an oxygen atom, imine residues such as an N-methylimine group, an N-ethylimine group, an N-n-propylimine group, an N-iso-propylimine group, an N-n-butylimine group, an N-iso-butylimine group, an N-tert-butylimine group, an N-n-pentylimine group, an N-iso-pentylimine group, an N-tert-pentylimine group, an N-neo-pentylimine group, an N-n-hexylimine group, an N-iso-hexylimine group, an N-n-heptylimine group, an N-iso-heptylimine group, an N-n-octylimine group, an N-iso-octylimine group, a phenylimine group, an acetylimine group and the like, a carbonyl residue, a thiocarbonyl residue and the like.

In the general formulae (II), (III) and (IV), c represents an integer of 1 to 8; d to e represent an integer of 0 to 4; f to g represent an integer of 1 to 4; and h represents an integer of 1 to 2.

In the general formulae (II), (III) and (IV), a ring E represents a benzene ring or a naphthalene ring.

Specific examples of the ring E include a benzene ring and a naphthalene ring.

Of the dimer compounds in the above formula (V), a trimethine dimer compound in the following formula (VI) can be preferably used. Herein, $X_1$, $X_2$, $X_3$, $X_4$, $R_1$ and $R_2$ in the formula (VI) each correspond to $X_{c1}$, $X_{c3}$, $X_{d1}$, $X_{d3}$, $R_{a1}$ and $R_{a2}$ in the formula (V).

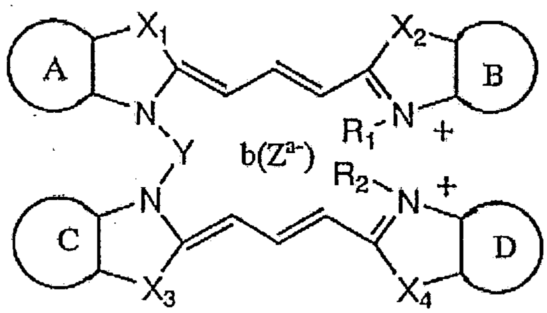

(VI)

wherein, in the formula, A, B, C and D each independently represent a benzene ring which may have a substituent or a naphthalene ring which may have a substituent; $X_1$, $X_2$, $X_3$ and $X_4$ each independently represent a 1,1-dialkylmethylene group, a 1-alkyl-1-benzylmethylene group which may have a substituent, a 1,1-dibenzylmethylene group which may have a substituent or a cycloalkane-1,1-diyl group having 3 to 6 carbon atoms which may have a substituent; $R_1$ and $R_2$ each independently represent an alkyl group which may have a substitutent; in $b(Z^{a-})$, $Z^-$ represents an anion; a and b represent an integer of 1 to 2, with the proviso that $a \times b = 2$; and Y represents the following general formula (II), (III) or (IV), with the proviso that one of $X_1$, $X_2$, $X_3$ and $X_4$ is necessarily a 1-alkyl-1-benzylmethylene group which may have a substituent, a 1,1-dibenzylmethylene group which may have a substituent or a cycloalkane-1,1-diyl group having 3 to 6 carbon atoms which may have a substituent,

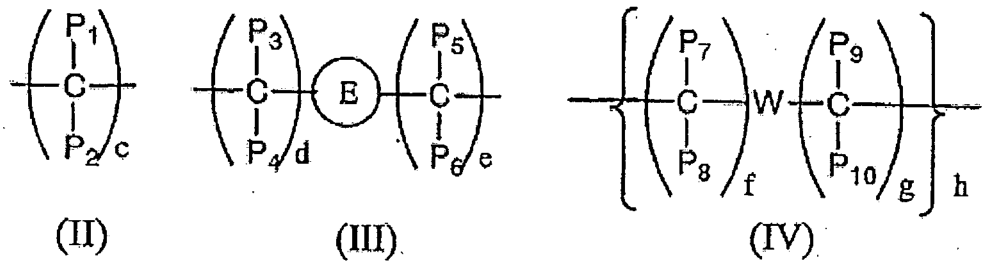

(II) (III) (IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring.

In the trimethine dimer compound represented by the general formula (VI), A, B, C and D each independently represent a benzene ring which may have a substituent or a naphthalene ring which may have a substituent.

Examples of the substitutent in the above include a halogen atom, a formyl group, a hydroxy group, a cyano group, a nitro group, an amino group, an alkyl group which may have a substituent, an alkoxy group which may have a substituent, an acyl group which may have a substituent, an alkenyl group which may have a substituent, a hydroxyalkyl group which may have a substituent, an alkoxycarbonyl group which may have a substituent, an alkylamino group which may have a substituent, a dialkylamino group which may have a substituent, an alkoxycarbonylalkyl group which may have a substituent, an alkylthio group which may have a substituent, an alkylsulfonyl group which may have a substituent, an alkylcarbonylamino group which may have a substituent, a phenyl group which may have a substituent, a metalocenyl group which may have a substituent and the like.

More specifically, there can be exemplified, for example, a halogen atom, a formyl group, a hydroxy group, a cyano group, a nitro group, an amino group, an alkyl group having 1 to 8 carbon atoms which may have a substituent, an alkoxy group having 1 to 8 carbon atoms which may have a substituent, an acyl group having 2 to 7 carbon atoms which may have a substituent, an alkenyl group having 2 to 6 carbon atoms which may have a substituent, a hydroxyalkyl group having 1 to 6 carbon atoms which may have a substituent, an alkoxycarbonyl group having 2 to 7 carbon atoms which may have a substituent, an alkylamino group having 1 to 6 carbon atoms which may have a substituent, a

dialkylamino group having 2 to 8 carbon atoms which may have a substituent, an alkoxycarbonylalkyl group having 3 to 7 carbon atoms which may have a substituent, an alkylthio group having 1 to 6 carbon atoms which may have a substituent, an alkylsulfonyl group having 1 to 6 carbon atoms which may have a substituent, an alkylcarbonylamino group having 2 to 6 carbon atoms which may have a substituent, a phenyl group which may have a substituent, a metalocenyl group which may have a substituent and the like.

Further specifically, there can be exemplified, for example, a halogen atom, a formyl group, a hydroxy group, a cyano group, a nitro group, an amino group, an alkyl group having 1 to 8 carbon atoms, an alkoxy group having 1 to 8 carbon atoms, an acyl group having 2 to 7 carbon atoms, an alkenyl group having 2 to 6 carbon atoms, a hydroxyalkyl group having 1 to 6 carbon atoms, an alkoxycarbonyl group having 2 to 7 carbon atoms, an alkylamino group having 1 to 6 carbon atoms, a dialkylamino group having 2 to 8 carbon atoms, an alkoxycarbonylalkyl group having 3 to 7 carbon atoms, an alkylthio group having 1 to 6 carbon atoms, an alkylsulfonyl group having 1 to 6 carbon atoms, an alkylcarbonylamino group having 2 to 6 carbon atoms, a phenyl group which may have a substituent, a metalocenyl group which may have a substituent and the like.

Herein, specific examples of the substituents of A, B, C and D in the general formula (VI) include halogen atoms such as a fluorine atom, a chlorine atom, a bromine atom and the like; a formyl group; a hydroxyl group; a carboxyl group; a cyano group; a nitro group; an amino group;

alkyl groups having 1 to 8 carbon atoms such as a methyl group, a trifluoromethyl group, an ethyl group, a pentafluoroethyl group, an n-propyl group; an isopropyl group, an n-butyl group, a sec-butyl group, a tert-butyl group, an n-pentyl group, an n-hexyl group, a cyclopropyl group, a cyclobutyl group, a cyclopentyl group, a cyclohexyl group, a 1,2,2-trimethylbutyl group, a 1,1,2-trimethylbutyl group, a 1-ethyl-2-methylpropyl group, an n-heptyl group, a 2-methylhexyl group, a 3-methylhexyl group, a 4-methylhexyl group, a 5-methylhexyl group, a 2,4-dimethylpentyl group, an n-octyl group, a 2-ethylhexyl group, a 2, 5-dimethylhexyl group, a 2,5,5-triethylpentyl group, a 2,4-dimethylhexyl group, a 2,2,4-trimethylpentyl group and the like;

alkoxy groups having 1 to 8 carbon atoms such as a methoxy group, an ethoxy group, an n-propoxy group, an isopropoxy group, an n-butoxy group, a tert-butoxy group, a sec-butoxy group, an n-pentyloxy group, an iso-pentyloxy group, an n-hexyloxy group, an n-octyloxy group, a methoxymethoxy group, an ethoxyethoxy group, a 3-(iso-propyloxy)propyloxy group and the like;

acyl groups having 2 to 7 carbon atoms such as an acetyl group, a propiolic group, a butyryl group, an isobutyryl group, a valeryl group, an isovaleryl group, a pivaloyl group, a hexanoyl group, a heptanoyl group and the like;

alkenyl groups having 2 to 6 carbon atoms such as a vinyl group, a propenyl group, a butenyl group, a pentenyl group, a hexenyl group, a cyclopentenyl group, a cyclohexenyl group and the like; hydroxyalkyl groups having 1 to 6 carbon atoms such as a hydroxymethyl group, a hydroxyethyl group and the like;

alkoxycarbonyl groups having 2 to 7 carbon atoms such as a methoxycarbonyl group, an ethoxycarbonyl group, an n-propoxycarbonyl group, an isopropoxycarbonyl group, an n-butoxycarbonyl group, a tert-butoxycarbonyl group, a sec-butoxycarbonyl group, an n-pentyloxycarbonyl group, an n-hexyloxycarbonyl group and the like;

alkylamino groups having 1 to 6 carbon atoms such as a methylamino group, an ethylamino group, an n-propylamino group, an n-butylamino group and the like;

dialkylamino groups having 2 to 8 carbon atoms such as a dimethylamino group, a diethylamino group, a di-n-propylamino group, a di-n-butylamino group and the like;

alkoxycarbonylalkyl groups having 3 to 7 carbon atoms such as a methoxycarbonylmethyl group, an ethoxycarbonylmethyl group, an n-propoxycarbonylmethyl group, an isopropoxycarbonylethyl group, a phenoxycarbonyl group and the like;

alkylthio groups having 1 to 6 carbon atoms such as a methylthio group, an ethylthio group, an n-propylthio group, a tert-butylthio group, a sec-butylthio group, an n-pentylthio group, an n-hexylthio group and the like;

alkylsulfonyl groups having 1 to 6 carbon atoms such as a methylsulfonyl group, a trifluoromethylsulfonyl group, an ethylsulfonyl group, a pentafluoroethylsulfonyl group, an n-propylsulfonyl group, an isopropylsulfonyl group, an n-butylsulfonyl group, a tert-butylsulfonyl group, a sec-butylsulfonyl group, an n-pentylsulfonyl group, an n-hexylsulfonyl group and the like;

alkylcarbonylamino groups having 2 to 6 carbon atoms such as a methylcarbonylamino group, an ethylcarbonylamino group, an n-propylcarbonylamino group, an isopropylcarbonylamino group, an n-butylcarbonylamino group, a tert-butylcarbonylamino group, a sec-butylcarbonylamino group, an n-pentylcarbonylamino group and the like; aryl groups such as a phenyl group, a 4-methylphenyl group, a 4-tert-butylphenyl group, biphenyl group, a 4-trifluoromethylphenyl group, a 4-methoxyphenyl group, a 4-chlorophenyl group, a 4-fluorophenyl group, a naphthalene-1-yl group, a naphthalene-2-yl group and the like; and

metalocenyl groups such as a ferrocenyl group, a titanocenyl group, a chronocenyl group, a ruthenocenyl group and the like.

In the trimethine dimer compound represented by the general formula (VI), $X_1$, $X_2$, $X_3$ and $X_4$ each independently represent a 1,1-dialkylmethylene group, a 1-alkyl-1-benzylmethylene group which may have a substituent, a 1, 1-dibenzylmethylene group which may have a substituent or a cycloalkane-1,1-diyl group having 3 to 6 carbon atoms which may have a substituent, with the proviso that, one of $X_1$, $X_2$, $X_3$ and $X_4$ is necessarily a 1-alkyl-1-benzylmethylene group which may have a substituent, a 1,1-dibenzylmethylene group which may have a substituent or a cycloalkane-1,1-diyl group having 3 to 6 carbon atoms which may have a substituent.

Examples of the aforementioned 1,1-dialkylmethylene group, 1-alkyl-1-benzylmethylene group which may have a substituent, 1,1-dibenzylmethylene group which may have a substituent or cycloalkane-1,1-diyl group having 3 to 6 carbon atoms which may have a substituent include the same as specific examples cited in the above formula (V).

In the trimethine dimer compound represented by the general formula (VI), $R_1$ and $R_2$ each independently represent an alkyl group which may have a substitutent.

Specific examples of $R_1$ and $R_2$ include linear, branched or cyclic alkyl groups having 1 to 20 carbon atoms such as a methyl group, an ethyl group, an n-propyl group, an iso-propyl group, an n-butyl group, an iso-butyl group, a sec-butyl group, a t-butyl group, an n-pentyl group, a 2-methylbutyl group, a 1-methylbutyl group, a neo-pentyl group, a 1,2-dimethylpropyl group, a cyclo-pentyl group, an n-hexyl group, a 4-methylpentyl group, a 3-methylpentyl group, a 2-methylpentyl group, a 1-methylpentyl group, a 3,3-dimethylbutyl group, a 2,3-dimethylbutyl group, a 1,3-dimethylbutyl group, a 2,2-dimethylbutyl group, a 1,2-dimethylbutyl group, a 1,1-dimethylbutyl group, a 3-ethylbutyl group, a 2-ethylbutyl group, a 1-ethylbutyl group, a 1,2,2-trimethylbutyl group, a 1,1,2-trimethylbutyl group, a 1-ethyl-2-methylpropyl group, a cyclo-hexyl group, an n-heptyl group, a 2-methylhexyl group, a 3-methylhexyl group, a 4-methylhexyl group, a 5-methylhexyl group, a 2,4-dimethylpentyl group, an n-octyl group, a 2-ethylhexyl group, a 2, 5-dimethylhexyl group, a 2,5,5-triethylpentyl group, a 2,4-dimethylhexyl group, a 2,2,4-trimethylpentyl group, an n-nonyl group, a 3,5,5-trimethylhexyl group, an n-decyl group, a 4-ethyloctyl group, a 4-ethyl-4,5-dimethylhexyl group, an n-undecyl group, an n-dodecyl group, a 1,3,5,7-tetramethyloctyl group, a 4-butyloctyl group, a 6,6-diethyloctyl group, an n-tridecyl group, a 6-methyl-4-butyloctyl group, a 6,6-diethyloctyl group, an n-tetradecyl group, an n-pentadecyl group, a 3,5-dimethylheptyl group, a 2,6-dimethylheptyl group, a 2,4-dimethylheptyl group, a 2,2,5,5-tetramethylhexyl group, a 1-cyclo-pentyl-2,2-dimethylpropyl group, a 1-cyclo-hexyl-2,2-dimethylpropyl group and the like;
halogenoalkyl groups such as a chloromethyl group, a dichloromethyl group, a fluoromethyl group, a trifluoromethyl group, a 2,2,2-trifluoroethyl group, a pentafluoroethyl group, a heptafluoroisopropyl group, a heptafluoro-n-propyl group, a 2,2,3,3,3-pentafluoropropyl group, a nonafluoro-n-butyl group, a nonafluoro-tert-butyl group, a 2,2,3,3,4,4,4-heptafluorobutyl group, a 2,2,3,4,4,4-hexafluorobutyl group, a perfluoroisopentyl group, a 2,2,3,3,4,4,5,5-octafluoropentyl group, a heptafluoro-sec-pentyl group, a perfluorohexyl group, a perfluoroisohexyl group, a perfluoroheptyl group, a perfluorooctyl group, a perfluorocyclohexyl group, a 4-trifluoromethylcyclohexyl group and the like;
alkoxyalkyl groups such as a methoxyethyl group, an ethoxyethyl group, an iso-propyloxyethyl group, a 3-methoxypropyl group, a 2-methoxybutyl group and the like;
dialkylaminoalkyl groups having 4 to 12 carbon atoms such as a 2-dimethylaminoethyl group, a 3-dimethylaminopropyl group, a 4-dimethylaminobutyl group, a 2-diethylaminoethyl group, a 3-diethylaminopropyl group, a 4-diethylaminobutyl group, a 2-di-n-propylaminoethyl group, a 3-di-n-propylaminopropyl group, a 4-di-n-propylaminobutyl group, a 2-di-n-butylaminoethyl group, a 3-di-n-butylaminopropyl group, a 9-di-n-butylaminobutyl group and the like;
alkyl groups which may have a substitutent such as alkoxycarbonylalkyl groups having 3 to 7 carbon atoms including a methoxycarbonylmethyl group, an ethoxycarbonylmethyl group, an n-propoxycarbonylmethyl group, an isopropoxycarbonylethyl group, a phenoxycarbonyl group and the like;
a benzyl group, a 4-methylbenzyl group, a 3-methylbenzyl group, a 2-methylbenzyl group, a 4-ethylbenzyl group, a 4-isopropylbenzyl group, a 4-n-butylbenzyl group, a 4-isobutylbenzyl group, a 4-sec-butylbenzyl group, a 4-tert-butylbenzyl group, a 4-n-pentylbenzyl group, a 4-isopentylbenzyl group, a 4-trifluoromethylbenzyl group, a 4-methoxymethylbenzyl group, a 4-methylthiobenzyl group, a 2,4-dimethylbenzyl group, a 4-chlorobenzyl group, a 4-bromobenzyl group, a 4-fluorobenzyl group, a 2,4-dichlorobenzyl group, a 4-nitrobenzyl group, a 4-methyl-2-nitrobenzyl group, a 4-chloro-2-nitrobenzyl group and a 4-bromo-2-nitrobenzyl group.

For the trimethine dimer compound represented by the general formula (VI), in $b(Z^{a-})$, $Z^-$ represents an anion; and a and b represent an integer of 1 to 2, with the proviso that $a \times b = 2$.

Examples thereof include the same as those cited in the trimethine dimer compound represented by the general formula (I) or (V).

In the trimethine dimer compound represented by the general formula (VI), Y represents the aforementioned general formula (II), (III) or (IV).

Examples thereof include the same as those cited in the trimethine dimer compound represented by the general formula (I) or (V).

As the trimethine dimer compound represented by the general formula (VI) of the present invention, a trimethine dimer compound represented by the general formula (VII) can be cited as a preferable compound.

The trimethine compound represented by the formula (VII) will be more specifically described below. Herein, $X_5$, $X_6$, $X_7$, $X_8$, $R_3$ and $R_4$ in the formula (VII) each correspond to $X_1$, $X_2$, $X_3$, $X_4$, $R_1$ and $R_2$ in the formula (VI),

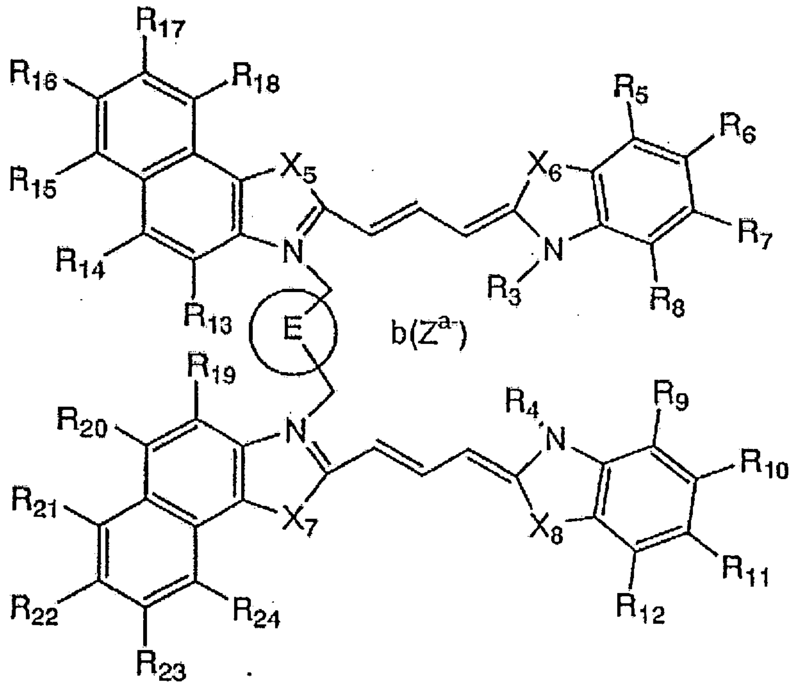

(VII)

wherein, in the formula, $X_5$, $X_6$, $X_7$ and $X_8$ each independently represent a 1,1-dialkylmethylene group, a 1-alkyl-1-benzylmethylene group which may have a substituent, a 1,1-dibenzylmethylene group which may have a substituent or a cycloalkane-1,1-diyl group having 3 to 6 carbon atoms which may have a substituent; $R_3$ and $R_4$ each independently represent an alkyl group which may have a substitutent; $R_5$ to $R_{24}$ each independently represent a hydrogen atom, a halogen atom, a nitro group, an alkyl group or an alkoxy group; a ring E represents a benzene ring or a naphthalene ring; in $b(Z^{a-})$, $Z^-$ represents an anion; a and b represent an integer of 1 to 2, with the proviso that $a \times b = 2$; and one of $X_5$, $X_6$, $X_7$ and $X_8$ is necessarily a 1-alkyl-1-benzylmethylene group which may have a substitutent, a 1,1-dibenzylmethylene group which may have a substituent or a cycloalkane-1,1-diyl group having 3 to 6 carbon atoms which may have a substituent.

In the trimethine dimer compound represented by the general formula (VII), $X_5$, $X_6$, $X_7$ and $X_8$ each independently represent a 1,1-dialkylmethylene group, a 1-alkyl-1-benzylmethylene group which may have a substituent, a 1, 1-dibenzylmethylene group which may have a substituent or a cycloalkane-1,1-diyl group having 3 to 6 carbon atoms which may have a substituent, with the proviso that one of $X_5$, $X_6$, $X_7$ and $X_8$ is necessarily a 1-alkyl-1-benzylmethylene group which may have a substitutent, a 1,1-dibenzylmethylene group which may have a substituent or a cycloalkane-1,1-diyl group having 3 to 6 carbon atoms which may have a substituent.

Examples of the aforementioned 1,1-dialkylmethylene group, 1-alkyl-1-benzylmethylene group which may have a substituent, 1,1-dibenzylmethylene group which may have a substituent or cycloalkane-1,1-diyl group having 3 to 6 carbon atoms which may have a substituent include the same as specific examples cited in the above formula (V).

In the trimethine dimer compound represented by the general formula (VII), $R_3$ and $R_4$ each independently represent an alkyl group which may have a substitutent.

Herein, specific examples of the above include the same as specific examples of $R_1$ and $R_2$ in the aforementioned trimethine dimer compound represented by the general formula (VI).

In the trimethine dimer compound represented by the general formula (VII), $R_5$ to $R_{24}$ each independently represent a hydrogen atom, a halogen atom, a nitro group, an alkyl group or an alkoxy group.

Herein, specific examples of the above include the same as specific examples cited as the substituent of a benzene ring which may have a substituent or a naphthalene ring which may have a substituent in A, B, C and D in the aforementioned trimethine dimer compound represented by the general formula (I) or (V).

For the trimethine dimer compound represented by the general formula (VII), in b $(Z^{a-})$, $Z^-$ represents an anion; and a and b represent an integer of 1 to 2, with the proviso that $a \times b = 2$.

Herein, specific examples of the aforementioned anion represented by $Z^{a-}$ include the same as specific examples of the anion represented by $Z^{a-}$ in the aforementioned trimethine dimer compound represented by the general formula (I) or (V).

In the trimethine dimer compound represented by the general formula (VII), a ring E represents a benzene ring

or a naphthalene ring. Specific examples of the ring E include a benzene ring and a naphthalene ring.

As the trimethine dimer compound represented by the general formula (VI) of the present invention, a trimethine dimer compound represented by the general formula (VIII) can be cited as a preferable compound. Herein, $X_9$, $X_{10}$, $X_{11}$, $X_{12}$, $R_{25}$ and $R_{26}$ in the formula (VIII) each correspond to $X_1$, $X_2$, $X_3$, $X_4$, $R_1$ and $R_2$ in the formula (VI),

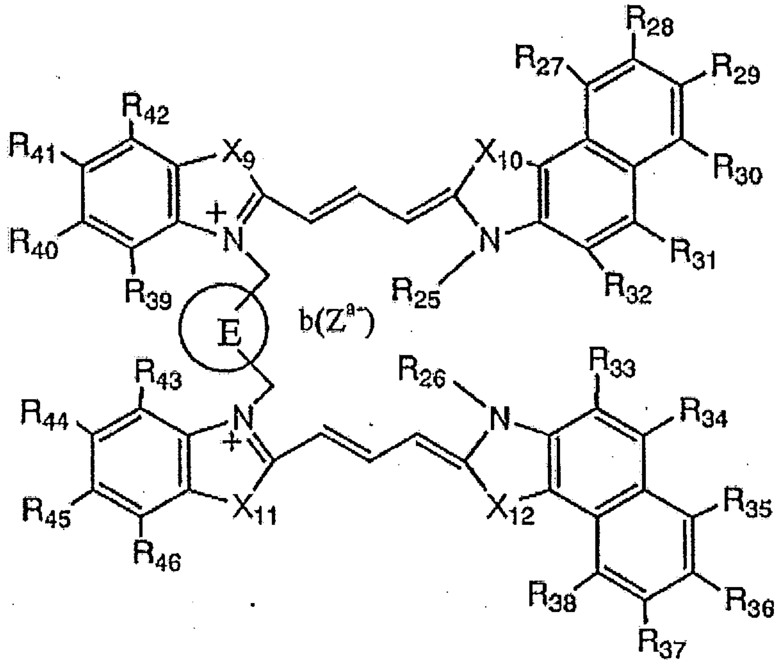

(VIII)

wherein, in the formula, $X_9$, $X_{10}$, $X_{11}$ and $X_{12}$ each independently represent a 1,1-dialkylmethylene group, a 1-alkyl-l-benzylmethylene group which may have a substitutent, a 1,1-dibenzylmethylene group which may have,a substituent or a cycloalkane-1,1-diyl group having 3 to 6 carbon atoms which may have a substituent; $R_{25}$ and $R_{26}$ each independently represent an alkyl group which may have a substitutent; $R_{27}$ to $R_{46}$ each independently represent a hydrogen atom, a halogen atom, a nitro group, an alkyl group or an alkoxy group; a ring E represents a benzene ring or a naphthalene ring; in b($Z^{a-}$), $Z^-$ represents an anion; a and b represent an integer of 1 to 2, with the proviso that a × b = 2; and one of $X_9$, $X_{10}$, $X_{11}$ and $X_{12}$ is necessarily a 1-alkyl-1-benzylmethylene group which may have a substitutent, a 1,1-dibenzylmethylene group which may have a substituent or a cycloalkane-1,1-diyl group having 3 to 6 carbon atoms which may have a substituent.

In the trimethine dimer compound represented by the general formula (VIII), $X_9$, $X_{10}$, $X_{11}$ and $X_{12}$ each independently represent a 1,1-dialkylmethylene group, a 1-alkyl-1-benzylmethylene group which may have a substituent, a 1, 1-dibenzylmethylene group which may have a substituent or a cycloalkane-1,1-diyl group having 3 to 6 carbon atoms which may have a substituent, with the proviso that one of $X_9$, $X_{10}$, $X_{11}$ and $X_{12}$ is necessarily a 1-alkyl-1-benzylmethylene group which may have a substitutent, a 1,1-dibenzylmethylene group which may have a substituent or a cycloalkane-1,1-diyl group having 3 to 6 carbon atoms which may have a substituent.

Examples of the aforementioned 1,1-dialkylmethylene group, 1-alkyl-1-benzylmethylene group which may have a substituent, 1,1-dibenzylmethylene group which may have a substituent or cycloalkane-1,1-diyl group having 3 to 6 carbon atoms which may have a substituent include the same as specific examples cited in the above formula (V).

In the trimethine dimer compound represented by the general formula (VIII), $R_{25}$ and $R_{26}$ each independently represent an alkyl group which may have a substitutent.

Herein, specific examples of the above include the same as specific examples of $R_{a1}$ and $R_{a2}$ in the aforementioned trimethine dimer compound represented by the general formula (I).

In the trimethine dimer compound represented by the general formula (VIII), $R_{27}$ to $R_{46}$ each independently represent a hydrogen atom, a halogen atom, a nitro group, an alkyl group or an alkoxy group.

Herein, specific examples of the above include the same as specific examples cited as the substituent of a benzene ring which may have a substituent or a naphthalene ring which may have a substituent in A, B, C and D in the aforementioned trimethine dimer compound represented by the general formula (I) or (V).

For the trimethine dimer compound represented by the general formula (VIII), in b($Z^{a-}$), $Z^-$ represents an anion; and a and b represent an integer of 1 to 2, with the proviso that a × b = 2.

Herein, specific examples of the aforementioned anion represented by $Z^{a-}$ include the same as specific examples of the anion represented by $Z^{a-}$ in the aforementioned trimethine dimer compound represented by the general formula (I) or (V).

In the trimethine dimer compound represented by the general formula (VIII), a ring E represents a benzene ring or a naphthalene ring. Specific examples of the ring E include a benzene ring and a naphthalene ring.

Of the dimer compounds in the above formula (V), a trimethine dimer compound in the following formula (IX) can be preferably used.

Hereinafter, the trimethine dimer compound represented by the following general formula (IX) will be more specifically described as the trimethine dimer compound in the present invention. Herein, $X_{101}$, $X_{102}$, $R_{103}$ and $R_{104}$ in the following formula (IX) each correspond to $X_{c3}$, $X_{d3}$, $R_{a1}$ and $R_{a2}$ in the formula (V),

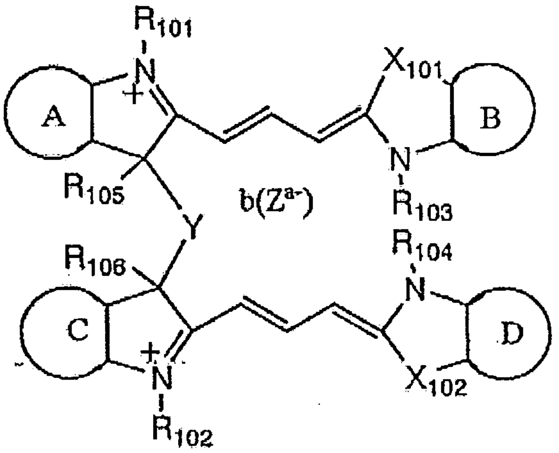

(IX)

wherein, in the formula, A, B, C and D each independently represent a benzene ring which may have a substituent or a naphthalene ring which may have a substituent; $X_{101}$ and $X_{102}$ each independently represent an oxygen atom, a sulfur atom, a selenium atom, a 1,1-dialkylmethylene group which may have a substituent, a 1-alkyl-1-benzylmethylene group which may have a substituent, a 1,1-dibenzylmethylene group which may have a substituent or a cycloalkane-1,1-diyl group having 3 to 6 carbon atoms which may have a substituent; $R_{101}$ to $R_{106}$ each independently represent an alkyl group which may have a substitutent or a benzyl group which may have a substitutent; in $b(Z^{a-})$, $Z^-$ represents an anion; a and b represent an integer of 1 to 2, with the proviso that $a \times b = 2$; and Y represents the following general formula (II), (III) or (IV),

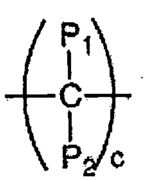

(II)

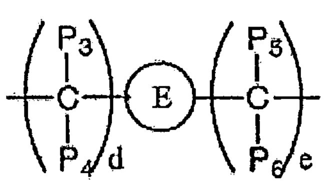

(III)

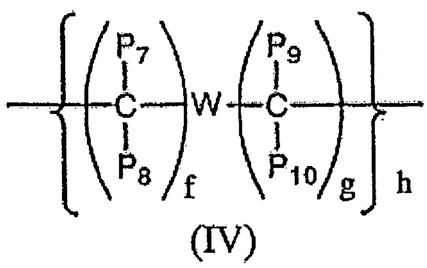

(IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring.

In the trimethine dimer compound represented by the general formula (IX), A, B, C and D each independently represents a benzene ring which may have a substituent or a naphthalene ring which may have a substituent.

Examples of the substituent in the above include a halogen atom, a formyl group, a hydroxy group, a cyano group, a nitro group, an amino group, an alkyl group which may have a substituent, an alkoxy group which may have a substituent, an acyl group which may have a substituent, an alkenyl group which may have a substituent, a hydroxyalkyl group which may have a substituent, an alkoxycarbonyl group which may have a substituent, an alkylamino group which

may have a substituent, a dialkylamino group which may have a substituent, an alkoxycarbonylalkyl group which may have a substituent, an alkylthio group which may have a substituent, an alkylsulfonyl group which may have a substituent, an alkylcarbonylamino group which may have a substituent, a phenyl group which may have a substituent, a metalocenyl group which may have a substituent and the like.

More specifically, there can be exemplified, for example, a halogen atom, a formyl group, a hydroxy group, a cyano group, a nitro group, an amino group, an alkyl group having 1 to 8 carbon atoms which may have a substituent, an alkoxy group having 1 to 8 carbon atoms which may have a substituent, an acyl group having 2 to 7 carbon atoms which may have a substituent, an alkenyl group having 2 to 6 carbon atoms which may have a substituent, a hydroxyalkyl group having 1 to 6 carbon atoms which may have a substituent, an alkoxycarbonyl group having 2 to 7 carbon atoms which may have a substituent, an alkylamino group having 1 to 6 carbon atoms which may have a substituent, a dialkylamino group having 2 to 8 carbon atoms which may have a substituent, an alkoxycarbonylalkyl group having 3 to 7 carbon atoms which may have a substituent, an alkylthio group having 1 to 6 carbon atoms which may have a substituent, an alkylsulfonyl group having 1 to 6 carbon atoms which may have a substituent, an alkylcarbonylamino group having 2 to 6 carbon atoms which may have a substituent, a phenyl group which may have a substituent, a metalocenyl group which may have a substituent and the like.

Further specifically, there can be exemplified, for example, a halogen atom, a formyl group, a hydroxy group, a cyano group, a nitro group, an amino group, an alkyl group having 1 to 8 carbon atoms, an alkoxy group having 1 to 8 carbon atoms, an acyl group having 2 to 7 carbon atoms, an alkenyl group having 2 to 6 carbon atoms, a hydroxyalkyl group having 1 to 6 carbon atoms, an alkoxycarbonyl group having 2 to 7 carbon atoms, an alkylamino group having 1 to 6 carbon atoms, a dialkylamino group having 2 to 8 carbon atoms, an alkoxycarbonylalkyl group having 3 to 7 carbon atoms, an alkylthio group having 1 to 6 carbon atoms, an alkylsulfonyl group having 1 to 6 carbon atoms, an alkylcarbonylamino group having 2 to 6 carbon atoms, a phenyl group which may have a substituent, a metalocenyl group which may have a substituent and the like.

Herein, specific examples of the substituents of A, B, C and D in the general formula (IX) include halogen atoms such as a fluorine atom, a chlorine atom, a bromine atom and the like; a formyl group; a hydroxyl group; a carboxyl group; a cyano group; a nitro group; an amino group;

alkyl groups having 1 to 8 carbon atoms such as a methyl group, a trifluoromethyl group, an ethyl group, a pentafluoroethyl group; an n-propyl group, an isopropyl group, an n-butyl group, a sec-butyl group, a tert-butyl group, an n-pentyl group, an n-hexyl group, a cyclopropyl group, a cyclobutyl group, a cyclopentyl group, a cyclohexyl group, a 1,2,2-trimethylbutyl group, a 1,1,2-trimethylbutyl group, a 1-ethyl-2-methylpropyl group, an n-heptyl group, a 2-methylhexyl group, a 3-methylhexyl group, a 4-methylhexyl group, a 5-methylhexyl group, a 2,4-dimethylpentyl group, an n-octyl group, a 2-ethylhexyl group, a 2, 5-dimethylhexyl group, a 2,5,5-triethylpentyl group, a 2,4-dimethylhexyl group, a 2,2,4-trimethylpentyl group and the like;

alkoxy groups having 1 to 8 carbon atoms such as a methoxy group, an ethoxy group, an n-propoxy group, an isopropoxy group, an n-butoxy group, a tert-butoxy group, a sec-butoxy group, an n-pentyloxy group, an iso-pentyloxy group, an n-hexyloxy group, an n-octyloxy group, a methoxymethoxy group, an ethoxyethoxy group, a 3-(iso-propyloxy)propyloxy group and the like;

acyl groups having 2 to 7 carbon atoms such as an acetyl group, a propiolic group, a butyryl group, an isobutyryl group, a valeryl group, an isovaleryl group, a pivaloyl group, a hexanoyl group, a heptanoyl group and the like;

alkenyl groups having 2 to 6 carbon atoms such as a vinyl group, a propenyl group, a butenyl group, a pentenyl group, a hexenyl group, a cyclopentenyl group, a cyclohexenyl group and the like;

hydroxyalkyl groups having 1 to 6 carbon atoms such as a hydroxymethyl group, a hydroxyethyl group and the like;

alkoxycarbonyl groups having 2 to 7 carbon atoms such as a methoxycarbonyl group, an ethoxycarbonyl group, an n-propoxycarbonyl group, an isopropoxycarbonyl group, an n-butoxycarbonyl group, a tert-butoxycarbonyl group, a sec-butoxycarbonyl group, an n-pentyloxycarbonyl group, an n-hexyloxycarbonyl group and the like;

alkylamino groups having 1 to 6 carbon atoms such as a methylamino group, an ethylamino group, an n-propylamino group, an n-butylamino group and the like;

dialkylamino groups having 2 to 8 carbon atoms such as a dimethylamino group, a diethylamino group, a di-n-propylamino group, a di-n-butylamino group and the like;

alkoxycarbonylalkyl groups having 3 to 7 carbon atoms such as a methoxycarbonylmethyl group, an ethoxycarbonylmethyl group, an n-propoxycarbonylmethyl group, an isopropoxycarbonylethyl group, a phenoxycarbonyl group and the like;

alkylthio groups having 1 to 6 carbon atoms such as a methylthio group, an ethylthio group, an n-propylthio group, a tert-butylthio group, a sec-butylthio group, an n-pentylthio group, an n-hexylthio group and the like;

alkylsulfonyl groups having 1 to 6 carbon atoms such as a methylsulfonyl group, a trifluoromethylsulfonyl group, an ethylsulfonyl group, a pentafluoroethylsulfonyl group, an n-propylsulfonyl group, an isopropylsulfonyl group, an n-butylsulfonyl group, a tert-butylsulfonyl group, a sec-butylsulfonyl group, an n-pentylsulfonyl group, an n-hexylsulfonyl group and the like;

alkylcarbonylamino groups having 2 to 6 carbon atoms such as a methylcarbonylamino group, an ethylcarbonylamino group, an n-propylcarbonylamino group, an isopropylcarbonylamino group, an n-butylcarbonylamino group, a tert-butylcarbonylamino group, a sec-butylcarbonylamino group, an n-pentylcarbonylamino group and the like;
aryl groups such as a phenyl group, a 4-methylphenyl group, a 4-tert-butylphenyl group, a biphenyl group, a 4-trifluoromethylphenyl group, a 4-methoxyphenyl group, a 4-chlorophenyl group, a 4-fluorophenyl group, a naphthalene-1-yl group, a naphthalene-2-yl group and the like; and
metalocenyl groups such as a ferrocenyl group, a titanocenyl group, a chronocenyl group, a ruthenocenyl group and the like.

In the trimethine dimer compound represented by the general formula (IX), $X_{101}$ and $X_{102}$ each independently represent an oxygen atom, a sulfur atom, a selenium atom, a 1, 1-dialkylmethylene group which may have a substituent, a 1-alkyl-1-benzylmethylene group which may have a substituent, a 1, 1-dibenzylmethylene group which may have a substituent or a cycloalkane-1,1-diyl group having 3 to 6 carbon atoms which may have a substituent.

Herein, specific examples of $X_{101}$ and $X_{102}$ include an oxygen atom, a sulfur atom, and a selenium atom;
1,1-dialkylmethylene groups such as a 1,1-dimethylmethylene group, a 1,1-diethylmethylene group, a 1,1-di-n-propylmethylene group, a 1,1-di-n-butylmethylene group, a 1-ethyl-1-methylmethylene group, a 1-methyl-1-propylmethylene group, a 1-butyl-1-methylmethylene group, a 1-ethyl-1-propylmethylene group, a 1-ethyl-1-butylmethylene group, a 1-cyclohexylmethyl-1-methylmethylene group and the like;
1-alkyl-1-benzylmethylene groups which may have a substituent such as a 1-benzyl-1-methylmethylene group, a 1-benzyl-1-ethylmethylene group, a 1-benzyl-1-propylmethylene group, a 1-benzyl-1-butylmethylene group, a 1-(4-nitrobenzyl)-1-methylmethylene group, a 1-(4-chlorobenzyl)-1-methylmethylene group, a 1-(4-bromobenzyl)-1-methylmethylene group, a 1-(4-methylbenzyl)-1-methylmethylene group and the like;
1,1-dibenzylmethylene groups which may have a substituent such as a 1,1-dibenzylmethylene group, a 1,1-di(4-nitrobenzyl)methylene group, a 1,1-di(4-chlorobenzyl)methylene group, a 1,1-di(4-bromobenzyl)methylene group, a 1,1-di(4-methylbenzyl)methylene group and the like; and
cycloalkane-1,1-diyl groups having 3 to 6 carbon atoms which may have a substituent such as a cyclobutane-1,1-diyl group, a cyclopentane-1,1-diyl group, a cyclohexyl-1,1-diyl group, a 4-methylcyclohexyl-1,1-diyl group, a 4-ethylcyclohexyl-1,1-diyl group, a 4-tert-butylcyclohexyl-1,1-diyl group and the like.

In the trimethine dimer compound represented by the general formula (IX), $R_{101}$ to $R_{106}$ each independently represent an alkyl group which may have a substitutent or a benzyl group which may have a substitutent.

Specific examples of $R_{101}$ to $R_{106}$ include linear, branched or cyclic alkyl groups having 1 to 20 carbon atoms such as a methyl group, an ethyl group, an n-propyl group, an iso-propyl group, an n-butyl group, an iso-butyl group, a sec-butyl group, a t-butyl group, an n-pentyl group, a 2-methylbutyl group, a 1-methylbutyl group, a neo-pentyl group, a 1,2-dimethylpropyl group, a cyclo-pentyl group, an n-hexyl group, a 4-methylpentyl group, a 3-methylpentyl group, a 2-methylpentyl group, a 1-methylpentyl group, a 3,3-dimethylbutyl group, a 2,3-dimethylbutyl group, a 1,3-dimethylbutyl group, a 2,2-dimethylbutyl group, a 1,2-dimethylbutyl group, a 1,1-dimethylbutyl group, a 3-ethylbutyl group, a 2-ethylbutyl group, a 1-ethylbutyl group, a 1,2,2-trimethylbutyl group, a 1,1,2-trimethylbutyl group, a 1-ethyl-2-methylpropyl group, a cyclo-hexyl group, an n-heptyl group, a 2-methylhexyl group, a 3-methylhexyl group, a 4-methylhexyl group, a 5-methylhexyl group, a 2,4-dimethylpentyl group, an n-octyl group, a 2-ethylhexyl group, a 2, 5-dimethylhexyl group, a 2,5,5-triethylpentyl group, a 2,4-dimethylhexyl group, a 2,2,4-trimethylpentyl group, an n-nonyl group, a 3,5,5-trimethylhexyl group, an n-decyl group, a 4-ethyloctyl group, a 4-ethyl-4,5-dimethylhexyl group, an n-undecyl group, an n-dodecyl group, a 1,3,5,7-tetramethyloctyl group, a 4-butyloctyl group, a 6,6-diethyloctyl group, an n-tridecyl group, a 6-methyl-4-butyloctyl group, a 6,6-diethyloctyl group, an n-tetradecyl group, an n-pentadecyl group, a 3,5-dimethylheptyl group, a 2,6-dimethylheptyl group, a 2,4-dimethylheptyl group, a 2,2,5,5-tetramethylhexyl group, a 1-cyclo-pentyl-2,2-dimethylpropyl group, a 1-cyclo-hexyl-2,2-dimethylpropyl group and the like;
halogenoalkyl groups such as a chloromethyl group, a dichloromethyl group, a fluoromethyl group, a trifluoromethyl group, a 2,2,2-trifluoroethyl group, a pentafluoroethyl group, a heptafluoroisopropyl group, a heptafluoro-n-propyl group, a 2,2,3,3,3-pentafluoropropyl group, a nonafluoro-n-butyl group, a nonafluoro-tert-butyl group, a 2,2,3,3,4,4,4-heptafluorobutyl group, a 2, 2, 3, 4, 4, 4-hexafluorobutyl group, a perfluoroisopentyl group, a 2,2,3,3,4,4,5,5-octafluoropentyl group, a heptafluoro-sec-pentyl group, a perfluorohexyl group, a perfluoroisohexyl group, a perfluoroheptyl group, a perfluorooctyl group, a perfluorocyclohexyl group, a 4-trifluoromethylcyclohexyl group and the like;
alkoxyalkyl groups such as a methoxyethyl group, an ethoxyethyl group, an iso-propyloxyethyl group, a 3-methoxypropyl group, a 2-methoxybutyl group and the like;
dialkylaminoalkyl groups having 4 to 12 carbon atoms such as a 2-dimethylaminoethyl group, a 3-dimethylaminopropyl group, a 4-dimethylaminobutyl group, a 2-diethylaminoethyl group, a 3-diethylaminopropyl group, a 4-diethylaminobutyl group, a 2-di-n-propylaminoethyl group, a 3-di-n-propylaminopropyl group, a 4-di-n-propylaminobutyl group, a 2-di-n-butylaminoethyl group, a 3-di-n-butylaminopropyl group, a 4-di-n-butylaminobutyl group and the like;
alkyl groups which may have a substitutent such as alkoxycarbonylalkyl groups having 3 to 7 carbon atoms including a methoxycarbonylmethyl group, an ethoxycarbonylmethyl group, an n-propoxycarbonylmethyl group, an isopropoxycarbonylethyl group, a phenoxycarbonyl group and the like;

a benzyl group, a 4-methylbenzyl group, a 3-methylbenzyl group, a 2-methylbenzyl group, a 4-ethylbenzyl group, a 4-isopropylbenzyl group, a 4-n-butylbenzyl group, a 4-isobutylbenzyl group, a 4-sec-butylbenzyl group, a 4-tert-butylbenzyl group, a 4-n-pentylbenzyl group, a 4-isopentylbenzyl group, a 4-trifluoromethylbenzyl group, a 4-methoxymethylbenzyl group, a 4-methylthiobenzyl group, a 2,4-dimethylbenzyl group, a 4-chlorobenzyl group, a 4-bromobenzyl group, a 4-fluorobenzyl group, a 2,4-dichlorobenzyl group, a 4-nitrobenzyl group, a 4-methyl-2-nitrobenzyl group, a 4-chloro-2-nitrobenzyl group and a 4-bromo-2-nitrobenzyl group.

For the trimethine dimer compound represented by the general formula (IX), in $b(Z^{a-})$, $Z^-$ represents an anion; and a and b represent an integer of 1 to 2, with the proviso that $a \times b = 2$.

Examples thereof include the same as those in the trimethine dimer compound represented by the general formula (I) or (V).

In the trimethine dimer compound represented by the general formula (IX), Y represents the aforementioned general formula (II), (III) or (IV).

Examples thereof include the same as those in the trimethine dimer compound represented by the general formula (I) or (V).

As the trimethine dimer compound represented by the general formula (IX) of the present invention, a trimethine dimer compound represented by the general formula (X) can be cited as a more preferable compound from the viewpoint of recording properties for recording at a 12× or higher speed. Herein, $X_{103}$, $X_{104}$, $R_{107}$, $R_{108}$, $R_{109}$, $R_{110}$, $R_{111}$ and $R_{112}$ in the formula (X) each correspond to $X_{101}$, $X_{102}$, $R_{101}$, $R_{102}$, $R_{103}$, $R_{104}$, $R_{105}$ and $R_{106}$ in the formula (IX),

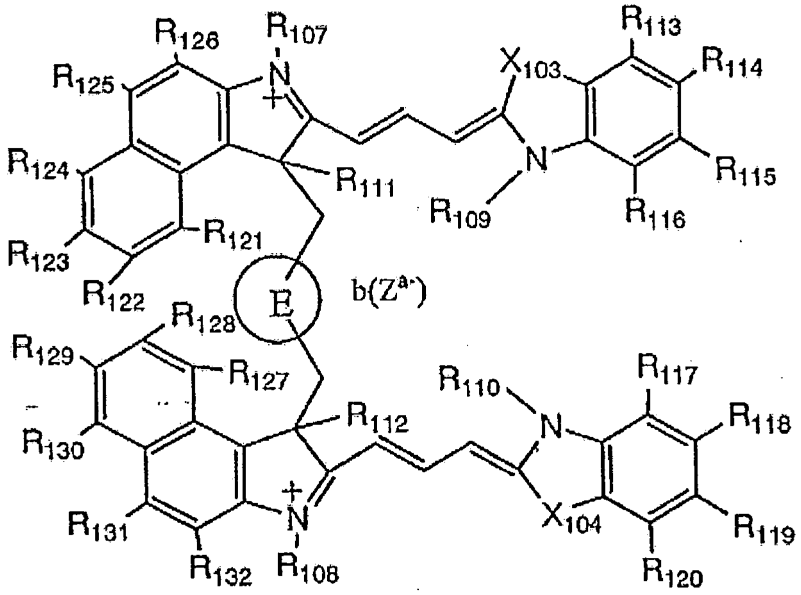

(X)

wherein, in the formula, $X_{103}$ and $X_{104}$ each independently represent an oxygen atom, a sulfur atom, a selenium atom, a 1,1-dialkylmethylene group which may have a substituent, a 1-alkyl-1-benzylmethylene group which may have a substituent, a 1,1-dibenzylmethylene group which may have a substituent or a cycloalkane-1,1-diyl group having 3 to 6 carbon atoms which may have a substituent; $R_{107}$ to $R_{112}$ each independently represent an alkyl group which may have a substitutent or a benzyl group which may have a substitutent; $R_{113}$ to $R_{132}$ each independently represent a hydrogen atom, a halogen atom, a nitro group, an alkyl group or an alkoxy group; a ring E represents a benzene ring or a naphthalene ring; in b $(Z^{a-})$, $Z^-$ represents an anion; and a and b represent an integer of 1 to 2, with the proviso that $a \times b = 2$.

In the trimethine dimer compound represented by the general formula (X), $X_{103}$ and $X_{104}$ each independently represent an oxygen atom, a sulfur atom, a selenium atom, a 1,1-dialkylmethylene group which may have a substituent, a 1-alkyl-1-benzylmethylene group which may have a substituent, a 1, 1-dibenzylmethylene group which may have a substituent or a cycloalkane-1,1-diyl group having 3 to 6 carbon atoms which may have a substituent.

Herein, specific examples of the above include the same as specific examples of $X_{101}$ and $X_{102}$ in the aforementioned trimethine dimer compound represented by the general formula (IX).

In the trimethine dimer compound represented by the general formula (X), $R_{107}$ to $R_{112}$ each independently represent an alkyl group which may have a substitutent or a benzyl group which may have a substitutent.

Herein, specific examples of the above include the same as specific examples of $R_{101}$ to $R_{106}$ in the aforemen-

tioned trimethine dimer compound represented by the general formula (IX).

In the trimethine dimer compound represented by the general formula (X), $R_{113}$ to $R_{132}$ each independently represent a hydrogen atom, a halogen atom, a nitro group, an alkyl group or an alkoxy group.

Herein, specific examples of the above include the same as specific examples cited as the substituent of a benzene ring which may have a substituent or a naphthalene ring which may have a substituent in A, B, C and D in the aforementioned trimethine dimer compound represented by the general formula (IX).

In the trimethine dimer compound represented by the general formula (X), a ring E represents a benzene ring or a naphthalene ring. Specific examples of the ring E include a benzene ring and a naphthalene ring.

For the trimethine dimer compound represented by the general formula (X), in b ($Z^{a-}$), $Z^-$ represents an anion; and a and b represent an integer of 1 to 2, with the proviso that a $\times$ b = 2.

Herein, specific examples of the aforementioned anion represented by $Z^{a-}$ include the same as specific examples of the anion represented by $Z^{a-}$ in the aforementioned trimethine dimer compound represented by the general formula (I) or (V).

In the trimethine dimer compound represented by the general formula (X), a ring E represents a benzene ring or a naphthalene ring. Specific examples of the ring E include a benzene ring and a naphthalene ring.

As the trimethine dimer compound represented by the general formula (IX) of the present invention, a trimethine dimer compound represented by the general formula (XI) can be cited as a further preferable compound from the viewpoint of recording properties for recording at a 12$\times$ or higher speed. Herein, $X_{105}$, $X_{106}$, $R_{133}$, $R_{134}$, $R_{135}$, $R_{136}$, $R_{137}$ and $R_{138}$ in the formula (XI) each correspond to $X_{101}$, $X_{102}$, $R_{101}$, $R_{102}$, $R_{103}$, $R_{104}$, $R_{105}$ and $R_{106}$ in the formula (IX),

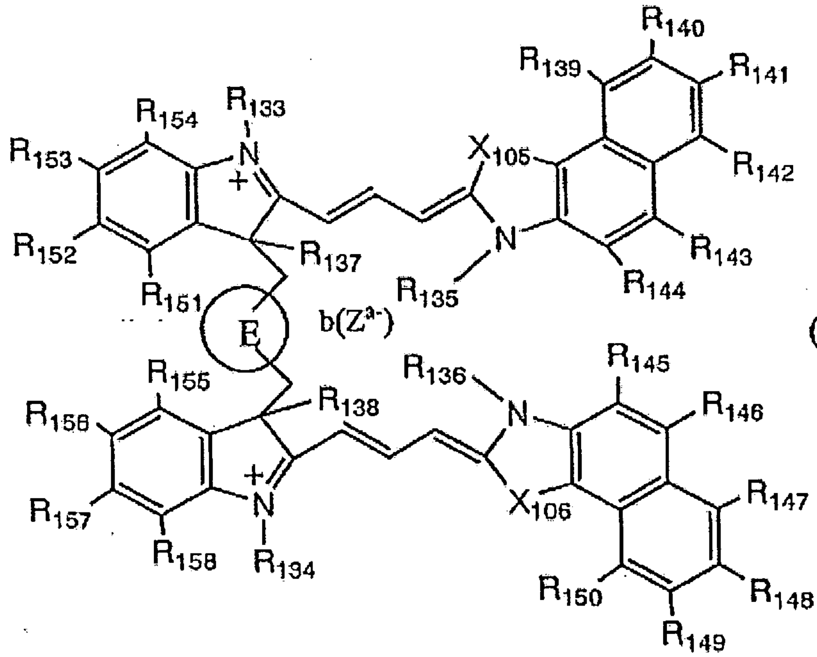

(XI)

wherein, in the formula, $X_{105}$ and $X_{106}$ each independently represent an oxygen atom, a sulfur atom, a selenium atom, a 1,1-dialkylmethylene group which may have a substitutent, a 1-alkyl-1-benzylmethylene group which may have a substitutent, a 1,1-dibenzylmethylene group which may have a substituent or a cycloalkane-1,1-diyl group having 3 to 6 carbon atoms which may have a substituent; $R_{133}$ to $R_{138}$ each independently represent an alkyl group which may have a substitutent or a benzyl group which may have a substitutent; $R_{139}$ to $R_{158}$ each independently represent a hydrogen atom, a halogen atom, a nitro group, an alkyl group or an alkoxy group; a ring E represents a benzene ring or a naphthalene ring; in b($Z^{a-}$), $Z^-$ represents an anion; and a and b represent an integer of 1 to 2, with the proviso that a $\times$ b = 2.

In the trimethine dimer compound represented by the general formula (XI), $X_{105}$ and $X_{106}$ each independently represent an oxygen atom, a sulfur atom, a selenium atom, a 1, 1-dialkylmethylene group which may have a substituent, a 1-alkyl-l-benzylmethylene group which may have a substituent, a 1, 1-dibenzylmethylene group which may have a substituent or a cycloalkane-1,1-diyl group having 3 to 6 carbon atoms which may have a substituent.

Herein, specific examples of the above include the same as specific examples of $X_{101}$ and $X_{102}$ in the aforementioned trimethine dimer compound represented by the general formula (IX).

In the trimethine dimer compound represented by the general formula (XI), $R_{133}$ to $R_{138}$ each independently represent an alkyl group which may have a substitutent or a benzyl group which may have a substitutent.

Herein, specific examples of the above include the same as specific examples of $R_{101}$ to $R_{106}$ in the aforementioned trimethine dimer compound represented by the general formula (IX).

In the trimethine dimer compound represented by the general formula (XI), $R_{139}$ to $R_{158}$ each independently represent a hydrogen atom, a halogen atom, a nitro group, an alkyl group or an alkoxy group.

Herein, specific examples of the above include the same as specific examples cited as the substituent of a benzene ring which may have a substituent or a naphthalene ring which may have a substituent in A, B, C and D in the aforementioned trimethine dimer compound represented by the general formula (IX).

In the trimethine dimer compound represented by the general formula (XI), a ring E represents a benzene ring or a naphthalene ring. Specific examples of the ring E include a benzene ring and a naphthalene ring.

For the trimethine dimer compound represented by the general formula (XI), in b ($Z^{a-}$), $Z^-$ represents an anion; and a and b represent an integer of 1 to 2, with the proviso that a $\times$ b = 2.

Herein, specific examples of the aforementioned anion represented by $Z^{a-}$ include the same as specific examples of the anion represented by $Z^{a-}$ in the aforementioned trimethine dimer compound represented by the general formula (I) or (V).

Preferable specific examples of the trimethine dimer compound of the general formula (I) of the present invention are shown in Table 1, but the range of the compounds are not restricted thereto.

[Table 1]

| | |
|---|---|
| (A-1)<br>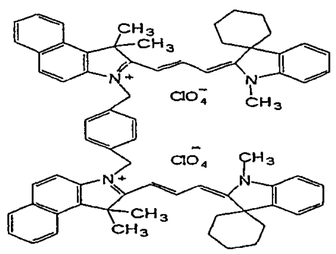 | (A-2)<br>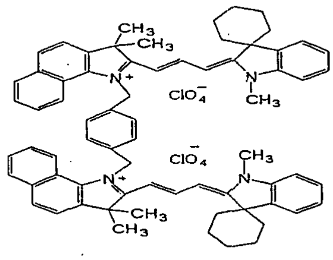 |
| (A-3)<br>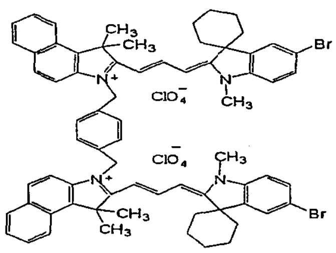 | (A-4)<br>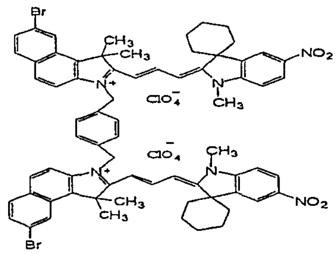 |
| (A-5)<br>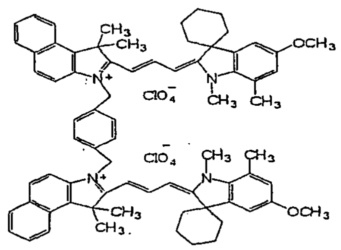 | (A-6)<br>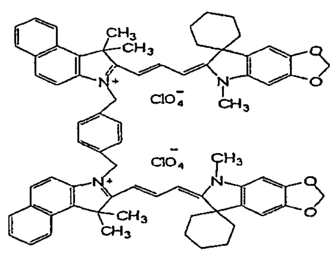 |
| (A-7)<br>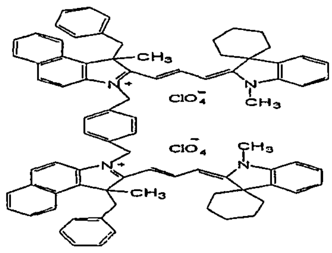 | (A-8)<br>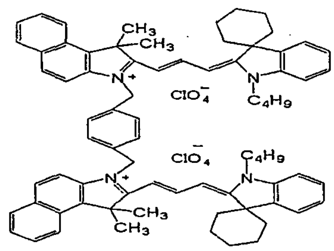 |
| (A-9)<br>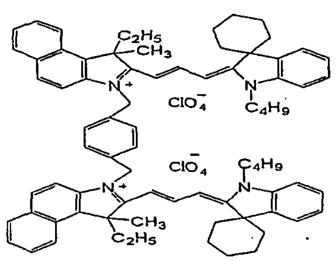 | (A-10)<br>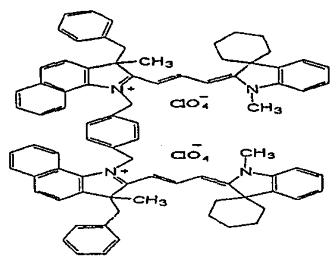 |

(A-11)

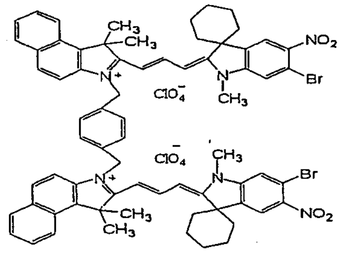

(A-12)

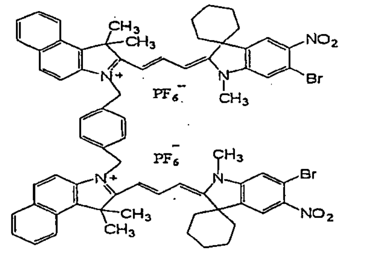

(A-13)

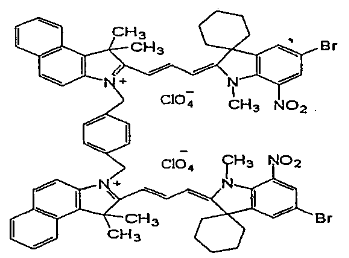

(A-14)

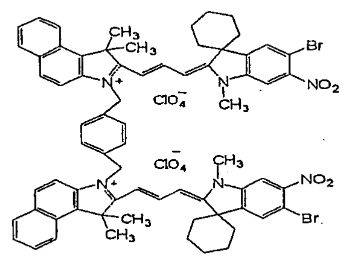

(A-15)

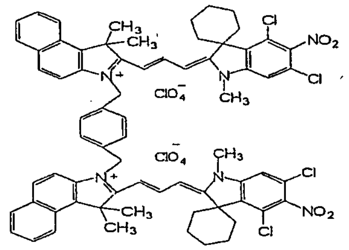

(A-16)

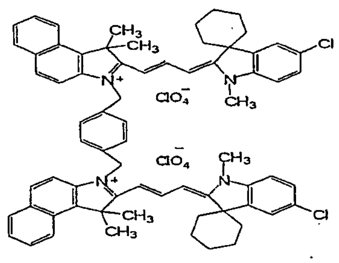

(A-17)

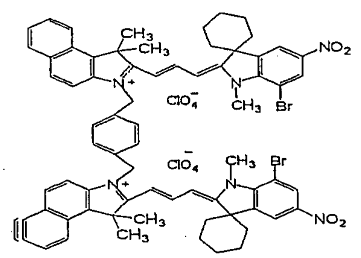

(A-18)

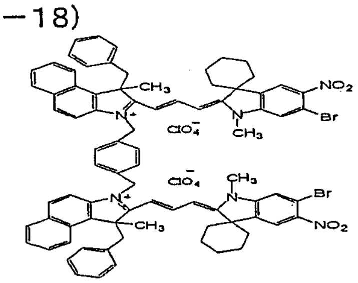

(A-19)

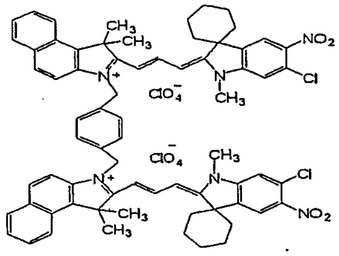

(A-20)

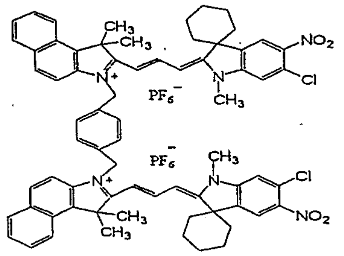

| | |
|---|---|
| (A−21)<br>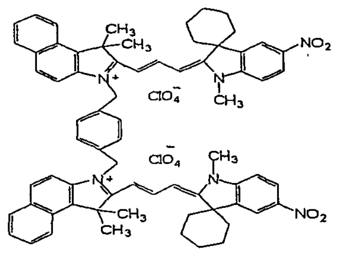 | (A−22)<br>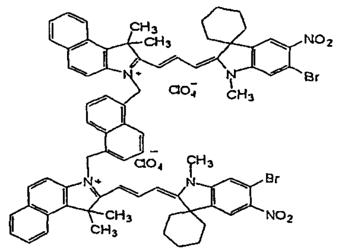 |
| (A−23)<br>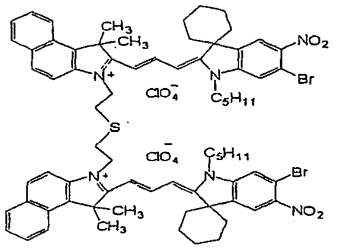 | (A−24)<br>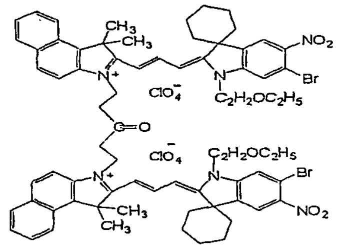 |
| (A−25)<br>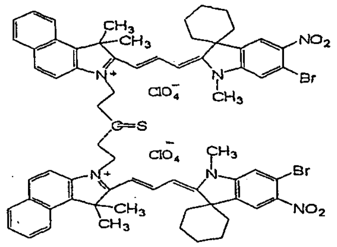 | (A−26)<br>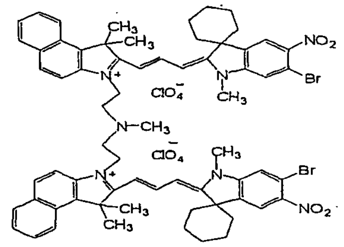 |
| (A−27)<br>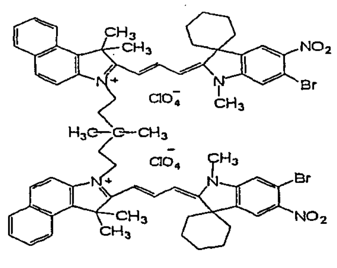 | (A−28)<br>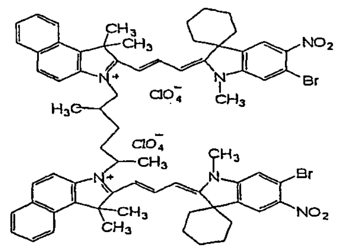 |
| (A−29)<br>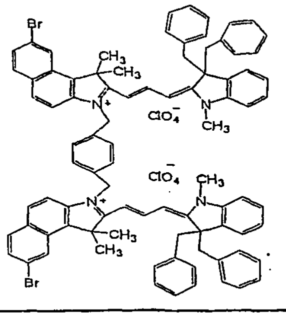 | (A−30)<br>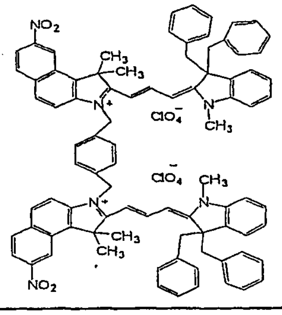 |

| | |
|---|---|
| (A−31)<br>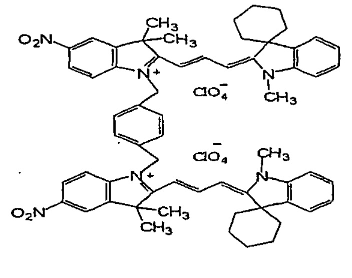 | (A−32)<br>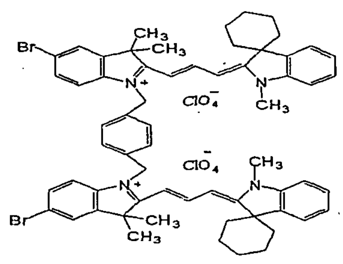 |
| (A−33)<br>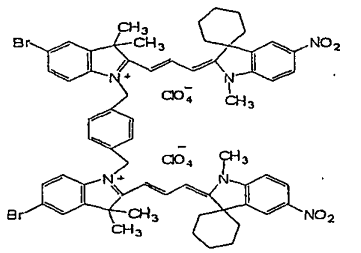 | (A−34)<br>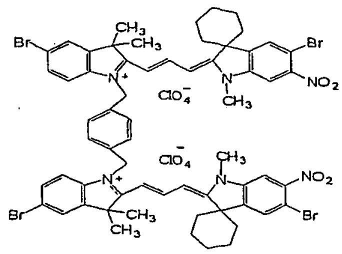 |
| (A−35)<br>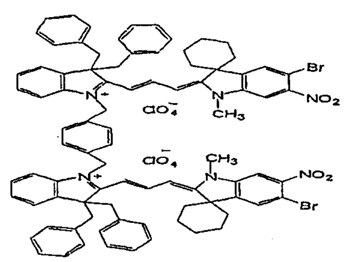 | (A−36)<br>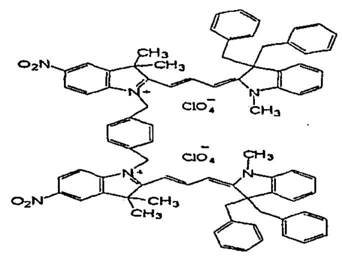 |
| (A−37)<br>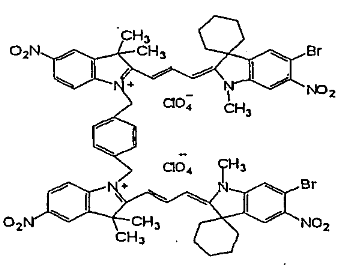 | (A−38)<br>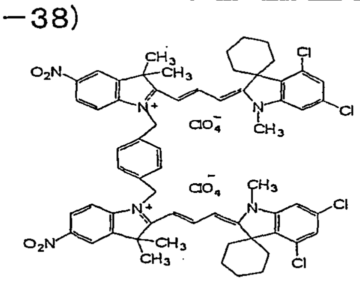 |
| (A−39)<br>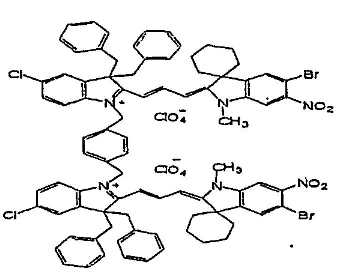 | (A−40)<br>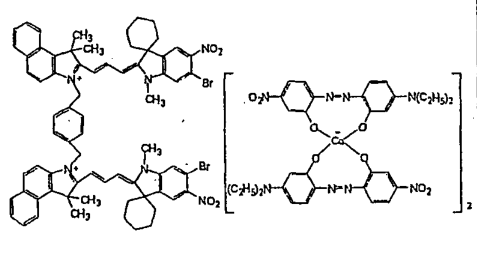 |

| | |
|---|---|
| (A−41)<br>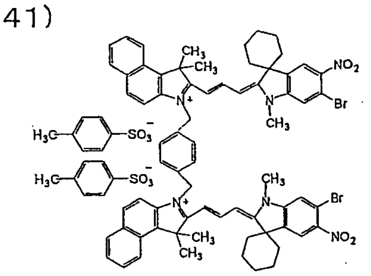 | (A−42)<br>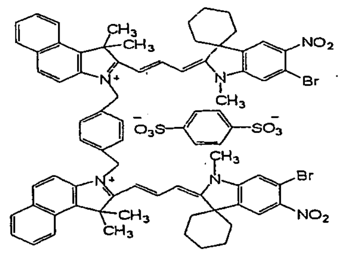 |
| (A−43)<br>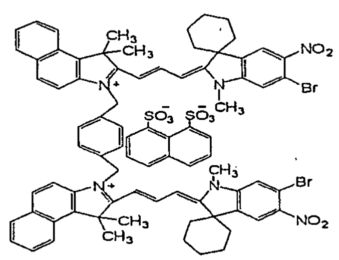 | (A−44)<br>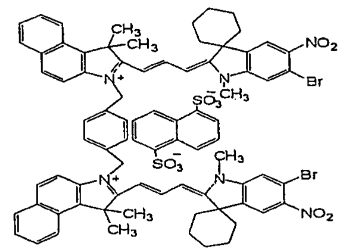 |
| (A−45)<br>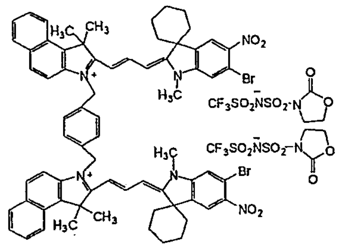 | (A−46)<br>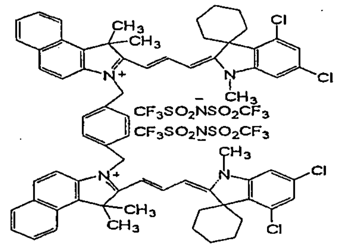 |
| (A−47)<br>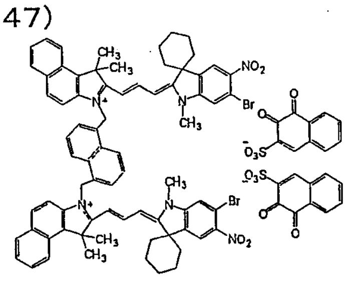 | (A−48)<br>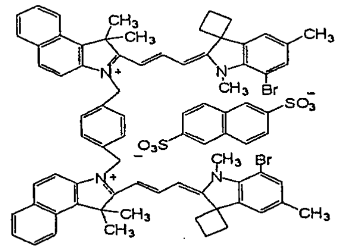 |
| (A−49)<br>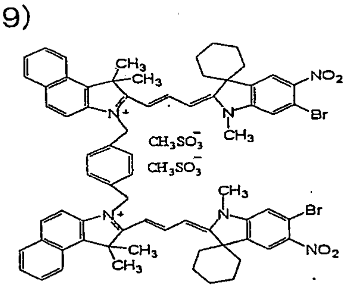 | (A−50)<br>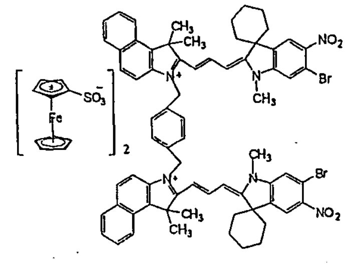 |

| | |
|---|---|
| (A-51) 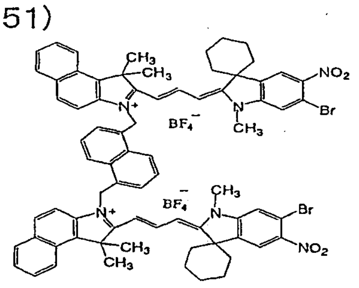 | (A-52) 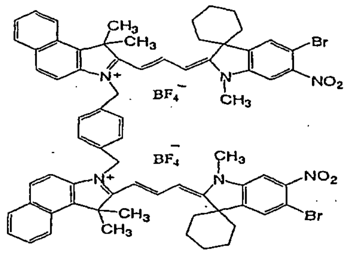 |
| (A-53) 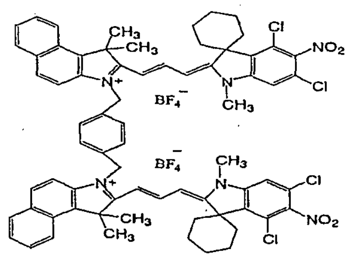 | (A-54) 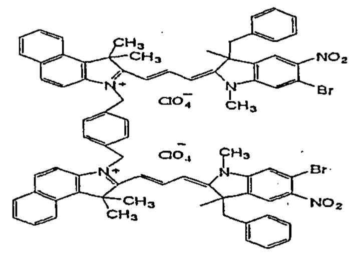 |
| (A-55) 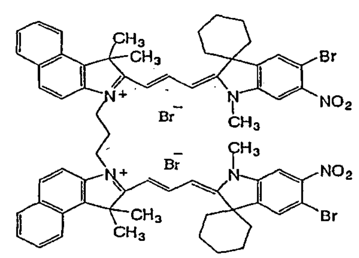 | (A-56) 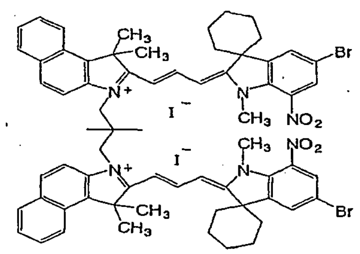 |
| (A-57) 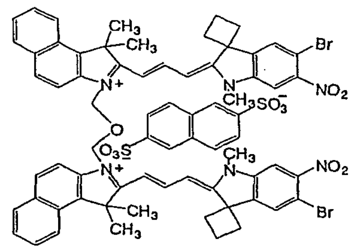 | (A-58) 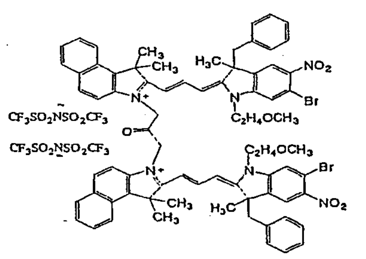 |
| (A-59) 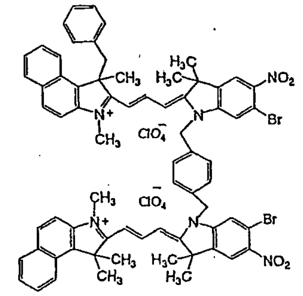 | (A-60) 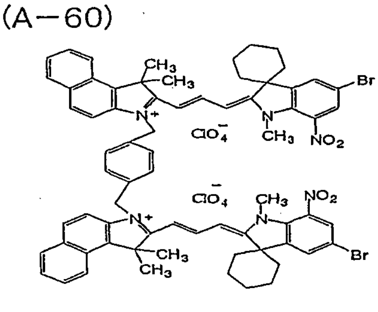 |

| | |
|---|---|
| (A−61)<br>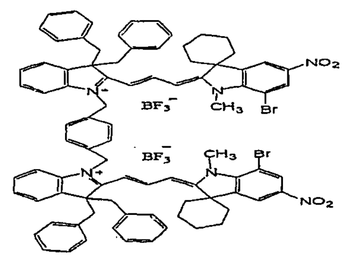 | (A−62)<br>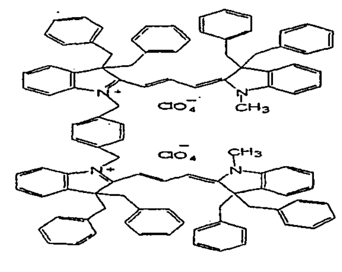 |
| (A−63)<br>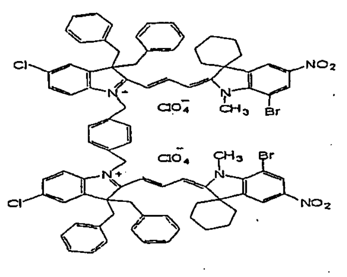 | (A−64)<br>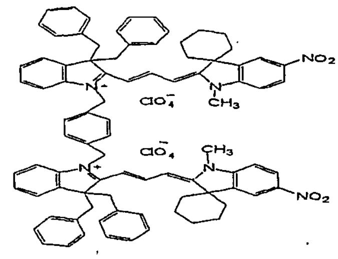 |
| (A−65)<br>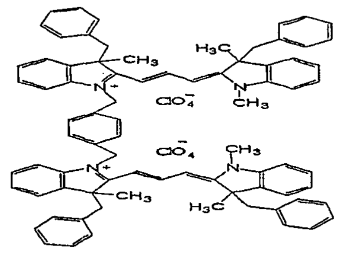 | (A−66)<br>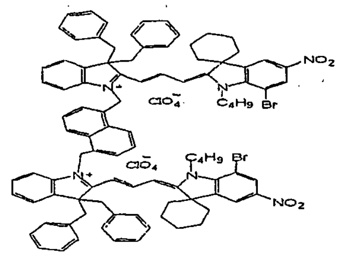 |
| (A−67)<br>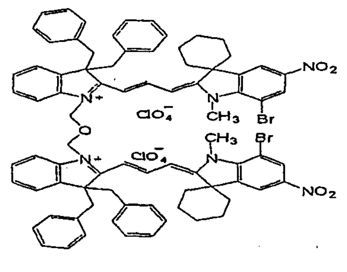 | (A−68)<br>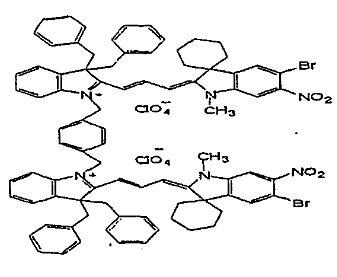 |
| (A−69)<br>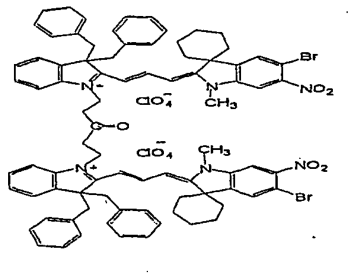 | (A−70)<br>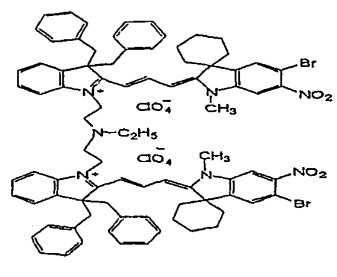 |

| | |
|---|---|
| (A−71)<br>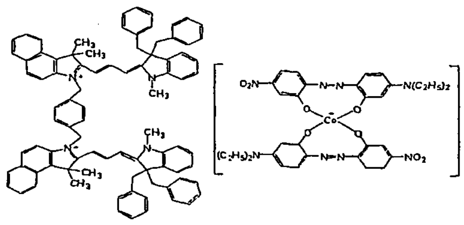 | (A−72)<br>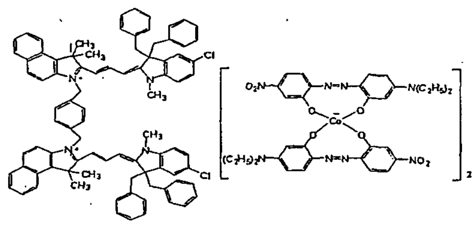 |
| (A−73)<br>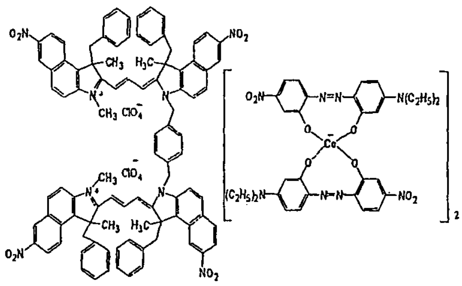 | (A−74)<br>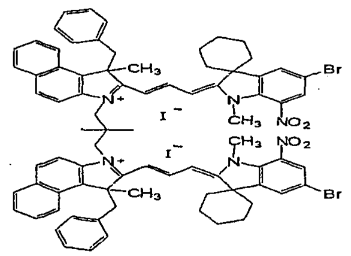 |
| (A−75)<br>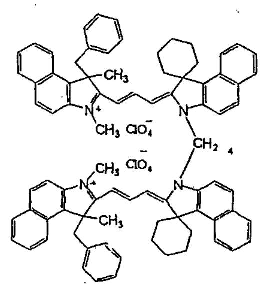 | (A−76)<br>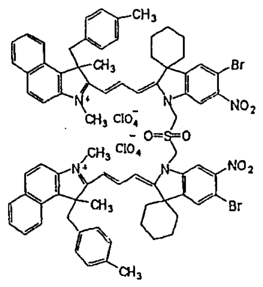 |
| (A−77)<br>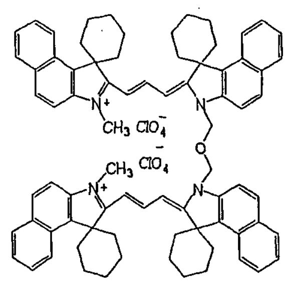 | (A−78)<br>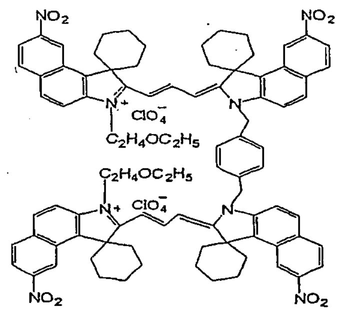 |
| (A−79)<br>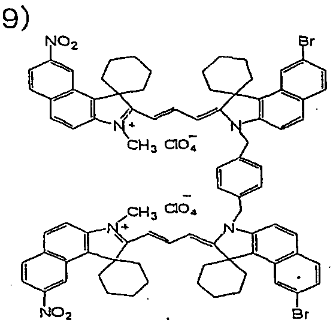 | (A−80)<br>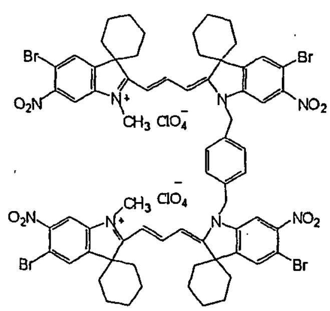 |

| | |
|---|---|
| (A−81) 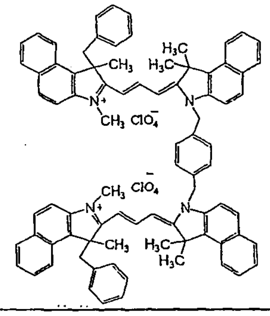 | (A−82) 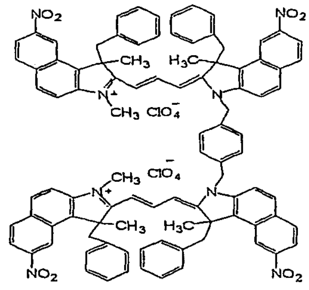 |
| (A−83) 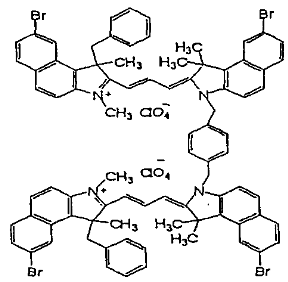 | (A−84) 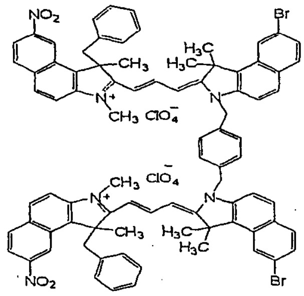 |
| (A−85) 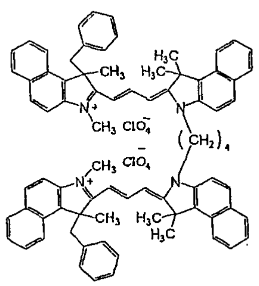 | (A−86) 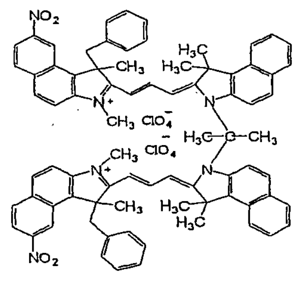 |
| (A−87) 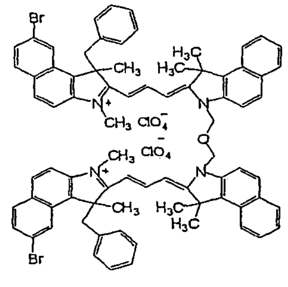 | (A−88) 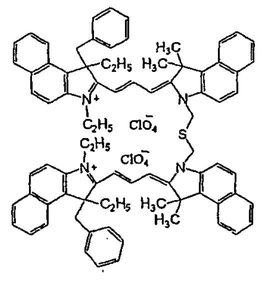 |
| (A−89) 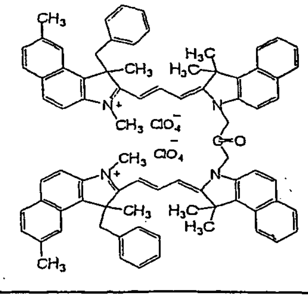 | (A−90) 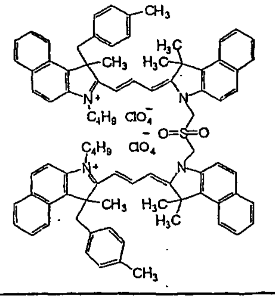 |

| | |
|---|---|
| (A−91)<br>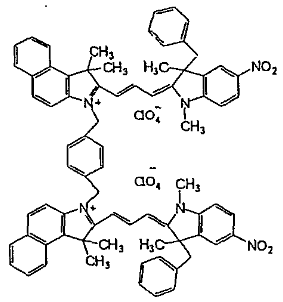 | (A−92)<br>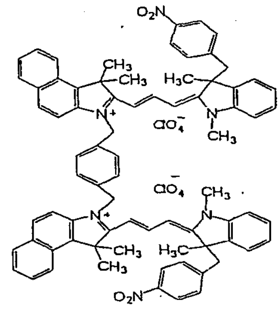 |
| (A−93)<br>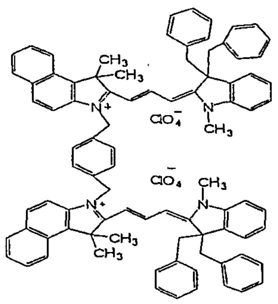 | (A−94)<br>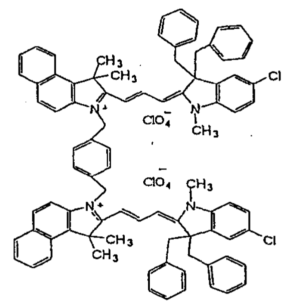 |
| (A−95)<br>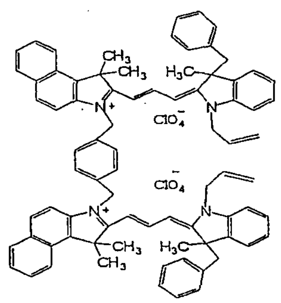 | (A−96)<br>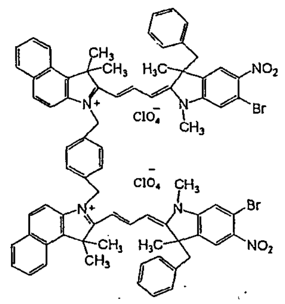 |
| (A−97)<br>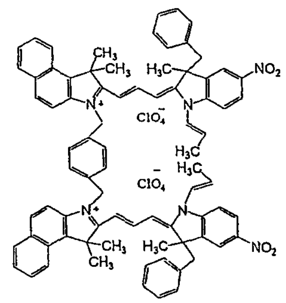 | (A−98)<br>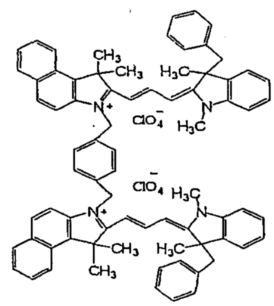 |
| (A−99)<br>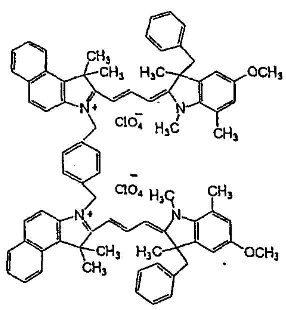 | (A−100)<br>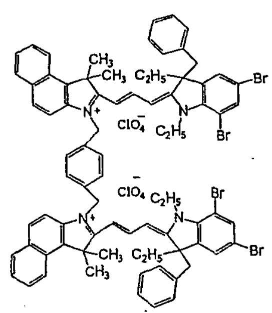 |

| | |
|---|---|
| (A−101)<br>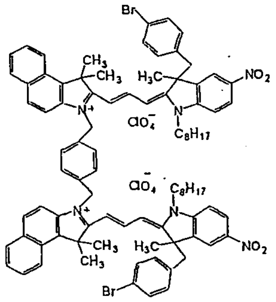 | (A−102)<br>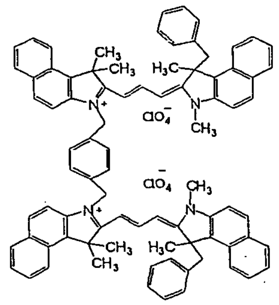 |
| (A−103)<br>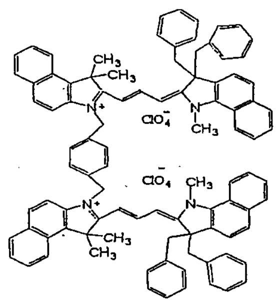 | (A−104)<br>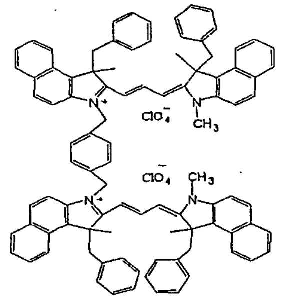 |
| (A−105)<br>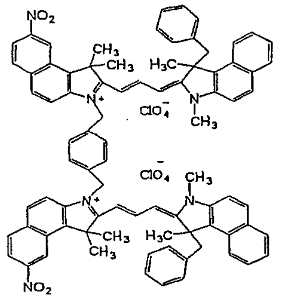 | (A−106)<br>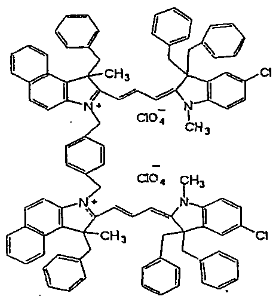 |
| (A−107)<br>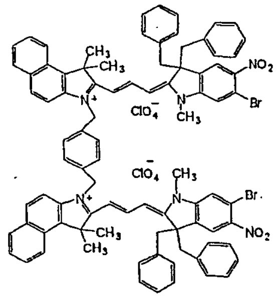 | (A−108)<br>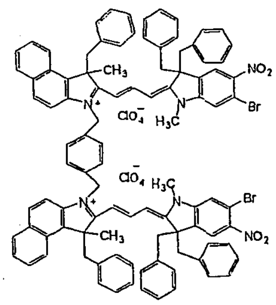 |
| (A−109)<br>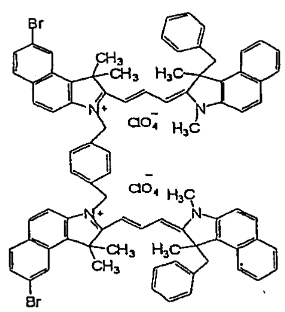 | (A−110)<br>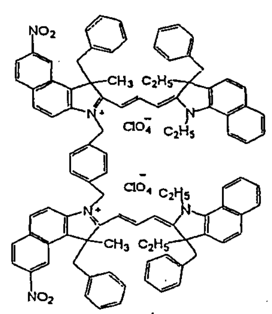 |

| | |
|---|---|
| (A−111)<br>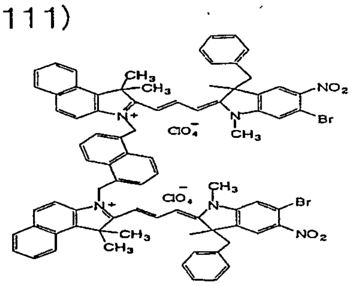 | (A−112)<br>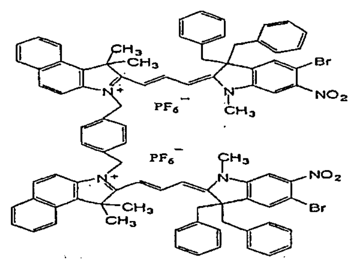 |
| (A−113)<br>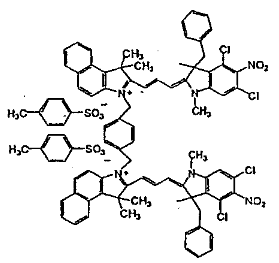 | (A−114)<br>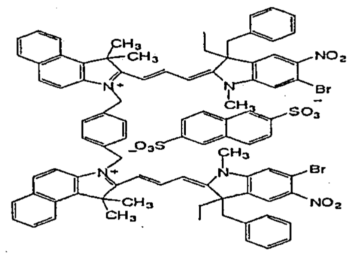 |
| (A−115)<br>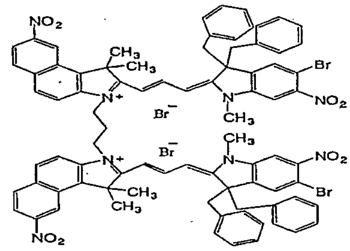 | (A−116)<br>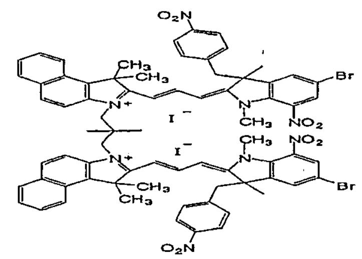 |
| (A−117)<br>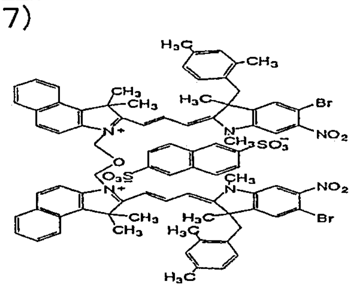 | (A−118)<br>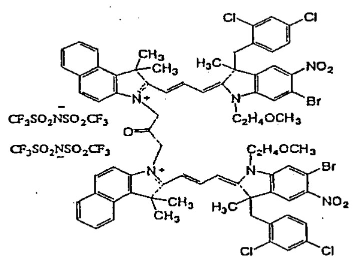 |
| (A−119)<br>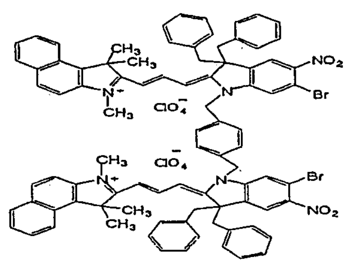 | (A−120)<br>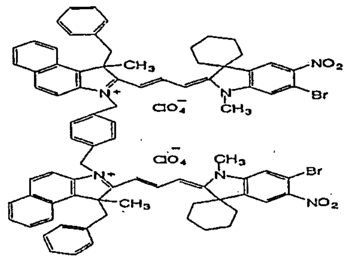 |

| | |
|---|---|
| (B−1) 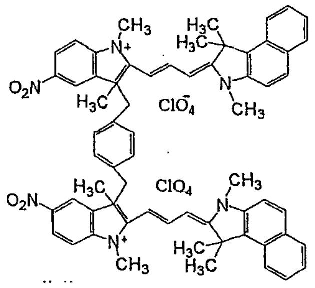 | (B−2) 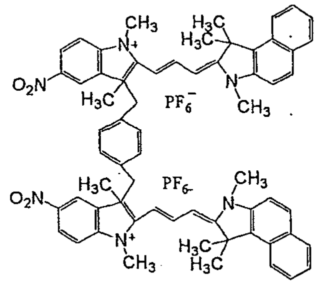 |
| (B−3) 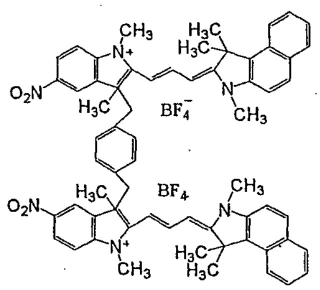 | (B−4) 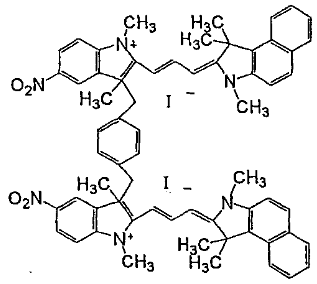 |
| (B−5) 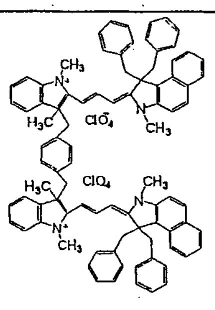 | (B−6) 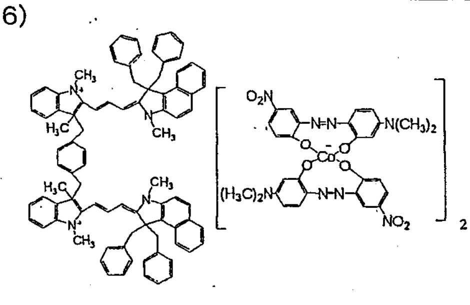 |
| (B−7) 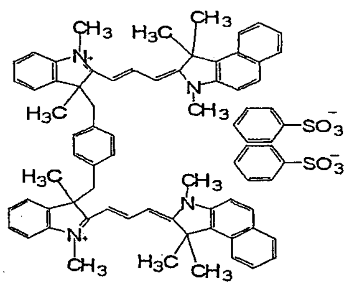 | (B−8) 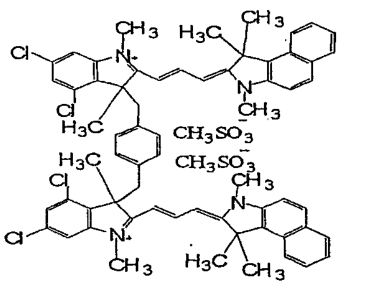 |
| (B−9) 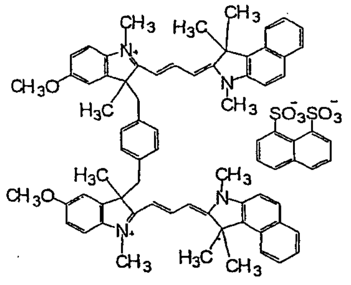 | (B−10) 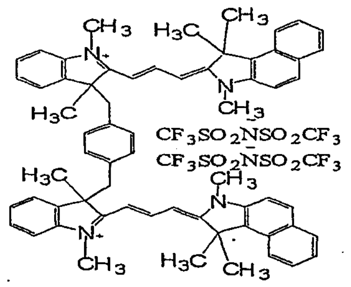 |

| | |
|---|---|
| (B−11) 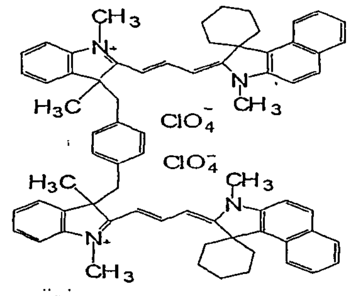 | (B−12) 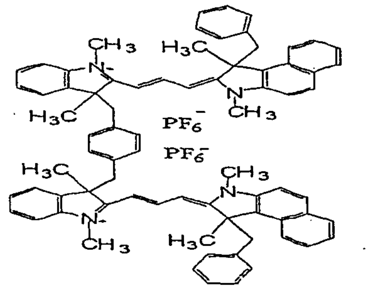 |
| (B−13) 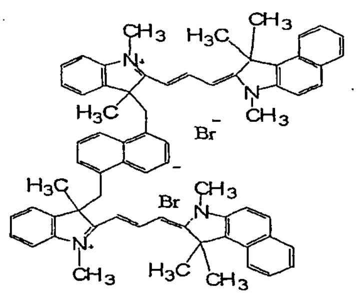 | (B−14) 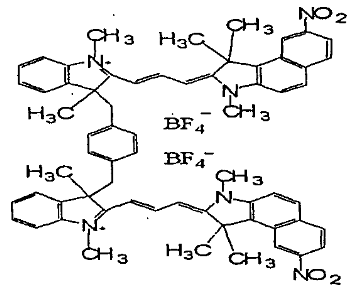 |
| (B−15) 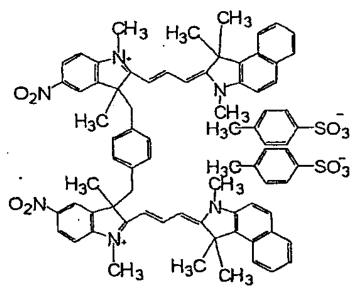 | (B−16) 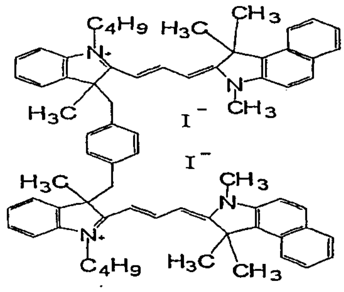 |
| (B−17) 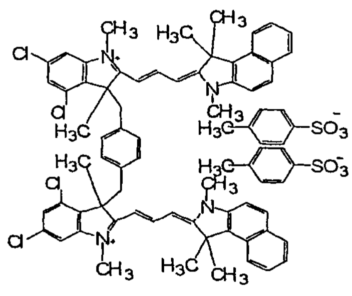 | (B−18) 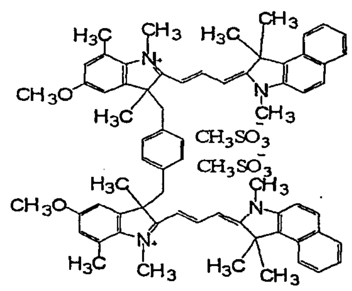 |
| (B−19) 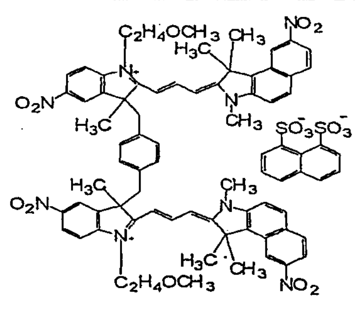 | (B−20) 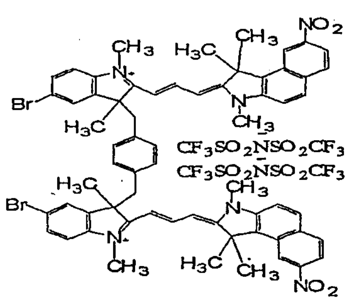 |

| | |
|---|---|
| (B-21) 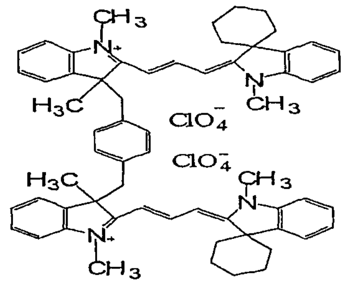 | (B-22) 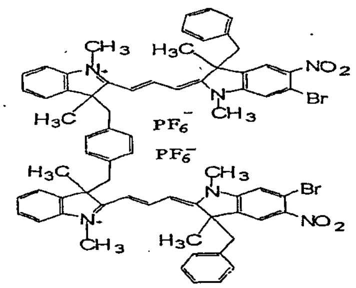 |
| (B-23) 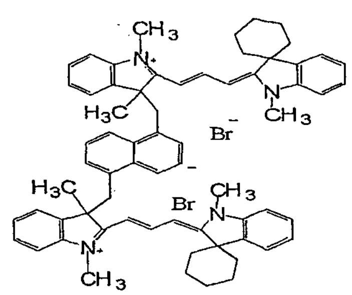 | (B-24) 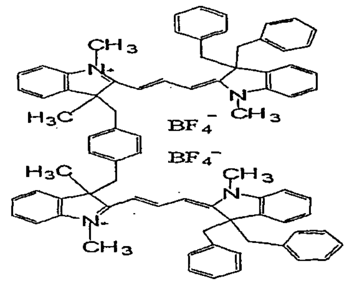 |
| (B-25) 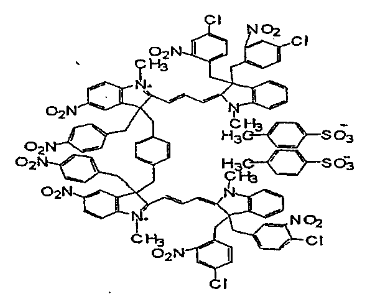 | (B-26) 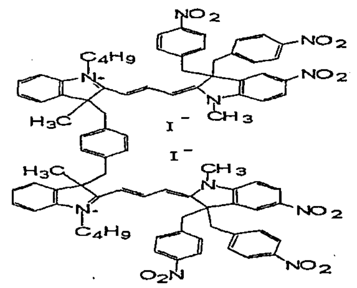 |
| (B-27) 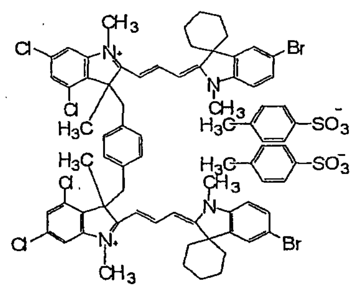 | (B-28) 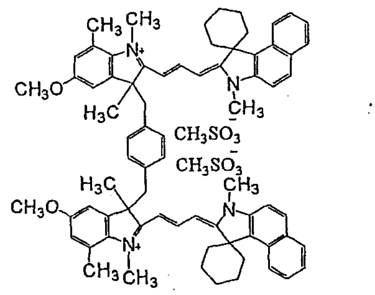 |
| (B-29) 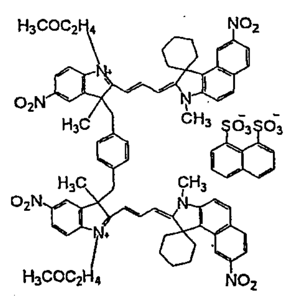 | (B-30) 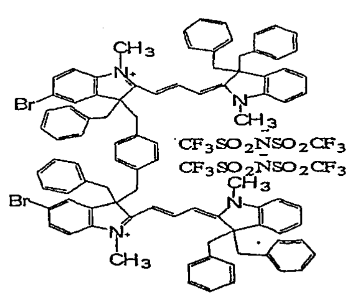 |

| | |
|---|---|
| (B−31) 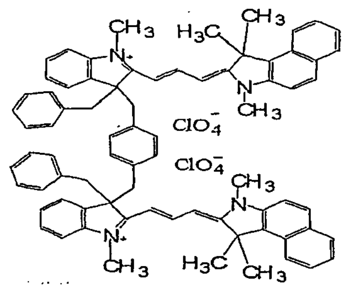 | (B−32) 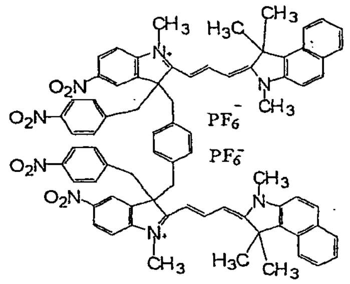 |
| (B−33) 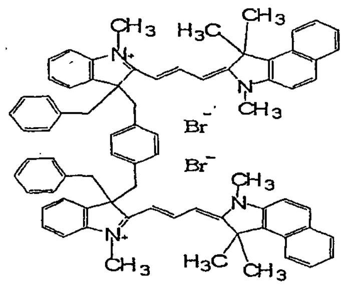 | (B−34) 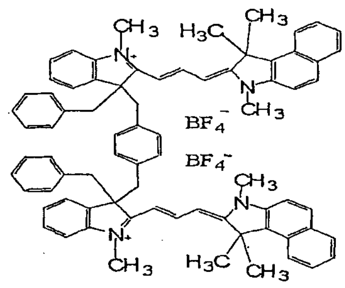 |
| (B−35) 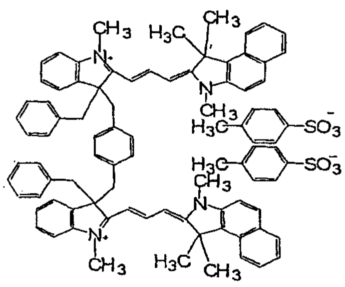 | (B−36) 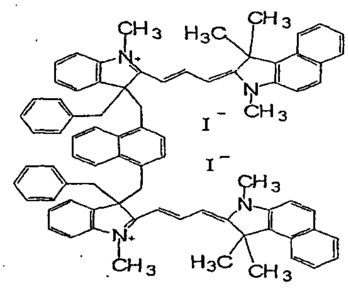 |
| (B−37) 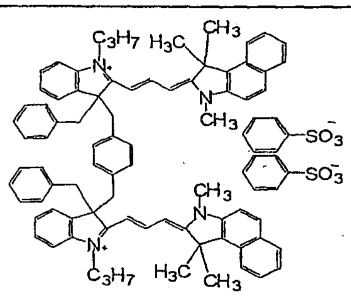 | (B−38) 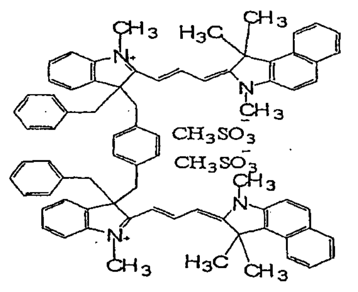 |
| (B−39) 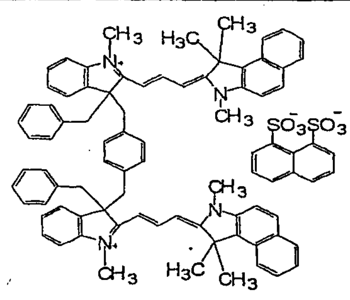 | (B−40) 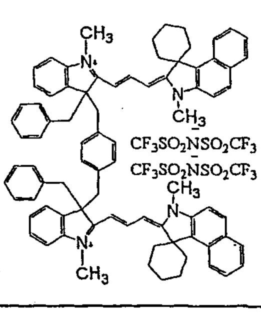 |

| | |
|---|---|
| (B-41) 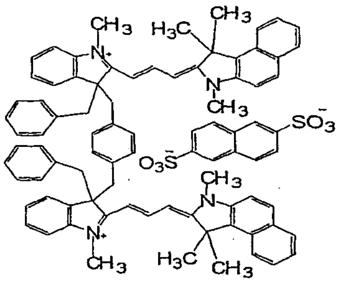 | (B-42) 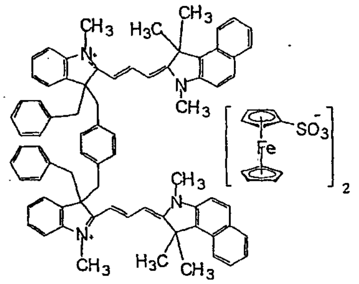 |
| (B-43) 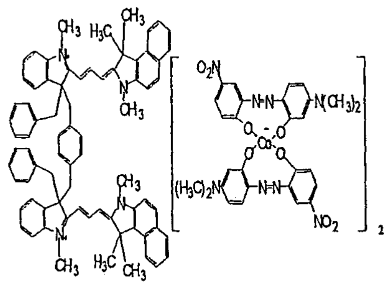 | (B-44) 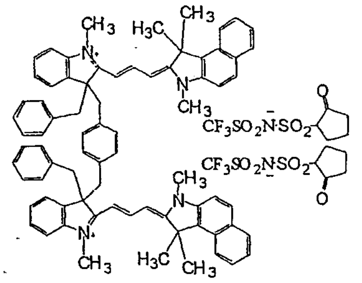 |
| (B-45) 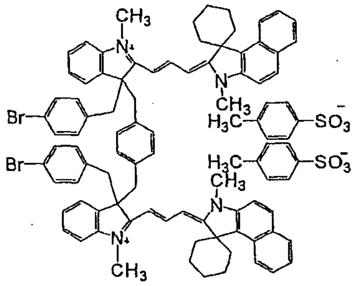 | (B-46) 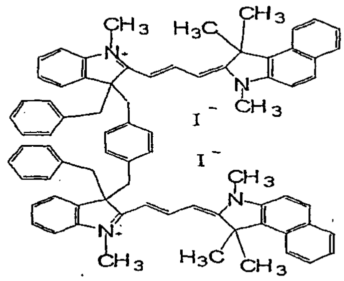 |
| (B-47) 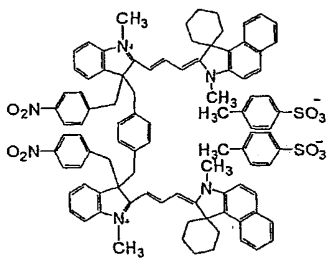 | (B-48) 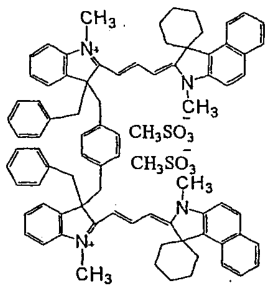 |
| (B-49) 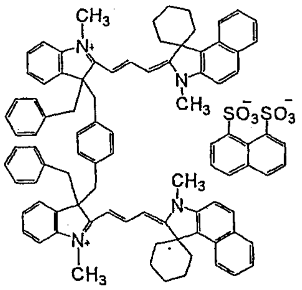 | (B-50) 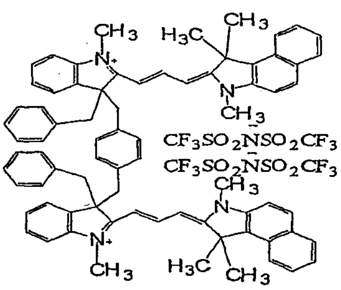 |

| | |
|---|---|
| (B−51) 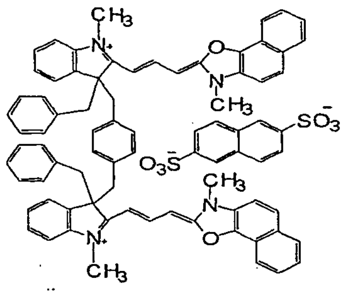 | (B−52) 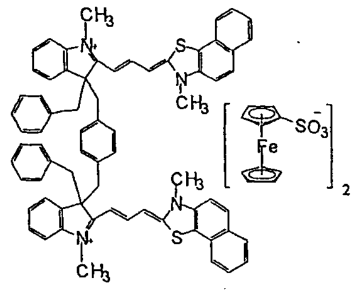 |
| (B−53) 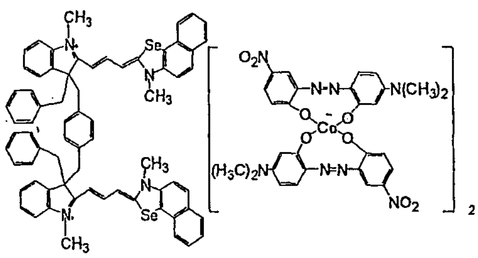 | (B−54) 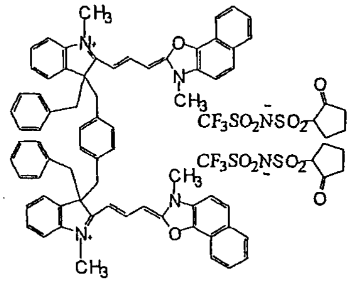 |
| (B−55) 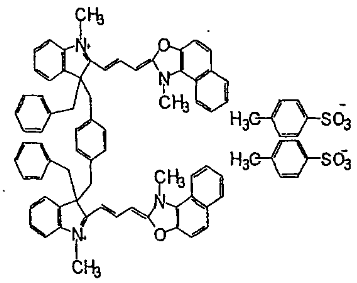 | (B−56) 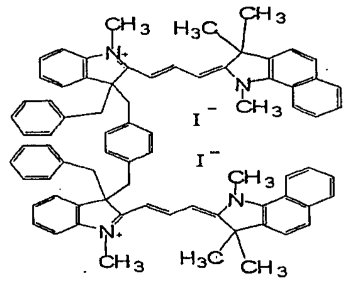 |
| (B−57) 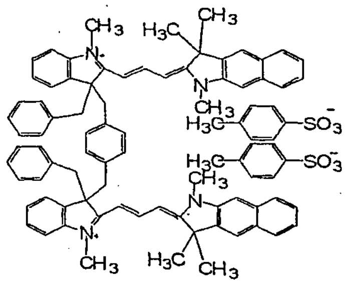 | (B−58) 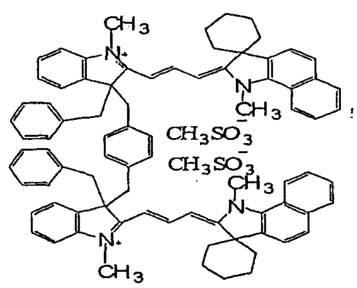 |
| (B−59) 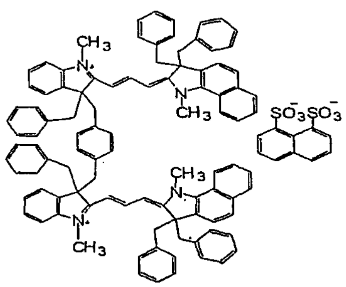 | (B−60) 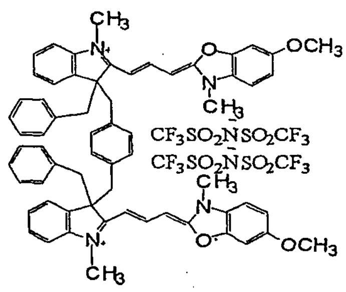 |

| | |
|---|---|
| (B-61) 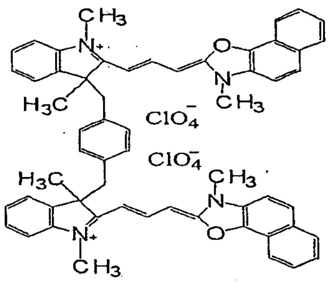 | (B-62) 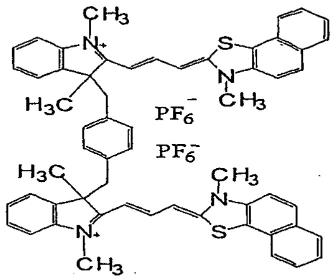 |
| (B-63) 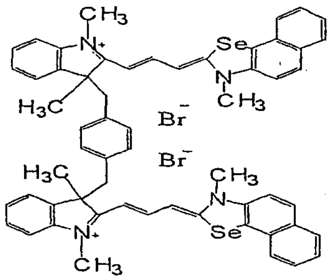 | (B-64) 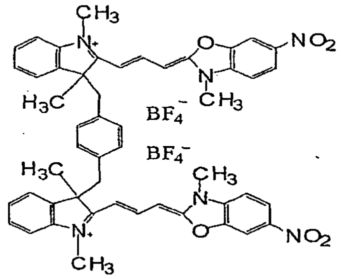 |
| (B-65) 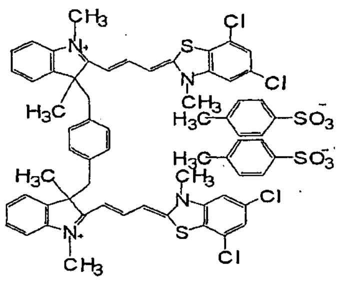 | (B-66) 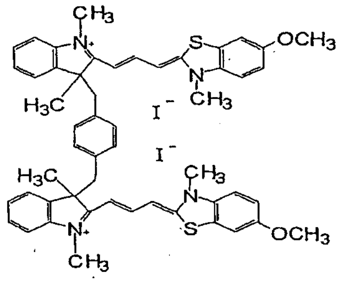 |
| (B-67) 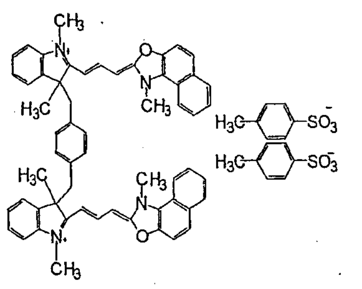 | (B-68) 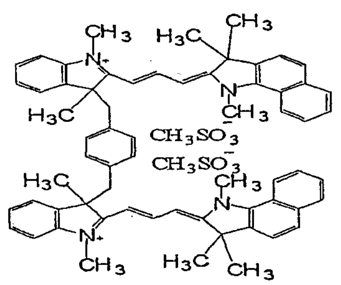 |
| (B-69) 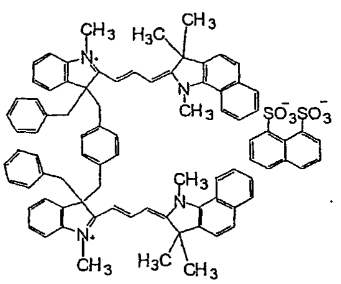 | (B-70) 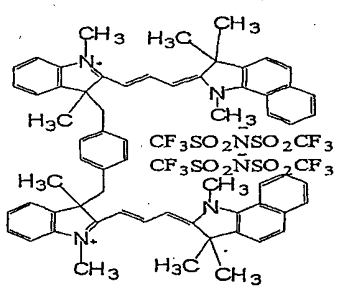 |

| | |
|---|---|
| (C−1) 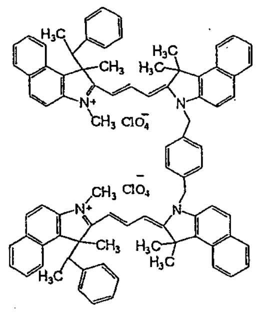 | (C−2) 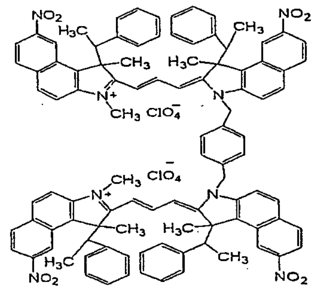 |
| (C−3) 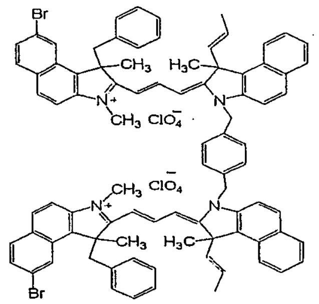 | (C−4) 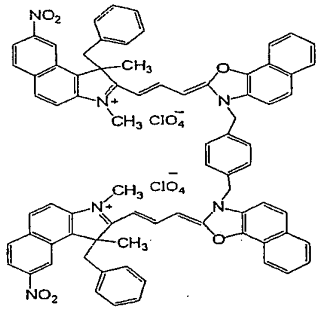 |
| (C−5) 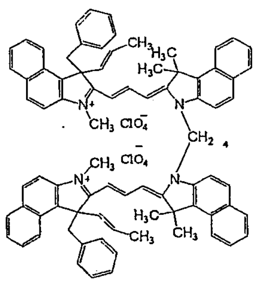 | (C−6) 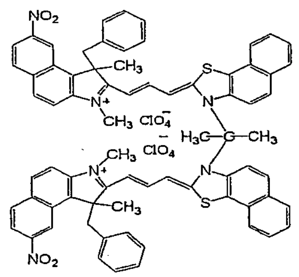 |
| (C−7) 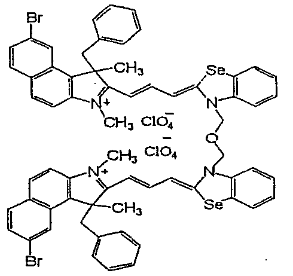 | (C−8) 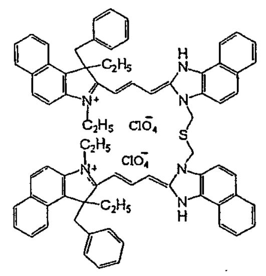 |
| (C−9) 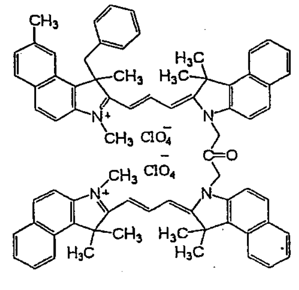 | (C−10) 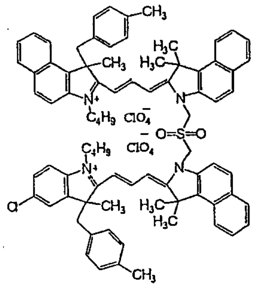 |

| | |
|---|---|
| (C−11) 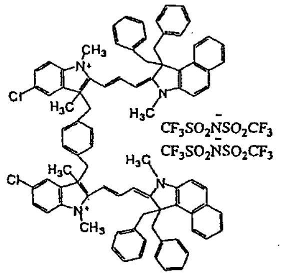 | (C−12) 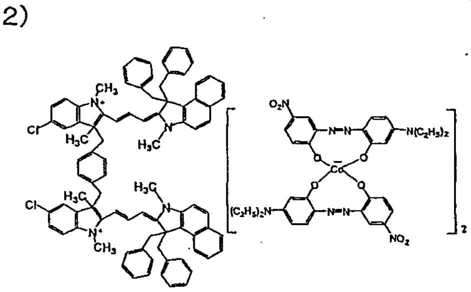 |
| (C−13) 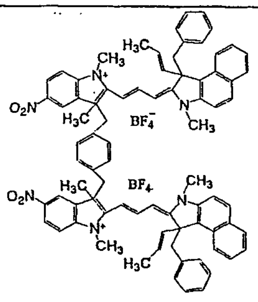 | (C−14) 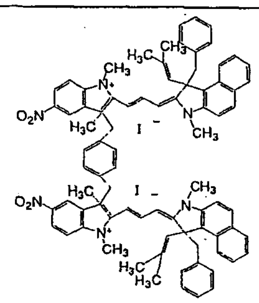 |
| (C−15) 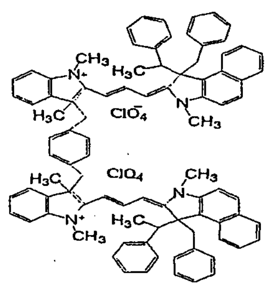 | (C−16) 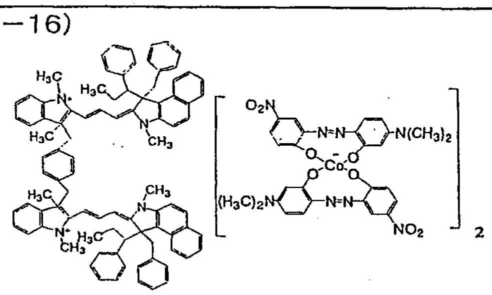 |
| (C−17) 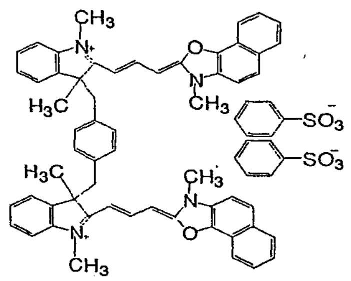 | (C−18) 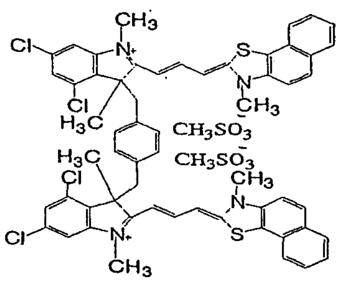 |
| (C−19) 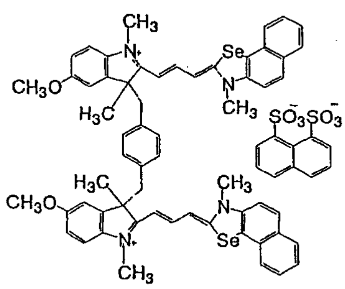 | (C−20) 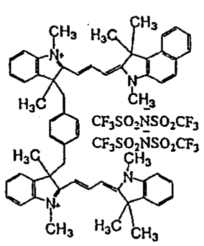 |

The production method of the trimethine dimer compound represented by the following general formula (I) of the present invention is not particularly limited. However, the trimethine dimer compound can be obtained, for example, by condensing an indolenine dimer compound represented by the general formula (XII) with a compound represented by the following general formula (XIII) in the presence of a fatty acid salt using a dewaterable organic acid,

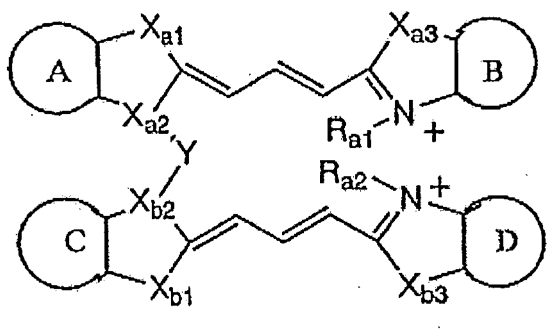

$b(Z^{a-})$ (I)

wherein, in the formula, A, B, C and D each independently represent a benzene ring which may have a substituent or a naphthalene ring which may have a substituent; $X_{a1}$, $X_{b1}$, $X_{a3}$ and $X_{b3}$ each independently represent an oxygen atom, a sulfur atom, a selenium atom, a methylene group which may have a substituent, a cycloalkane-1,1-diyl group having 3 to 6 carbon atoms which may have a substituent or an imino group which may have a substituent; $X_{a2}$ and $X_{b2}$ each independently represent an imino group or a methylene group which may have a substituent; $R_{a1}$ and $R_{a2}$ each independently represent an alkyl group which may have a substitutent or a benzyl group which may have a substitutent; in b ($Z^{a-}$), $Z^-$ represents an anion; a and b represent an integer of 1 to 2, with the proviso that a × b = 2; and Y represents the following general formula (II), (III) or (IV), with the proviso that, when both $X_{a2}$ and $X_{b2}$ are imino groups, one of $X_{a1}$, $X_{b1}$, $X_{a3}$ and $X_{b3}$ is necessarily a 1-alkyl-1-benzylmethylene group which may have a substituent, a 1,1-dibenzylmethylene group which may have a substituent or a cycloalkane-1,1-diyl group having 3 to 6 carbon atoms which may have a substituent,

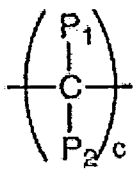

(II)

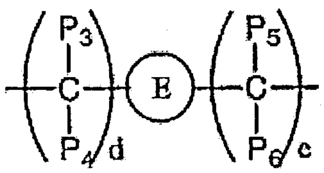

(III)

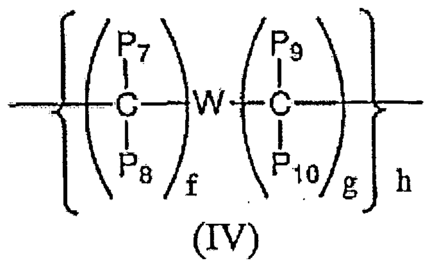

(IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring,

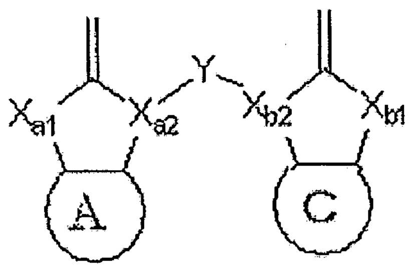

(XII)

wherein, in the formula, A, C, $X_{a1}$, $X_{b1}$, $X_{a2}$, $X_{b2}$ and Y represent the same as those in the above (I),

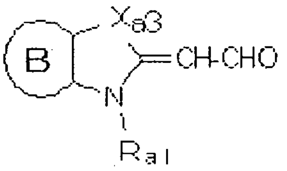 and 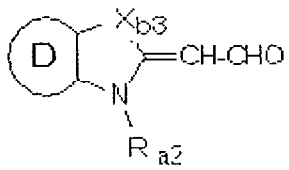 (XIII)

wherein, in the formula, B, D, $X_{a3}$, $X_{b3}$, $R_{a1}$ and $R_{a2}$ represent the same as those in the above formula (I).

In the above condensation reaction, examples of the fatty acid salt include, for example, sodium acetate, potassium acetate, sodium propionate, potassium propionate and the like.

Such a fatty acid salt is usually used in about 0.1 to 5 moles and preferably about 0.5 to 2 moles per 1 mole of the compound represented by the general formula (XII).

Examples of the dewaterable organic acid include acetic anhydride, propionic anhydride, butyric anhydride, γ-butyllactone and the like.

Such a dewaterable organic acid is usually used in about 10 to 100 moles and preferably in about 20 to 50 moles per 1 mole of the compound represented by the general formula (XIII).

As the proportion of the compound represented by the general formula (XII) and the compound represented by the general formula (XIII) used, the latter compound is usually used in about 1 to 1.5 moles and preferably in about 1 to 1.1 moles based on 1 mole of the former compound.

The above reaction is usually suitably progressed at about 10 to 150 degrees centigrade and preferably at room temperature to 120 degrees centigrade, and generally completed in about several minutes to 3 hours.

After the reaction, a desired product can be easily isolated. from the reaction mixture, for example, by introducing water or a poor solvent such as methanol, ethanol, n-propanol, iso-propanol, n-butanol and the like thereinto, or discharging it into water or a poor solvent such as methanol, ethanol, n-propanol, iso-propanol, n-butanol and the like.

Synthesis of the indolenine dimer compound represented by the aforementioned general formula (XII) that is an intermediate of the trimethine compound dimer of the present invention is not particularly limited, but it can be obtained by reacting a compound represented by the following general formula (XIV) with an indoline compound represented by the following general formula (XV) in an appropriate solvent,

$$\alpha\text{-Y-}\alpha \qquad \text{(XIV)}$$

wherein, in the formula, α represents a halogen atom, a toluenesulfonyloxy group or a methanesulfonyloxy group; and Y represents the same as those in the formula (I),

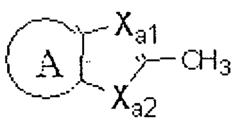 and 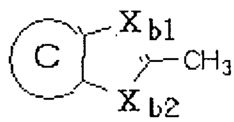 (XV)

wherein, in the formula, A, C, $X_{a1}$, $X_{a2}$, $X_{b1}$ and $X_{b2}$ represent the same as those in the above formula (I).

The amount of the indoline compound in the general formula (XV) to be used is from 2 to 10 equivalent and preferably from 2 to 5equivalent, based on the compound represented by the general formula (XIV).

As the solvent used in the reaction, there can be used aromatic solvents such as benzene, toluene, xylene and the like; aprotic solvents such as DMF, DMI, DMAC (DMF (N,N-dimethylformamide), DMAC (N,N-dimethylacetamide), DMSO (dimethylsulfoxide), DMI (1,3-dimethyl-2-imidazolidinone)) and the like; and alcohol solvents such as methanol, ethanol, n-propanol, iso-propanol, n-octanol and the like. Particularly preferably used is toluene.

Furthermore, organic bases such as DBU (1,8-diazabicyclo-5.4.0-undeca-7-ene), triethylamine and the like or inorganic bases such as potassium carbonate, potassium iodide, sodium carbonate and the like may also be added. The amount of the solvent in use is from 1 to 100-folds and preferably from 5 to 20-fold based on the total weight of the compound of the general formula (XV).

The reaction temperature is from 0 degree centigrade to the reflux temperature of the solvent and preferably from 20 degrees centigrade to the reflux temperature of the solvent.

The reaction time is preferably from 30 minutes to 72 hours and further preferably from 2 to 24 hours.

As the post treatment, the reaction system is made alkaline with sodium hydroxide, potassium hydroxide or

the like and then the precipitate is filtered off or the solvent is removed, whereby a desired product is obtained. Furthermore, this product is further recrystallized or purified by column chromatography, whereby it is possible to obtain a desired product of much higher purity.

According to the same method as in the production method of the compound in the above formula (I), the compound of the formula (V) is produced. Herein, in the formulae (XII) and (XV), A, C and Y represent the same as those in the above formula (I); $X_{a1}$, $X_{b1}$, $X_{a2}$ and $X_{b2}$ each are $X_{c1}$, $X_{d1}$, $X_{c2}$ and $X_{d2}$; and $X_{c1}$, $X_{d1}$, $X_{c2}$ and $X_{d2}$ represent the same as those in the above formula (V). In the formula (XIII), B, D, $R_{a1}$ and $R_{a2}$ represent the same as those in the above formula (I); $X_{a3}$ and $X_{b3}$ each represent $X_{c3}$ and $X_{d3}$; and $X_{c1}$, $X_{d1}$, $X_{c2}$, $X_{d2}$, $X_{c3}$ and $X_{d3}$ represent the same as those in the above formula (V).

According to the same method as in the production method of the compound in the above formula (I), the compound of the formula (VI) is produced. Herein, in the formulae (XII) and (XV), A, C and Y represent the same as those in the above formula (I); $X_{a1}$ is $X_1$; $X_{b1}$ is $X_3$; $X_{a2}$ is N; $X_{b2}$ is N; in the formula (XIII), B and D represent the same as those in the above formula (I); $X_{a3}$ is $X_2$; $X_{b3}$ is $X_4$; $R_{a1}$ is $R_1$; $R_{a2}$ is $R_2$; and $X_1$, $X_2$, $X_3$, $X_4$, $R_1$ and $R_2$ represent the same as those described in the above formula (VI).

According to the same method as in the production method of the compound in the above formula (I), the compound of the formula (IX) is produced. Herein, in the formulae (XII) and (XV), A, C and Y represent the same as those in the above formula (I) ; $X_{a1}$ is N-$R_{101}$; $X_{b1}$ is N-$R_{102}$; $X_{a2}$ is C-$R_{105}$; $X_{b2}$ is C-$R_{106}$; in the formula (XIII), B and D represent the same as those in the above formula (I), $X_{a3}$ is $X_{101}$; $X_{b3}$ is $X_{102}$; $R_{a1}$ is $R_{103}$; $R_{a2}$ is $R_{104}$; and $R_{101}$, $R_{102}$, $R_{105}$, $R_{106}$, $X_{101}$, $X_{102}$, $R_{103}$ and $R_{104}$ represent the same as those described in the above formula (IX).

A specific construction of the optical recording medium according to the present invention will be described below.

The optical recording medium refers to both an optical read only medium for exclusive use in reproducing which contains information recorded in advance and an optical recording medium capable of recording and reproducing information. However, herein, as an appropriate example, an optical recording medium capable of recording and reproducing information of the latter, particularly an optical recording medium having a recording layer and a reflective layer on a substrate, will be described. The optical recording medium of the present invention has a structure laminated as shown in Fig. 1. That is, on a transparent resin substrate 1 having lands and grooves, a recording layer 2, a reflective layer 3 and a protective layer (or adhesive layer) 4 are formed, and a substrate 5 is further formed thereon depending on the situation. However, under or on the recording layer 2, other layers may be formed, or on the reflective layer 3, other layers may be formed. Herein, two disk-shaped substrates having a plate thickness of 0.6 mm, an outer diameter of 120 mmΦ and an inner diameter of 15 mmφ are laminated for the compatibility with the existing DVD.

Next, necessary properties and its constituent materials of each constituent layer of the recording medium of the present invention will'be explained.

1) Substrate

A material of the substrate may be basically one which is transparent at wavelengths of light for recording and light for reproducing. For example, a polymer material such as a polycarbonate resin, a vinyl chloride resin, an acrylic resin including polymethyl methacrylate, a polystyrene resin or an epoxy resin, or an inorganic material such as glass is used. An additive such as an ultraviolet absorber or the like may be added, which is transparent at wavelengths of light for recording and light for reproducing, into these substrate materials. These substrate materials may be molded into a disk-shaped substrate by an injection molding method or the like. The substrate may have pregrooves or prepits for indicating positions of recording, or prepits for some of read only information or the like on the surface of the substrate. These pregrooves or prepits are usually obtained by a method including transcribing from a stamper original disk at the time of molding the substrate by an injection molding method or the like. Furthermore, they may be produced by a laser cutting method (prewrite) or a 2P (Photo Polymer) method.

A pitch of the groove of the substrate is from 0.7 μm to 1.0 μm, while a depth of the groove is from 100 nm to 200 nm and preferably from 140 nm to 185 nm. A width of the groove is from 0.25 μm to 0.40 μm and preferably from 0.30 μm to 0.35 μm. When the depth of the groove is less than 100 nm, it tends to be difficult t'o obtain the amplitude of the push-pull signal for tracking. When it exceeds 200 nm, the transcription process is not practical in terms of production at the time of injection molding. Furthermore, when the width of the groove is less than 0.25 μm, a cross talk tends to be deteriorated. When it exceeds 0.4 μm, the transcription process is not practical in terms of production at the time of injection molding. The shape of the groove is obtained from analysis on the diffracted light by an irradiation with a He-Cd laser or a profile such as AFM or the like.

2) Recording Layer

In the present invention, a recording layer is arranged on the substrate, but the recording layer of the present

invention contains the trimethine dimer compound represented by the general formula (I) having λmax present in the vicinity of 450 nm to 630 nm. The wavelengths of laser for recording and laser for reproducing selected from 520 nm to 690 nm need to have proper optical constants (The optical constant is represented by a complex refractive index (n + ki). In the formula, n and k are coefficients corresponding to a real part (n) and an imaginary part (k). Herein, n is a refractive index while k is an extinction coefficient.).

An organic dye in general has a property that the refractive index (n) and the extinction coefficient (k) greatly change to a wavelength λ. When n is smaller than 1.8, the reflectance and the signal modulation index necessary for reading a correct signal may not be obtained, and when k is more than 0.40, the reflectance is lowered so that a good reproduced signal may not be obtained and in addition, the signal is liable to change by light for reproducing; therefore, the recording layer having such k may not be practically suitable. In consideration of this property, the organic dye having a preferable optical constant at a desired laser wavelength should be selected to form the recording layer, whereby the medium having a high reflectance and a good sensitivity can be obtained.

The trimethine dimer compound represented by the general formula (I) used in the present invention has a higher absorption coefficient as compared to a conventional organic dye and can optionally select an absorption wavelength region by the choice of a substitutent. Therefore, the optical constant (n is not less than 1.8 and k is from 0.04 to 0.40, and preferably n is not less than 2.0 and k is from 0.04 to 0.20.) necessary for the recording layer in the aforementioned wavelength of the laser light is satisfied.

Furthermore, in the trimethine dimer compound represented by the general formula (I), two trimethine compounds having a specific structure are configured in a dimer structure, whereby decomposition by heat generated at the time of an irradiation with laser for recording is properly promoted. Due to this, it is possible to obtain an optical recording medium having excellent recording properties which is excellent in recording sensitivity even for recording at a 12x or higher speed as well as the standard recording speed, and in which the deterioration of jitter caused by thermal interference is suppressed to be sufficiently low.

In the recording layer of the present invention, one trimethine dimer compound represented by the general formula (I) is preferably used as a recording layer, but two or more kinds thereof may be mixed, or may be mixed with a dye other than the trimethine dimer compound of the present invention and used accordingly for the improvement of recording properties or the like.

The mixing ratio of the trimethine dimer compound is not particularly limited when two or more kinds of the trimethine dimer compounds represented by the general formula (I) are mixed prior to use. But, for the reasons as described above, it is preferable to mix such that the optical constant (n) is not less than 1.8 and preferably not less than 2.0, while k is from 0.04 to 0.40 and preferably from 0.04 to 0.20.

Furthermore, as the dye which may be mixed other than the trimethine dimer compound of the present invention, there can be exemplified, for example, a dye having an absorption maximum at wavelengths of 450 nm to 630 nm and having a high refractive index at wavelengths of 520 nm to 690 nm. Specific examples thereof include an azo-based dye, a squarylium-based dye, a naphthoquinone-based dye, an anthraquinone-based dye, a porphyrin-based dye, an azaporphyrin-based dye, a tetrapyraporphyrazine-based dye, an indophenol-based dye, a pyrylium-based dye, a thiopyrylium-based dye, an azulenium-based dye, a triphenylmethane-based dye, a xanthene-based dye, an indanthrene-based dye, an indigo-based dye, a thioindigo-based dye, a merocyanine-based dye, a thiazine-based dye, an acridine-based dye, an oxazine-based dye and the like. A plurality of such dyes may also be mixed. The.mixing ratio of these dyes is from about 0.1 to 30%.

Furthermore, when k is small at wavelengths of laser for recording and laser for reproducing selected from 520 nm to 690 nm of the trimethine dimer compound represented by the general formula (I), a light absorbing compound having an absorption maximum at wavelengths of 600 nm to 900 nm for the improvement of recording properties or the like, may be used. Specific examples of the light absorbing compound include an azo-based dye, a squarylium-based dye, a naphthoquinone-based dye, an anthraquinone-based dye, a porphyrin-based dye, an azaporphyrin-based dye, a tetrapyraporphyrazine-based dye, an indophenol-based dye, a pyrylium-based dye, a thiopyrylium-based dye, an azulenium-based dye, a triphenylmethane-based dye, a xanthene-based dye, an indanthrene-based dye, an indigo-based dye, a thioindigo-based dye, a merocyanine-based dye, a thiazine-based dye, an acridine-based dye, an oxazine-based dye, a phthalocyanine-based dye, a naphthalocyanine-based dye and the like. A plurality of such dyes may also be mixed. The mixing ratio of these dyes is from about 0.1 to 30%.

When forming the recording layer, if necessary, a quencher, a dye decomposition accelerator, an ultraviolet absorber, an adhesive, an endothermically decomposable compound and the like, can be used, or alternatively a compound having such an effect can also be introduced into the dye as a substituent of the trimethine dimer compound represented by the general formula (I).

Preferable specific examples of the quencher include metal complexes such as an acetylacetonate compound, bisdithiol compounds such as a bisdithio-α-diketone compound, a bisphenyldithiol compound and the like, a thiocatechol compound, a salicylaldehyde oxime compound, a thiobisphenolate compound and the like. In addition, an amine compound is also suitable.

Examples of the thermal decomposition accelerator include, for example, metallic compounds such as metallic anti-knocking agents, metallocene compounds, metal complexes of acetylacetonates and the like.

Additionally, if necessary, a binder, a leveling agent, an anti-foaming agent or the like can also be used together. Examples of the preferable binder include polyvinyl alcohol, polyvinyl pyrrolidone, nitrocellulose, cellulose acetate, ketone resins, acrylic resins, polystyrene resins, urethane resins, polyvinyl butyral, polycarbonates, polyolefins and the like.

When forming the recording layer on the substrate, a layer composed of an inorganic substance and a polymer may be formed on the substrate in order to improve the solvent resistance and the reflectance of the substrate as well as the recording sensitivity.

Examples of a method for forming the recording layer include, for example, coating methods such as a spin coating method, a spraying method, a casting method, an immersion method and the like, a sputtering method, a chemical vapor deposition method, a vacuum vapor deposition method and the like, but the spin coating method is preferable because of being simple and easy.

In the case that a coating method such as the spin coating method or the like is used, there can be used a coating solution prepared by dissolving or dispersing the trimethine dimer compound represented by the general formula (I) in a solvent such that the content thereof may be from 1 to 40 weight % and preferably from 3 to 30 weight %. In this case, it is preferable to select a solvent which does not damage the substrate. Specific examples of the solvent include an alcohol solvent (including alkoxyalcohol solvents such as ketoalcohol solvents, ethylene glycol monoalkyl ether solvents and the like), a ketone solvent, an ester solvent, an ether solvent, an aromatic solvent, a halogenated alkyl solvent and the like.

Of these solvents, an alcohol solvent is particularly preferable. Of alcohol solvents, an alkoxyalcohol solvent, a ketoalcohol solvent and the like are preferable. It is preferable that the alkoxyalcohol solvent has 1 to 4 carbon atoms in the alkoxy part, 1 to 5 carbon atoms in the alcohol part and further preferably 2 to 5 carbon atoms. The number of total carbon atoms is preferably 3 to 7. Specific examples thereof include ethylene glycol monoalkyl ether (cellosolve) such as ethylene glycol monomethyl ether (methyl cellosolve), ethylene glycol monoethyl ether (also referred to as ethyl cellosolve, ethoxyethanol), butyl cellosolve, 2-isopropoxy-1-ethanol or the like, 1-methoxy-2-propanol, 1-methoxy-2-butanol, 3-methoxy-1-butanol, 4-methoxy-1-butanol, 1-ethoxy-2-propanol and the like. Examples of ketoalcohol solvents include diacetone alcohol and the like. In addition, fluorinated alcohols such as 2,2,3,3-tetrafluoropropanol and the like can also be used.

Furthermore, a coating solution may properly contain a binder, a dispersant, a stabilizer and the like.

In addition, as required, the dye in the recording layer can be dispersed in a thin polymer film or the like prior to use.

Further, when a solvent which does not damage the substrate cannot be selected, a sputtering method, a chemical vapor deposition method, a vacuum vapor deposition method or the like is effective.

The film thickness of the dye layer is not particularly limited, but the film thickness on the guide groove (groove) of the substrate is preferably in the range of 30 nm to 150 nm, while the film thickness in the inter-guide groove (land) of the substrate is preferably in the range of 10 nm to 80 nm. When the film thickness of the groove exceeds 150 nm, the shortest pit is collapsed; therefore, such a thickness is not preferable. Furthermore, when the film thickness is thinner than 30 nm, good recording sensitivity or recording modulation index are not obtained. It is particularly preferable that the film thickness on the land is extremely thin. To control the film thickness of the recording layer, a plurality of the aforementioned organic solvents can be mixed prior to use.

3) Reflective Layer

On the recording layer, a reflective layer having a thickness of 50 nm to 300 nm is preferably formed. As a material of the reflective layer, one which exhibits sufficiently high reflectance at a wavelength of light for reproducing, for example, metals such as Au, A1, Ag, Cu, Ti, Cr, Ni, Pt, Ta and Pd can be used alone or as an alloy. Of these, Au, Al and Ag are suitable as a material of the reflective layer because of their high reflectance. In addition to these metals, the following materials may also be contained. Examples thereof include metals and metaloids such as Mg, Se, Hf, V, Nb, Ru, W, Mn, Re, Fe, Co, Rh, Ir, Zn, Cd, Ga, In, Si, Ge, Te, Pb, Po, Sn, Bi and the like. Furthermore, materials composed essentially of Au are suitable because it is possible to easily obtain a reflective layer having a high reflectance. Herein, "composed essentially of" refers to materials having the content of not less than 50%. A multilayer film may be formed by laminating a thin non-metal film having a low refractive index and a thin non-metal film having a high refractive index alternately, and can be used as the reflective layer.

Examples of a method for forming a reflective layer include a sputtering method, an ion plating method, a chemical vapor deposition method, a vacuum vapor deposition method and the like. Further, on the substrate or under the reflective layer, a known inorganic or organic intermediate layer or adhesive layer can be formed in order to improve a reflectance, recording properties, adhesion and the like.

The reflectance is not particularly limited as far as signals can be reproduced, but it is preferably not less than 30% but less than 65%, and further preferably not less than 45% but less than 60%.

4) Protective Layer

A material of a protective layer to be formed on the reflective layer is not particularly limited as long as the material protects the reflective layer from an external force. Examples of an organic material include a thermoplastic resin, a thermosetting resin, an electron beam curable resin, an ultraviolet curable resin and the like. Meanwhile, examples of an inorganic material include $SiO_2$ $Si_3N_4$, $MgF_2$, $SnO_2$ and the like. The protective layer can be formed by dissolving the thermoplastic resin, the thermosetting resin or the like in an appropriate solvent to prepare a coating solution, and applying and drying the coating solution. The protective layer can be formed by using the ultraviolet curable resin as it is or dissolving it in an appropriate solvent to prepare a coating solution and then applying the coating solution and irradiating the applied coating solution with ultraviolet radiation to cure it. As the ultraviolet curable resin, for example, acrylate resins such as urethane acrylate, epoxy acrylate, polyester acrylate or the like can be used. These materials may be used alone or in admixture of two or more and may be formed into a multilayer film as well as a single layer.
As a method for forming the protective layer, a coating method such as a spin coating method or a casting method or a method such as a sputtering method or a chemical vapor deposition method can be used, as in the case of the recording layer. Of these, a spin coating method is preferred.
The film thickness of the protective layer is generally in the range of 0.1μm to 100 μm. In the present invention, it is from 3μm to 30 μm, and more preferably from 5μm to 20 μm.
Further, a label or the like may be printed on the protective layer. In addition, means for laminating a protective sheet or a substrate onto the surface of the reflective layer or means for laminating one optical recording medium to the other optical recording medium such that the surfaces of reflective layers are opposed to each other may be used. Furthermore, a mirror surface of the substrate may be coated with an ultraviolet curable resin, a thin inorganic film or the like so as to protect the surface and to prevent dust from sticking to the surface.
The laser having a wavelength of 520 nm to 690 nm mentioned in the present invention is not particularly limited, and examples of such a laser include a dye laser capable of selecting the wavelength in the wide range of visible light, a helium neon laser having a wavelength of 633 nm, a high-output semiconductor laser having a wavelength of about 680, 650 or 635 nm, a high-frequency conversion YAG laser having a wavelength of 532 nm and the like. In the present invention, the high-density record and reproduction is possible at one wavelength or a plurality of wavelengths selected from them.

EXAMPLES

Examples of the present invention are now illustrated below. However, the present invention is not restricted to these Examples.

Synthesis Example 1

Synthesis of Indolenine Compound (A)

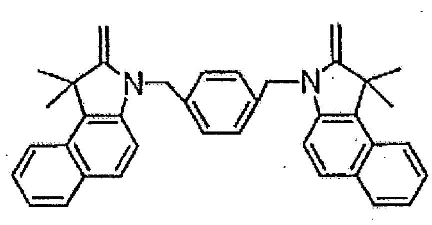

Indolenine Compound (A)

Under a nitrogen atmosphere, 115.1 g of a compound represented by the following structural formula (1) and 69.1 g of α,α'-dibromo-p-xylene were added to 500 mL of toluene, and the mixture was stirred under reflux for 19 hours. After cooling, the precipitate was leached and washed with toluene, and then the leachate was dissolved in 500 mL of methanol for filtering out the insoluble matter. 23.1 g of sodium hydroxide was added to the methanol filtrate and the mixture was stirred at room temperature for 30 minutes, and then the precipitate was leached. The leachate was washed with water, washed with toluene and then vacuum-dried to obtain 113.3 g of an indolenine compound (A) as a white

powder decomposed at 236 degrees centigrade.

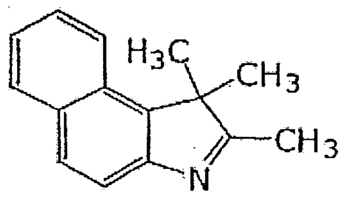

①

The elemental analysis value and mass spectrometric value of this compound were as follows: Elemental analysis value ($C_{38}H_{36}N_2$) MW = 520.71

| | C | H | N |
|---|---|---|---|
| Calculation value (%) | 87.35 | 6.97 | 5.38 |
| Measurement value (%) | 87.26 | 6.89 | 5.43 |

MS (m/e): 520 ($M^+$)

Synthesis Example 2

Synthesis of Indolenine Compound (B)

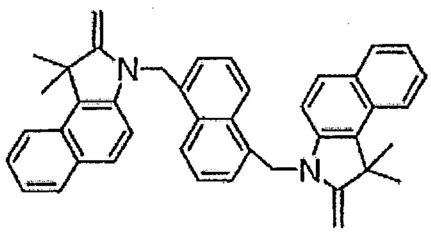

Indolenine Compound (B)

Under a nitrogen atmosphere, 115.1 g of a compound represented by the following structural formula (1) and 82.2 g of 1,5-bis-bromomethylnaphthalene were added to 500 mL of toluene, and the mixture was stirred under reflux for 19 hours. After cooling, the precipitate was leached and washed with toluene, and then the leachate was dissolved in 500 mL of methanol for filtering out the insoluble matter. 33 g of sodium hydroxide was added to the methanol filtrate and the mixture was stirred at room temperature for 30 minutes, and then the precipitate was leached. The leachate was washed with water, washed with toluene and then vacuum-dried to obtain 93 g (yield: 65%) of an indolenine compound (B) as a white powder having a melting point of from 117 to 120 degrees centigrade.

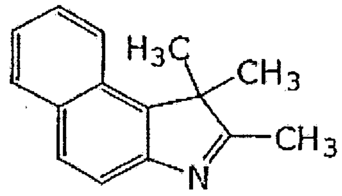

①

The elemental analysis value and mass spectrometric value of this compound were as follows: Elemental analysis value ($C_{42}H_{38}N_2$) :MW = 570.30

| | C | H | N |
|---|---|---|---|
| Calculation value (%) | 88.38 | 6.71 | 4.91 |
| Measurement value (%) | 88.35 | 6.67 | 4.94 |

MS (m/e): 570 ($M^+$)

Example 1

Production of Trimethine Dimer Compound (Exemplified Compound (A-11) in Table 1)

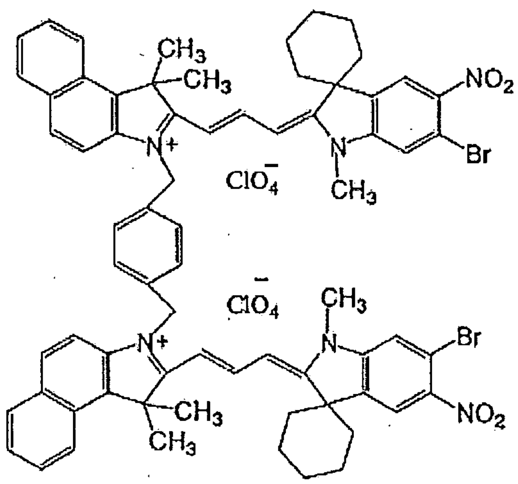

Exemplified Compound (A-11)

Under a nitrogen atmosphere, 5.2 g of the indolenine compound (A) synthesized in Synthesis Example 1 and 7.3 g of a compound represented by the following structural formula (2) were added to 50 mL of acetic anhydride. The mixture was stirred at room temperature for 10 minutes and then 2 g of methanesulfonic acid was added thereto, and stirred at 83 to 86 degrees centigrade for 2.0 hours. The reaction solution was cooled down, and 100 mL of methanol was added dropwise thereto and stirred under reflux for 1 hour. After cooling, methanol was concentrated under a reduced pressure, 150 mL of methanol was added to the residue, 3.16 g of an aqueous solution of perchloric acid (70%) was added dropwise thereto, and the resulting mixture was stirred at room temperature for 1 hour. The precipitate was leached, washed with methanol and dried to obtain 13.5 g (yield: 95.3%) of the exemplified compound (A-11) in Table 1 as a red-purple crystal.

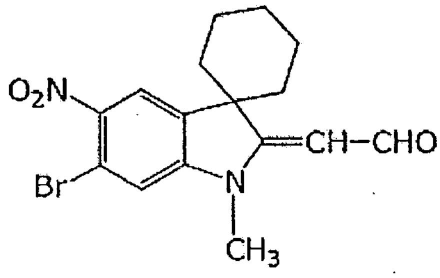

②

The elemental analysis value, the absorption maximum wavelength (λmax) in an acetone solution and the gram absorption coefficient (εg) of this compound were as follows:
Elemental analysis value ($C_{70}H_{68}Br_2Cl_2N_6O_{12}$) :MW = 1416.04

| | C | H | N |
|---|---|---|---|
| Calculation value (%) | 59.37 | 4.84 | 5.93 |
| Measurement value (%) | 59.32 | 4.81 | 5.97 |

λmax: 577.0 nm
εg: 1.12 × $10^5$ mL/g·cm

Example 2

Synthesis of Trimethine Dimer Compound (Exemplified Compound (A-12) in Table 1)

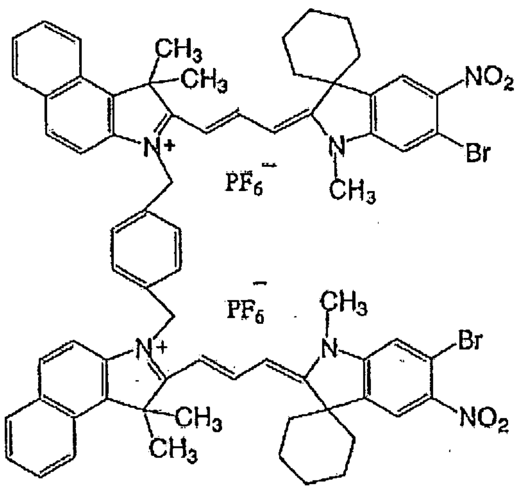

Exemplified Compound (A-12)

7.1 g of the exemplified compound (A-11) in Table 1 synthesized in Example 1 was added to 120 mL of DMF. The mixture was stirred and completely dissolved at room temperature for 10 minutes. 22 g of an aqueous solution of NaOH (10%) was added thereto and stirred at room temperature for 1 hour.

The reaction mixture was discharged into 300 mL of water and stirred for 10 minutes, the precipitate was

leached and washed with water, the insoluble matter was filtered out in 200 mL of acetone, and then acetone was concentrated. 150 mL of DMF was added to the concentrated residue, and the resultant was stirred and dissolved at room temperature for 30 minutes. Then, an aqueous solution containing 1.85g of $NaPF_6$ dissolved in 10 mL of water was added thereto, and the mixture was stirred at 40 to 45 degrees centigrade for 1 hour. 120 mL of methanol was added to the reaction mixture and stirred for 30 minutes, and the precipitate was leached, washed with water and dried to obtain 6.3 g (yield: 83.4%) of the exemplified compound (A-12) in Table 1 as a red-purple crystal.

The elemental analysis value, the absorption maximum wavelength (λmax) in an acetone solution and the gram absorption coefficient (εg) of this compound were as follows:
Elemental analysis value ($C_{10}H_{68}Br_2F_{12}N_6O_4P_2$) : MW = 1507.06

| | C | H | N |
|---|---|---|---|
| Calculation value (%) | 55.79 | 4.55 | 5.58 |
| Measurement value (%) | 55.75 | 4.52 | 5.62 |

λmax: 578.0 nm
εg: $9.20 \times 10^4$ mL/g·cm

Example 3

Synthesis of Trimethine Dimer Compound (Exemplified Compound (A-14) in Table 1)

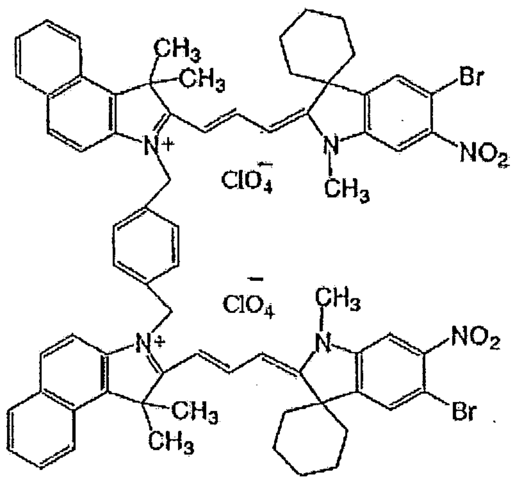

Exemplified Compound (A-14)

The same operation as in Example 1 was conducted, except that 7.3 g of a compound represented by the following structural formula (3) was used instead of 7.3 g of the compound represented by the structural formula (2) in Example 1 to obtain 10.3 g (yield: 73.1%) of the exemplified compound (A-14) in Table 1 as a red-purple crystal.

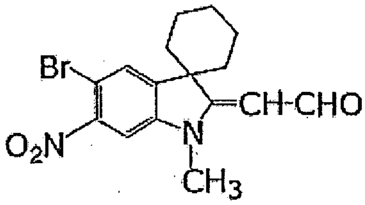

③

The elemental analysis value, the absorption maximum wavelength (λmax) in an acetone solution and the gram absorption coefficient (εg) of this compound were as follows:
Elemental analysis value ($C_{70}H_{68}Br_2Cl_2N_6O_{12}$) :MW= 1416.04

| | C | H | N |
|---|---|---|---|
| Calculation value (%') | 59.37 | 4.84 | 5.93 |
| Measurement value (%) | 59.41 | 4.87 | 5.90 |

λmax: 569.0 nm
εg: $8.94 \times 10^4$ mL/g·cm

Example 4

Synthesis of Trimethine Dimer Compound (Exemplified Compound (A-17) in Table 1)

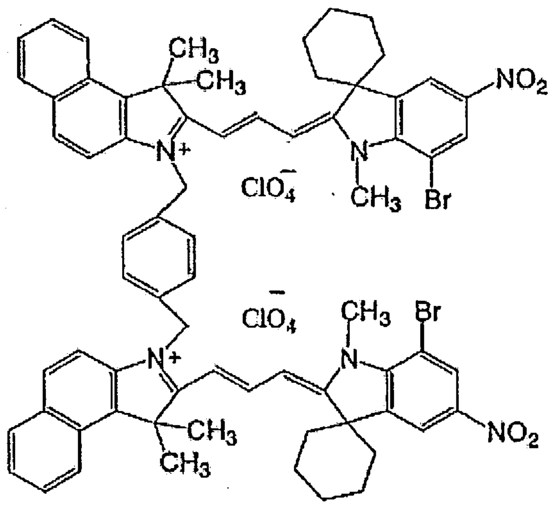

Exemplified Compound (A-17)

The same operation as in Example 1 was conducted, except that 7.3 g of a compound represented by the following structural formula (4) was used instead of 7.3 g of the compound represented by the structural formula (2) in Example 1 to obtain 13.0 g (yield: 91.5%) of the exemplified compound (A-17) in Table 1 as a red-purple crystal.

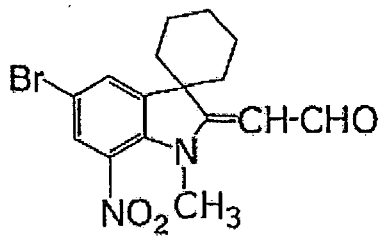

④

The elemental analysis value, the absorption maximum wavelength (λmax) in an acetone solution and the gram absorption coefficient (εg) of this compound were as follows:
Elemental analysis value ($C_{70}H_{68}Br_2N_6O_{12}$) :MW = 1416.04

| | C | H | N |
|---|---|---|---|
| Calculation value (%) | 59.37 | 4.84 | 5.93 |
| Measurement value (%) | 59.35 | 4.80 | 5.97 |

λmax: 573.5 nm
εg: $1.19 \times 10^5$ mL/g·cm

Example 5

Synthesis of Trimethine Dimer Compound (Exemplified Compound (A-19) in Table 1)

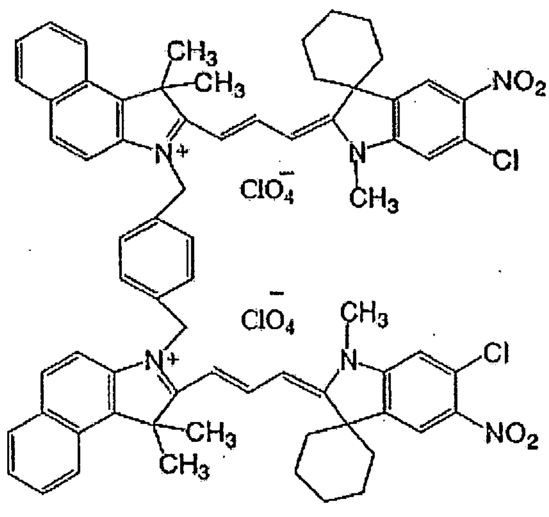

Exemplified Compound (A-19)

The same operation as in Example 1 was conducted, except that 6.4 g of a compound represented by the following structural formula (5) was used instead of 7.3 g of the compound represented by the structural formula (2) in Example 1 to obtain 11.5 g (yield: 86.7%) of the exemplified compound (A-19) in Table 1 as a red-purple crystal.

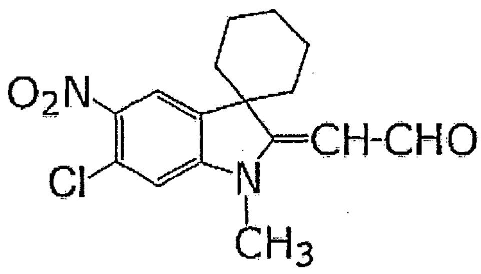

⑤

The elemental analysis value, the absorption maximum wavelength (λmax) in an acetone solution and the gram absorption coefficient (εg) of this compound were as follows:
Elemental analysis value ($C_{70}H_{68}Cl_4N_6O_{12}$):MW = 1327.13

| | C | H | N |
|---|---|---|---|
| Calculation value (%) | 63.35 | 5.16 | 6.33 |
| Measurement value (%) | 63.38 | 5.20 | 6.29 |

λmax: 577.5 nm
εg: 1.19 × $10^5$ mL/g·cm

Example 6

Synthesis of Trimethine Dimer Compound (Exemplified Compound (A-20) in Table 1)

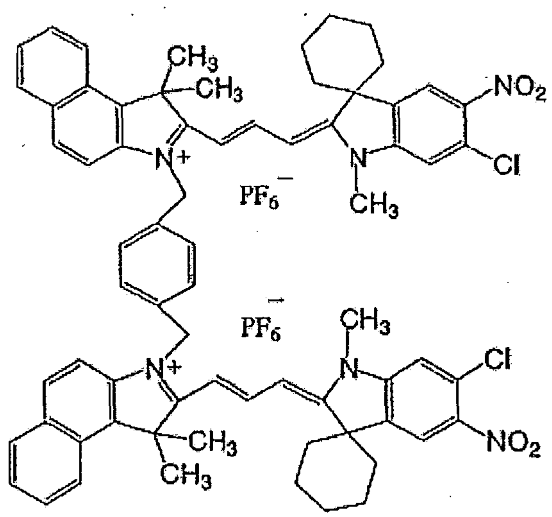

Exemplified Compound (A-20)

The same operation as in Example 2 was conducted, except that 6.6 g of the exemplified compound (A-19) in Table 1 synthesized in Example 5 was used instead of 7.1 g of the exemplified compound (A-11) in Table 1 synthesized in Example 1 used in Example 2 to obtain 6.6 g (yield: 93.6%) of the exemplified compound (A-20) in Table 1 as a red-purple crystal.
The elemental analysis value, the absorption maximum wavelength (λmax) in an acetone solution and the gram absorption coefficient (εg) of this compound were as follows:

Elemental analysis value ($C_{70}H_{68}Cl_2F_{12}N_6O_4P_2$): MW = 1418.16

| | C | H | N |
|---|---|---|---|
| Calculation value (%) | 59.28 | 4.83 | 5.93 |
| Measurement value (%) | 59.24 | 4.80 | 5.97 |

λmax: 577.5 nm
εg: $1.03 \times 10^5$ mL/g·cm

Example 7

Synthesis of Trimethine Dimer Compound (Exemplified Compound (A-21) in Table 1)

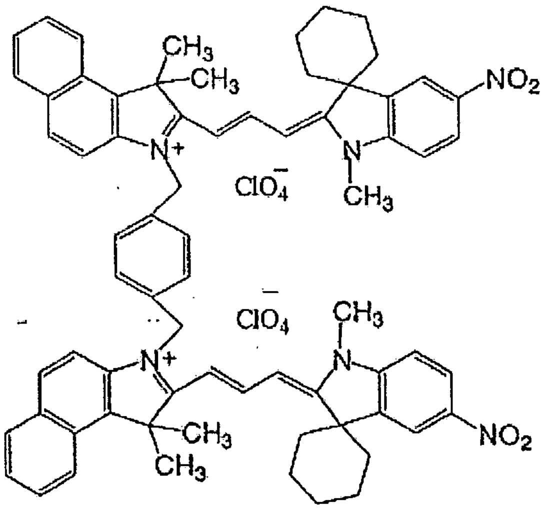

Exemplified Compound (A-21)

The same operation as in Example 6 was conducted, except that 5. 7 g of a compound represented by the following structural formula (6) was used instead of 7.3 g of the compound represented by the structural formula (2) in Example 1 to obtain 11.6 g (yield: 92.7%) of the exemplified compound (A-21) in Table 1 as a red-purple crystal.

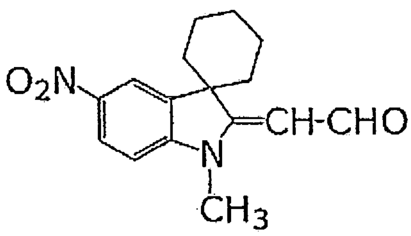

⑥

The elemental analysis value, the absorption maximum wavelength (λmax) in an acetone solution and the gram absorption coefficient (εg) of this compound were as follows:
Elemental analysis value ($C_{70}H_{70}Cl_2N_6O_{12}$) :MW = 1258.24

| | C | H | N |
|---|---|---|---|
| Calculation value (%) | 66.82 | 5.61 | 6.68 |
| Measurement value (%) | 66.79 | 5.59 | 6.70 |

λmax: 583.5 nm
εg: 1.45 × $10^5$ mL/g·cm

Example 8

Synthesis of Trimethine Dimer Compound (Exemplified Compound (A-22) in Table 1)

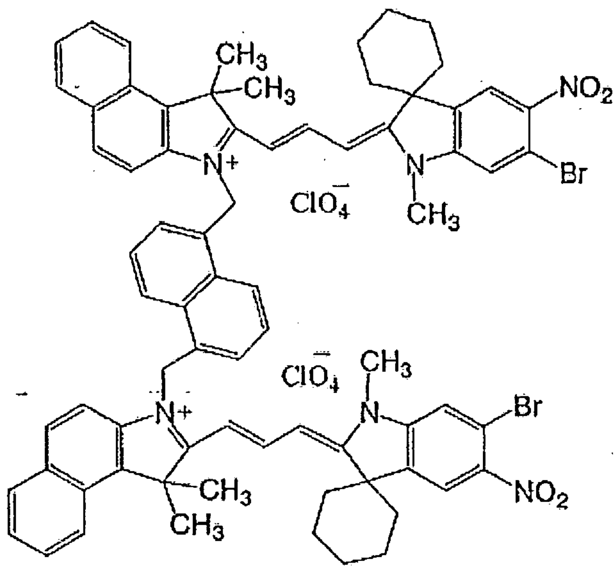

Exemplified Compound (A-22)

The same operation as in Example 6 was conducted, except that 5.7 g of the indolenine compound (B) synthesized in Synthesis Example 2 was used instead of 5.2 g of the indolenine compound (A) synthesized in Synthesis Example 1 used in Example 1, and 7.3 g of a compound represented by the following structural formula (7) was used instead of 7.3 g of the compound represented by the structural formula (2) in Example 1 to obtain 12.2 g (yield: 73.0%) of the exemplified compound (A-22) in Table 1 as a red-purple crystal.

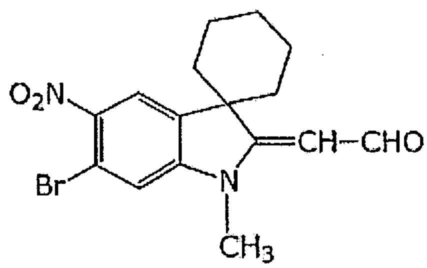

⑦

The elemental analysis value, the absorption maximum wavelength (λmax) in an acetone solution and the

gram absorption coefficient (εg) of this compound were as follows:
Elemental analysis value ($C_{74}H_{70}Br_2Cl_2N_6O_{12}$) :MW = 1466.09

| | C | H | N |
|---|---|---|---|
| Calculation value (%) | 60.62 | 4.81 | 5.73 |
| Measurement value (%) | 60.58 | 4.79 | 5.75 |

λmax: 575.5 nm
εg: $9.70 \times 10^4$ mL/g·cm

Example 9

Synthesis of Trimethine Dimer Compound (Exemplified Compound (A-40) in Table 1)

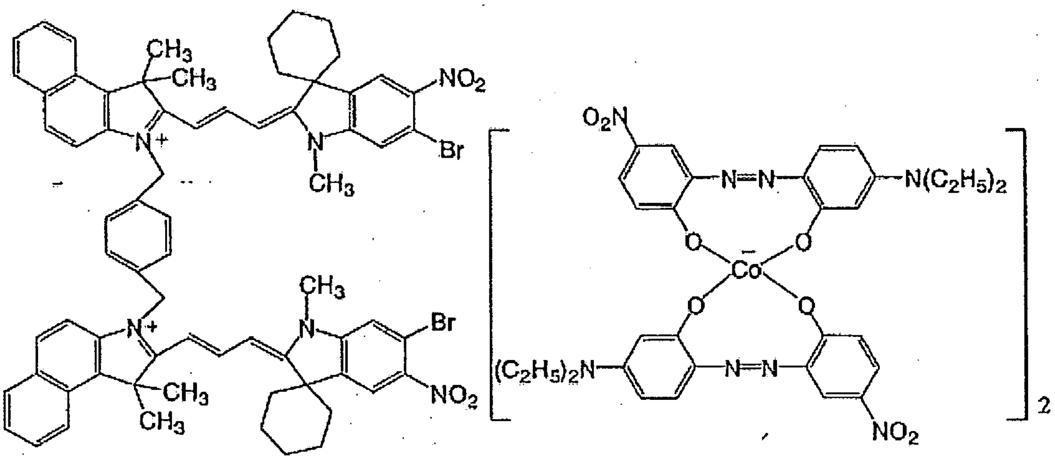

Exemplified Compound (A-40)

1.98 g of the exemplified compound (A-11) in Table 1 produced in Example 1 and 2.0 g of a compound represented by the following structural formula (8) were added to 60 mL of ethanol. The mixture was stirred under reflux for 1 hour and cooled down to room temperature, and then the precipitate was leached, washed with ethanol and dried to obtain 3.3 g (yield: 88%) of the exemplified compound (A-40) in Table 1 as a purple crystal.
The elemental analysis value, the absorption maximum wavelength (λmax) in an acetone solution and the gram absorption coefficient (εg) of this compound were as follows:

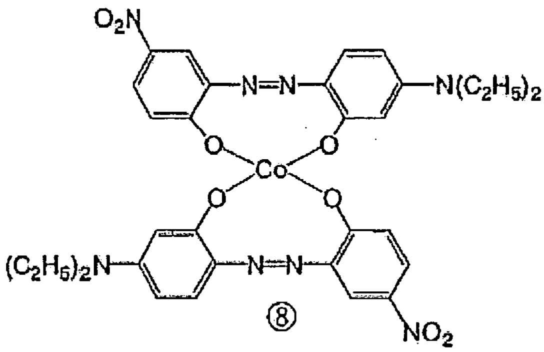

⑧

Elemental analysis value ($C_{134}H_{132}Br_2Co_2N_{22}O_{20}$): MW = 2648.29

| | C | H | N |
|---|---|---|---|
| Calculation value (%) | 60.77 | 5.02 | 11.64 |
| Measurement value (%) | 60.73 | 4.97 | 11.67 |

λmax: 576.0 nm
εg: 9.48 × $10^4$ mL/g·cm

Example 10

Synthesis of Trimethine Dimer Compound (Exemplified Compound (A-15) in Table 1)

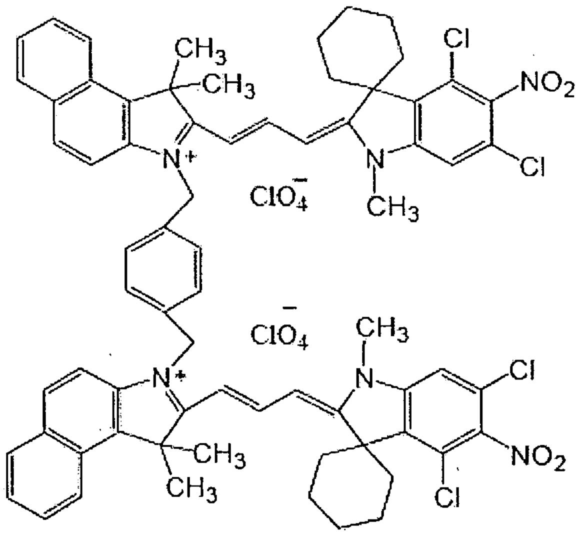

Exemplified Compound (A-15)

The same operation as in Example 1 was conducted, except that 7.1 g of a compound represented by the following structural formula (6) was used instead of 7.3 g of the compound represented by the structural formula (2) in Example 1 to obtain 12.7 g (yield: 91.0%) of the exemplified compound (A-15) in Table 1 as a red-purple crystal.

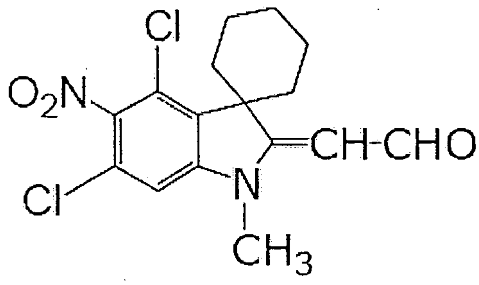

⑨

The elemental analysis value, the absorption maximum wavelength (λmax) in an acetone solution and the gram absorption coefficient (εg) of this compound were as follows:

Elemental analysis value ($C_{70}H_{66}Cl_6N_6O_{12}$) :MW = 1396.02

| | C | H | N |
|---|---|---|---|
| Calculation value (%) | 60.22 | 4.77 | 6.02 |
| Measurement value (%) | 60.17 | 4.75 | 6.06 |

λmax: 573.5 nm
εg: 9.80 × $10^4$ mL/g·cm

Example 11

Synthesis of Trimethine Dimer Compound (Exemplified Compound (A-92) in Table 1)

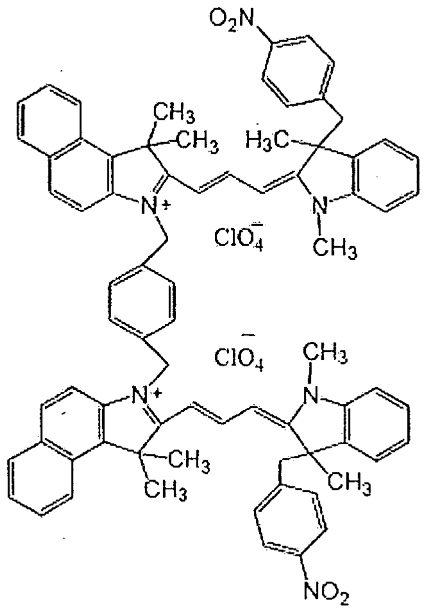

Exemplified Compound (A-92)

The same operation as in Example 1 was conducted, except that 6. 5 g of a compound represented by the following structural formula (10) was used instead of 7.3 g of the compound represented by the structural formula (2) in Example 1 to obtain 11.0 g (yield: 82.7%) of the exemplified compound (A-92) in Table 1 as a red-purple crystal.

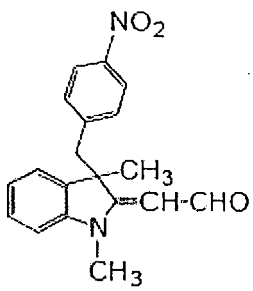

⑩

The elemental analysis value, the absorption maximum wavelength (λmax) in an acetone solution and the gram absorption coefficient (εg) of this compound were as follows:
Elemental analysis value ($C_{76}H_{70}Cl_2N_6O_{12}$) : MW = 1330.31

| | C | H | N |
|---|---|---|---|
| Calculation value (%) | 68.62 | 5.30 | 6.32 |
| Measurement value (%) | 68.58 | 5.27 | 6.35 |

λmax: 575.0 nm
εg: $1.26 \times 10^5$ mL/g·cm

Example 12

Synthesis of Trimethine Dimer Compound (Exemplified Compound (A-93) in Table 1)

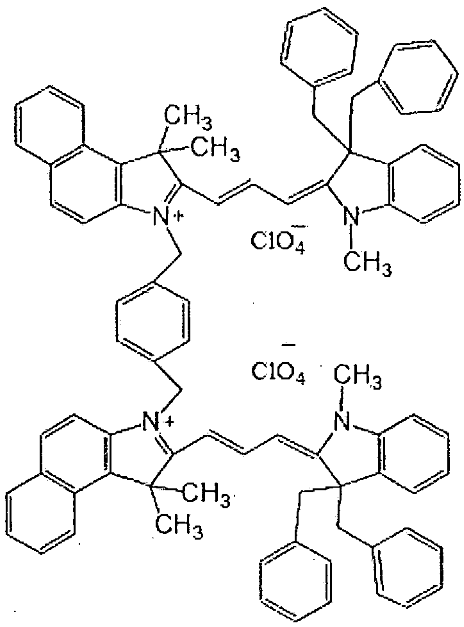

Exemplified Compound (A-93)

The same operation as in Example 1 was conducted, except that 7. 1 g of a compound represented by the following structural formula (11) was used instead of 7.3 g of the compound represented by the structural formula (2) in Example 1 to obtain 12.7 g (yield: 91.2%) of the exemplified compound (A-93) in Table 1 as a red-purple crystal.

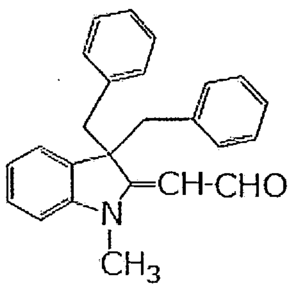

⑪

The elemental analysis value, the absorption maximum wavelength (λmax) in an acetone solution and the gram absorption coefficient (εg) of this compound were as follows:
Elemental analysis value ($C_{88}H_{80}Cl_2N_4O_8$) :MW = 1392.50

| | C | H | N |
|---|---|---|---|
| Calculation value (%) | 75.90 | 5.79 | 4.02 |
| Measurement value (%) | 75.86 | 5.76 | 4.06 |

λmax: 578.5 nm
εg: $1.29 \times 10^5$ mL/g·cm

Example 13

Synthesis of Trimethine Dimer Compound (Exemplified Compound (A-98) in Table 1)

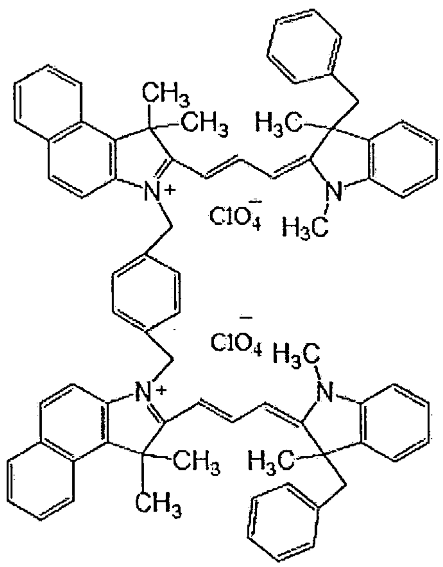

Exemplified Compound (A-98)

The same operation as in Example 1 was conducted, except that 5. 5 g of a compound represented by the following structural formula (12) was used instead of 7.3 g of the compound represented by the structural formula (2) in

Example 1 to obtain 9.4 g (yield: 76.7%) of the exemplified compound (A-98) in Table 1 as a red-purple crystal.

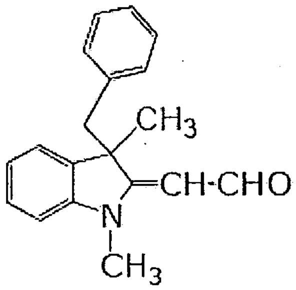

⑫

The elemental analysis value, the absorption maximum wavelength (λmax) in an acetone solution and the gram absorption coefficient (εg) of this compound were as follows:
Elemental analysis value ($C_{76}H_{72}Cl_2N_4O_8$) : MW = 1240.31

| | C | H | N |
|---|---|---|---|
| Calculation value (%) | 73.60 | 5.85 | 4.52 |
| Measurement value (%) | 73.57 | 5.81 | 4.56 |

λmax: 572.0 nm
εg: 1.41 × 105 mL/g·cm

Synthesis Example 3

Synthesis of Indolenine Compound (C)

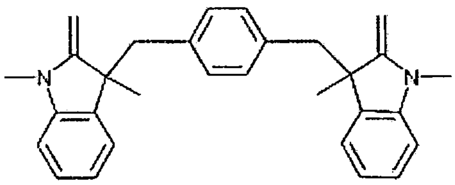

Indolenine Compound (C)

Under a nitrogen atmosphere, 15.9 g of 1,2,3-trimethylindole and 12.5 g of α,α'-dibromo-p-xylene were added to 100 mL of n-propanol, and the mixture was dissolved. 4.7 g of methanesulfonic acid was added dropwise thereto at 25 to 30 degrees centigrade, and then the mixture was stirred at 85 to 90 degrees centigrade for 20 hours. After cooling, the reaction solution was diluted with 120 mL of toluene and 500 mL of water was added thereto for extracting. The aqueous layer was taken out, 6.3 g of sodium hydroxide was added thereto and extracted with 300 mL of toluene, and then the toluene layer was taken out, washed with water and concentrated to obtain 16.9 g of an indolenine compound (C) as brown oil.
The elemental analysis value and mass spectrometric value of this compound were as follows:
Elemental analysis value ($C_{30}H_{32}N_2$) :MW = 420.59

| | C | H | N |
|---|---|---|---|
| Calculation value (%) | 85.67 | 7.67 | 6.66 |
| Measurement value (%) | 85.63 | 7.64 | 6.69 |

MS (m/e): 420 ($M^+$)

Synthesis Example 4

Synthesis of Indolenine Compound (D)

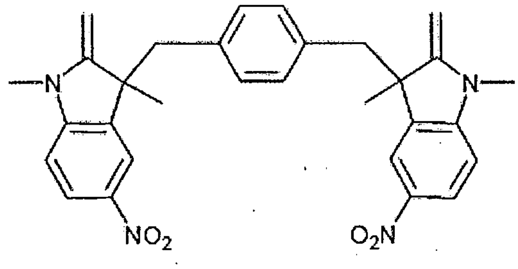

Indolenine Compound (D)

Under a nitrogen atmosphere, 8.4 g of the indolenine compound (A) produced in Synthesis Example 1 was added at 5 to 10 degrees centigrade to 50 mL of concentrated sulfuric acid, and the mixture was stirred for 30 minutes and dissolved. Subsequently, a mixed acid regulated by containing 7.94 g of concentrated nitric acid and 78.5 g of concentrated sulfuric acid was added dropwise thereto at 5 to 10 degrees centigrade, and then stirred at the same temperature for 30 minutes. Furthermore, the reaction mixture was stirred at 25 to 30 degrees centigrade for 2 hours and then discharged into 700 g of ice water, and 665 g of an aqueous solution of sodium hydroxide (40%) was added thereto at not more than 30 degrees centigrade and extracted with 500 mL of ethyl acetate. The organic layer was leached, washed with.water for distilling off the solvent, and vacuum-dried at 30 degrees centigrade to obtain 8.9 g of an indolenine compound (D) as yellowish-brown oil.

The elemental analysis value and mass spectrometric value of this compound were as follows:
Elemental analysis value ($C_{30}H_{30}N_4O_4$) : MW = 510.23

| | C | H | N |
|---|---|---|---|
| Calculation value (%) | 70.57 | 5.92 | 10.97 |
| Measurement value (%) | 70.53 | 5.88 | 11.02 |

MS (m/e): 510 ($M^+$)

Synthesis Example 5

Synthesis of Indolenine Compound (E)

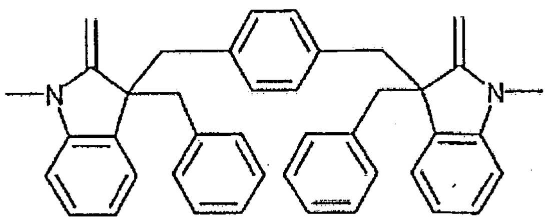

Indolenine Compound (E)

Under a nitrogen atmosphere, 23.5 g of 3-benzyl-1,2-dimethylindole and 12 g of α,α'-dibromo-p-xylene were added to 120 g of DME. The mixture was dissolved and 9.6 g of methanesulfonic acid was added dropwise thereto at 25 to 30 degrees centigrade and then stirred at 85 to 90 degrees centigrade for 20 hours. After cooling, the reaction solution was diluted with 120 mL of toluene and 200 mL of water was added thereto for extracting. The aqueous layer was taken out, 44 g of an aqueous solution of sodium hydroxide (10%) was added thereto and extracted with 300 mL of toluene, and then the toluene layer was taken out, washed with water and concentrated to obtain 21 g of an indolenine compound (E) as a yellow powder.

The elemental analysis value and mass spectrometric value of this compound were as follows:
Elemental analysis value ($C_{42}H_{40}N_2$):MW = 572.78

| | C | H | N |
|---|---|---|---|
| Calculation value (%) | 88.07 | 7.04 | 4.89 |
| Measurement value (%) | 88.05 | 7.01 | 4.91 |

MS (m/e): 572 ($M^+$)

Synthesis Example 6

Synthesis of Indolenine Compound (F)

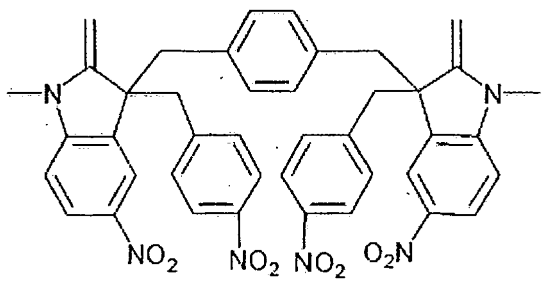

Indolenine Compound (F)

Under a nitrogen atmosphere, 11.4 g of the indolenine compound (E) produced in Synthesis Example 5 was added at 5 to 10 degree centigrade to 50 mL of concentrated sulfuric acid, and the mixture was stirred for 30 minutes and dissolved. Subsequently, a mixed acid regulated by containing 7.94 g of concentrated nitric acid and 78.5 g of concentrated sulfuric acid was added dropwise thereto at 5 to 10 degrees centigrade, and then stirred at the same temperature for 30 minutes. Furthermore, the reaction mixture was stirred at 25 to 30 degrees centigrade for 2 hours and then discharged into 700 g of ice water, while 665 g of an aqueous solution of sodium hydroxide (40%) was added thereto at not more than 30 degrees centigrade. The precipitate was leached, washed with water and vacuum-dried at 30 degrees centigrade to obtain 7.8 g of an indolenine compound (F) as a yellow powder.

The elemental analysis value and mass spectrometric value of this compound were as follows:
Elemental analysis value ($C_{42}H_{36}N_6O_8$):MW = 752.77

| | C | H | N |
|---|---|---|---|
| Calculation value (%) | 67.01 | 4.82 | 11.16 |
| Measurement value (%) | 66.97 | 4.79 | 11.21 |

MS (m/e): 752 ($M^+$)

Example 14

Production of Trimethine Dimer Compound (Exemplified Compound (B-1) in Table 1)

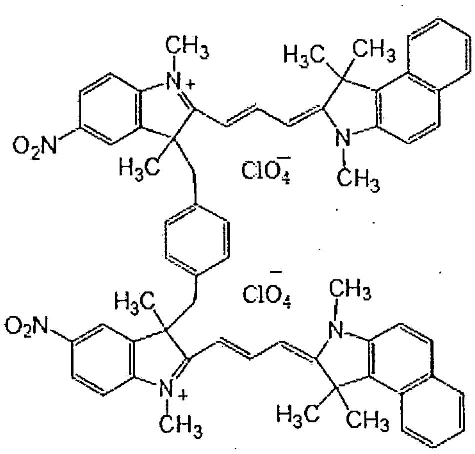

Exemplified Compound (B-1)

Under a nitrogen atmosphere, 5.1 g of the indolenine compound (D) synthesized in Synthesis Example 4 and 5.0 g of a compound represented by the following structural formula (13) were added to 50 mL of acetic anhydride. The mixture was stirred at room temperature for 10 minutes and then 2 g of methanesulfonic acid was added thereto, and stirred at 83 to 86 degrees centigrade for 2.0 hours. The reaction solution was cooled down and 100 mL of methanol was added dropwise thereto and stirred under reflux for 1 hour. After cooling, methanol was concentrated under a reduced pressure, 150 mL of methanol was added to the residue, 3.16 g of an aqueous solution of perchloric acid 70% was added dropwise thereto, and the mixture was stirred at room temperature for 1 hour. The precipitate was leached, washed with methanol and dried to obtain 11.0 g (yield: 93.4%) of the exemplified compound (B-1) in Table 1 as a red-purple crystal.

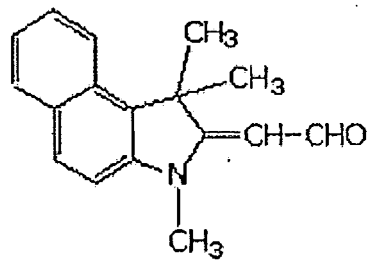

⑬

The elemental analysis value, the absorption maximum wavelength (λmax) in an acetone solution and the gram absorption coefficient (εg) of this compound were as follows:
Elemental analysis value ($C_{64}H_{62}Cl_2N_6O_{12}$) : MW = 1178.12

| | C | H | N |
|---|---|---|---|
| Calculation value (%) | 66.25 | 5.30 | 7.13 |
| Measurement value (%) | 66.21 | 5.27 | 7.15 |

λmax: 578.5 nm
εg: 1.12 × $10^5$ mL/g·cm

Example 15

Production of Trimethine Dimer Compound (Exemplified Compound (B-31) in Table 1)

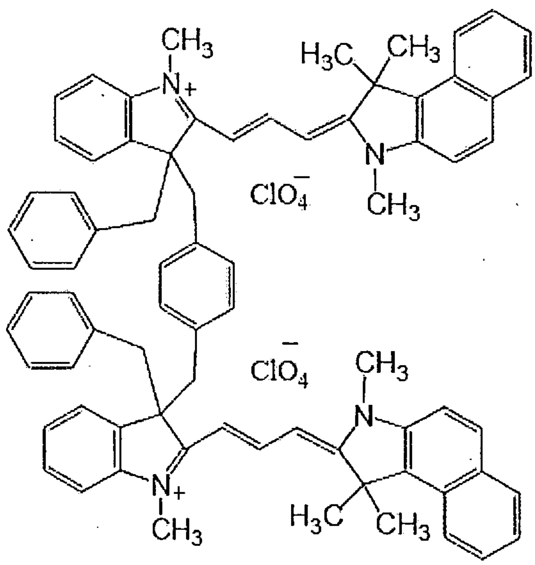

Exemplified Compound (B-31)

The same operation as in Example 14 was conducted, except that 5.7 g of the indolenine compound (E) synthesized in Synthesis Example 5 was used instead of 5.1 g of the indolenine compound (D) synthesized in Synthesis Example 4 used in Example 14 to obtain 10.5 g (yield: 83.4%) of the exemplified compound (B-31) in Table 1 as a red-purple crystal.

The elemental analysis value, the absorption maximum wavelength (λmax) in an acetone solution and the gram absorption coefficient (εg) of this compound were as follows:
Elemental analysis value ($C_{76}H_{72}Cl_2N_4O_8$) :MW = 1240.31

| | C | H | N |
|---|---|---|---|
| Calculation value (%) | 73.60 | 5.85 | 4.52 |
| Measurement value (%) | 73.57 | 5.81 | 4.55 |

λmax: 577.5 nm
εg: 1.38 × $10^5$ mL/g·cm

Example 16

Synthesis of Trimethine Dimer Compound (Exemplified Compound (B-32) in Table 1)

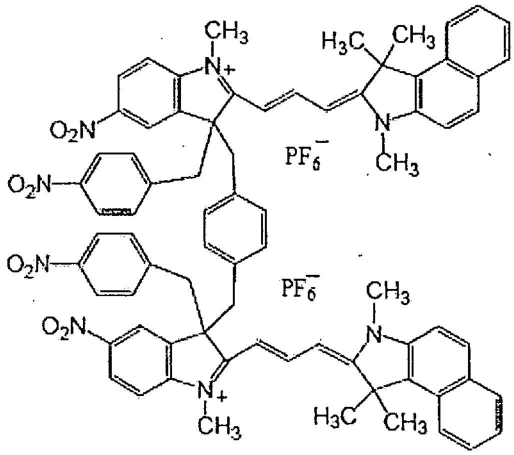

Exemplified Compound (B-32)

The same operation as in Example 14 was conducted, except that 7.5 g of the indolenine compound (F) synthesized in Synthesis Example 6 was used instead of 5.7 g of the indolenine compound (D) synthesized in Synthesis Example 4 used in Example 14 and 11.1 g of an aqueous solution of NaPF6 (32.6%) was used instead of 3.16 g of an aqueous solution of perchloric acid (70%) in Example 14 to obtain 12.6 g (yield: 83.4%) of the exemplified compound (B-32) in Table 1 as a red-purple crystal.

The elemental analysis value, the absorption maximum wavelength (λmax) in an acetone solution and the gram absorption coefficient (εg) of this compound were as follows:
Elemental analysis value ($C_{76}H_{68}F_{12}N_8O_8P_2$): MW = 1511.33

| | C | H | N |
|---|---|---|---|
| Calculation value (%) | 60.40 | 4.54 | 7.41 |
| Measurement value (%) | 66.36 | 4.51 | 7.45 |

λmax: 578.5 nm
εg: $1.07 \times 10^5$ mL/g·cm

Example 17

On an injection molded polycarbonate substrate provided with a spiral groove (pitch: 0.74 μm, depth: 165 nm and width: 0.33 μm) and having a thickness of 0.6 mm and a diameter of 120 mmΦ, the trimethine dimer compound (A-11) described in Table 1 was dissolved in tetrafluoropropanol (20 g/1) and adjusted to have nearly a film thickness of 80 nm at the groove area and a film thickness of 20 nm at the inter-groove area by a spin coating method to form a film. The resultant was dried at 80 degree centigrade for 2 hours and then AgPdCu was sputtered using a sputtering apparatus (CDI-900) manufactured by Balzers to form a reflective film having a film thickness of 80 nm. Furthermore, after an ultraviolet-setting resin: SD17 (a product of Dainippon Ink And Chemicals, Incorporated) was applied onto the reflective layer for UV curing, the same polycarbonate substrate having a thickness of 0.6 mm as mentioned before was laminated thereon to prepare an optical recording medium laminated with an UV light by a KZ8681 radical polymerization adhesive manufactured by JSR.

The obtained optical recording medium was rotated at a linear velocity of 42 m/s (12x speed of DVD-R standard recording speed) by a disk tester DDU-1000 (a product of Pulstech Industry Co. , Ltd. , wavelength: 661 nm, NA: 0.60) for measuring the laser power when recorded at a laser power such that the asymmetry became zero and the blur amount of a 3T pit which was an index of the degree of thermal interference. The recording laser power was 31 mW, while the blur amount of the 3T pit was 10%. It could be confirmed that high-speed recording sensitivity at a 12× speed was excellent, and an excellent signal waveform with suppressed thermal interference was obtained.

Each parameter for signal evaluation will be explained below.

· Asymmetry: In a signal eye-pattern view (Fig. 2), it was defined as follows. It was a parameter specifying the center position of the signal amplitude ($I_3$) derived from a short pit and a short land relative to the center position of the signal amplitude ($I_{14}$) derived from a long pit and a long land. The standard value of DVD-R is not less than -0.05 but

not more than 0.15.

Formula 1

$$[(I_{14H} + I_{14L})/2 - (I_{3H} + I_{3L})/2] / I_{14}$$

Blur Amount of 3T Pit: In the signal eye-pattern view (Fig. 2), it was defined as follows: This parameter was set as an'index indicating the degree of thermal interference because thermal interference was mostly manifested as the blur of the shortest pit (3T pit) on the signal eye pattern.

Formula 2

$$(I_{3LUp} + I_{3LDown}) / I_3 \times 100\ (\%)$$

Examples 18 to 33

Each optical recording medium was prepared in the same manner as in Example 17, except that the trimethine dimer compound described in Table 2 was properly used.

These optical recording media were evaluated in the same manner as in Example 17 and as a result, it could be confirmed that all of the media were excellent in high-speed recording sensitivity at a 12x speed and had excellent signal waveforms with suppressed thermal interference.

Example 34

An optical recording medium was prepared in the same manner as in Example 17, except that a mixture of the trimethine dimer compounds (A-11) and (A-40) (weight ratio: 70:30) was dissolved in tetrafluoropropanol (20 g/l) instead of the trimethine dimer compound (A-11) described in Table 2.

This optical recording medium was evaluated in the same manner as in Example 17 and as a result, it could be confirmed that the medium was excellent in high-speed recording sensitivity at a 12x speed and had an excellent signal waveform with suppressed thermal interference.

Example 35

An optical recording medium was prepared in the same manner as in Example 17, except that a mixture of the trimethine dimer compounds (A-92) and (A-72) (weight ratio: 80:20) was dissolved in tetrafluoropropanol (20 g/l) instead of the trimethine dimer compound (A-11) described in Table 2.

This optical recording medium was evaluated in the same manner as in Example 17 and as a result, it could be confirmed that the medium was excellent in high-speed recording sensitivity at a 12× speed and had an excellent signal waveform with suppressed thermal interference.

Comparative Example 1

An optical recording medium was prepared in the same manner as in Example 17 using the following trimethine compound (structural formula (N)). It was evaluated in the same manner, but recording sensitivity was insufficient and recording at a 12× speed could not be made.

Comparative Examples 2 and 3

Each optical recording medium was prepared in the same manner as in Example 17 using the following trimethine compounds (structural formulae (O) and (P)). Both of them were evaluated in the same manner. Recording at a 12× speed could be confirmed, but recording sensitivity was poor, thermal interference was great and an excellent signal waveform could not be obtained.

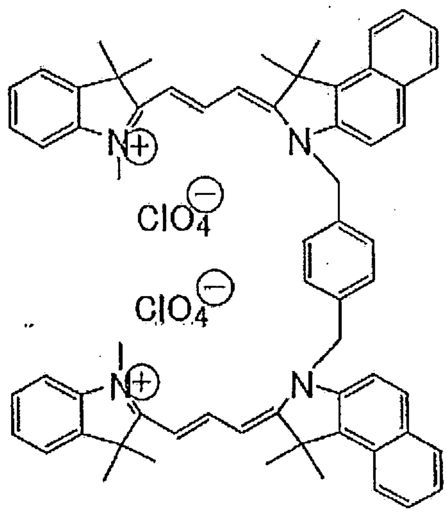

Structural Formula (N)

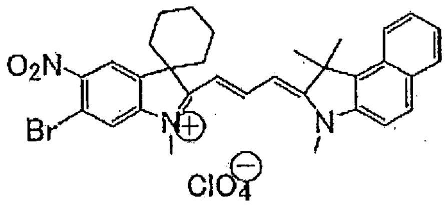

Structural Formula (O)

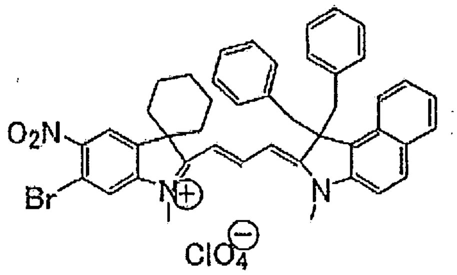

Structural Formula (P)

In Table 2, there were shown the measurement results of the laser power when recorded at a laser power such that the asymmetry became zero and the blur amount of a 3T pit which was an index of the degree of thermal interference, for 12x speed recording in Examples 17 to 35 and Comparative Examples 1 to 3. It could be confirmed that DVD-R media shown in Examples were excellent in the high-speed recording sensitivity at a 12× speed and had excellent signal waveforms with suppressed thermal interference.

[Table 2]

| | Compound Nos. | | Mixing Ratio (Weight Ratio) | 12× Signal properties Laser power (mW) | 3T pit blur amount (degree of thermal interference (%) |
|---|---|---|---|---|---|
| Example 17 | A-11 | - | - | 31.0 | 10 |
| Example 18 | A-12 | - | - | 30.0 | 15 |
| Example 19 | A-14 | - | - | 31.0 | 15 |
| Example 20 | A-22 | - | - | 28.0 | 16 |
| Example 21 | A-30 | - | - | 29.0 | 15 |
| Example 22 | A-36 | - | - | 32.0 | 10 |
| Example 23 | A-42 | - | - | 27.0 | 15 |
| Example 24 | A-15 | - | - | 28.0 | 16 |
| Example 25 | A-69 | - | - | 26.0 | 17 |
| Example 26 | A-91 | - | - | 31.0 | 16 |
| Example 27 | A-92 | - | - | 32.0 | 15 |
| Example 28 | A-93 | - | - | 29.0 | 13 |
| Example 29 | A-94 | - | - | 27.0 | 16 |
| Example 30 | A-96 | - | - | 29.0 | 18 |
| Example 31 | A-98 | - | - | 29.0 | 16 |
| Example 32 | A-101 | - | - | 30.0 | 9 |
| Example 33 | A-106 | - | - | 32.0 | 15 |
| Example 34 | A-11 | A-40 | 70:30 | 31.0 | 16 |
| Example 35 | A-92 | A-72 | 80:20 | 26.0 | 17 |
| Comparative Example 1 | Structural formula (N) | - | - | Unable to evaluate due to insufficient sensitivity | |
| Comparative Example 2 | Structural formula (O) | - | - | 40.0 | 60 |
| Comparative Example 3 | Structural formula (P) | - | - | 38.0 | 40 |

Example 36

On an injection molded polycarbonate substrate provided with a spiral groove (pitch: 0.74 μm, depth: 140 nm and width: 0.30 μm) and having a thickness of 0.6 mm and a diameter of 120 mmΦ, the trimethine dimer compound (B-11) described in Table 1 was dissolved in tetrafluoropropanol (20 g/1) and adjusted to have nearly a film thickness of 80 nm at the groove area and a film thickness of 20 nm at the inter-groove area by a spin coating method to form a film. The resultant was dried at 90 degrees centigrade for 1 hour and then Ag was sputtered using a sputtering apparatus (CDI-900) manufactured by Balzers to form a reflective film having a film thickness of 80 nm. Furthermore, after an ultraviolet-setting resin: SD390 (a product of Dainippon Ink And Chemicals, Incorporated) was applied onto the reflective layer for UV curing, the same polycarbonate substrate having a thickness of 0.6 mm as mentioned before was laminated thereon to prepare an optical recording medium laminated with an UV light by a KZ8681 radical polymerization adhesive manufactured by JSR.

The obtained optical recording medium was rotated at a linear velocity of 56 m/s (16× speed of DVD-R standard recording speed) by a disk tester DDU-1000 (a product of Pulstech Industry Co. , Ltd. , wavelength: 661 nm, NA: 0.60)

for measuring the jitter value when recorded at a laser power such that the jitter value became the minimum and the recording laser power (recording sensitivity). The recording laser power was 45.6 mW, while the jitter value was 7.8%. It could be confirmed that the medium was excellent in high-speed recording sensitivity at a 16× speed, and had excellent recording properties.

Examples 37 to 48

Each optical recording medium was prepared in the same manner as in Example 36, except that the trimethine compound described in Table 3 was properly used.

These optical recording media were evaluated in the same manner as in Example 36 and as a result, it could be confirmed that all of the media were excellent in high-speed recording sensitivity at a 16× speed and had excellent recording properties.

Example 49

An optical recording medium was prepared in the same manner as in Example 36, except that a mixture of the trimethine dimer compounds (B-5) and (B-6) (weight ratio: 60:40) was dissolved in tetrafluoropropanol (20 g/l) instead of the trimethine dimer compound (B-11) described in Table 3.

This optical recording medium was evaluated in the same manner as in Example 36 and as a result, it could be confirmed that the medium was excellent in high-speed recording sensitivity at a 16× speed and had excellent recording properties.

Example 50

An optical recording medium was prepared in the same manner as in Example 36, except that a mixture of the trimethine dimer compounds (B-32) and (B-53) (weight ratio: 80:20) was dissolved in tetrafluoropropanol (20 g/l) instead of the trimethine dimer compound (B-11) described in Table 3.

This optical recording medium was evaluated in the same manner as in Example 36 and as a result, it could be confirmed that the medium was excellent in high-speed recording sensitivity at a 16× speed and had excellent recording properties.

Comparative Example 4

An optical recording medium was prepared in the same manner as in Example 36 using the following trimethine compound (structural formula (N)). It was evaluated in the same manner. The recording sensitivity was insufficient and recording at a 16× speed could not be made.

Comparative Examples 5 and 6

Each optical recording medium was prepared in the same manner as in Example 36 using the following trimethine compounds (structural formulae (O) and (P)). Both of them were evaluated in the same manner. Recording at a 16× speed could be confirmed, but the recording sensitivity was poor, thermal interference was great and an excellent signal waveform could not be obtained.

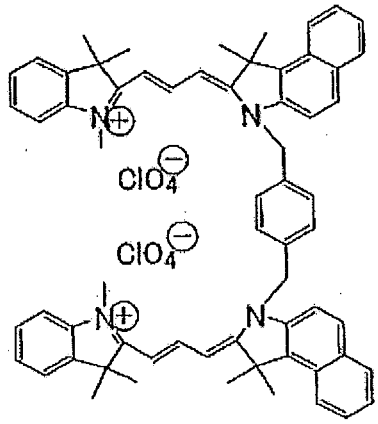

Structural Formula (N)

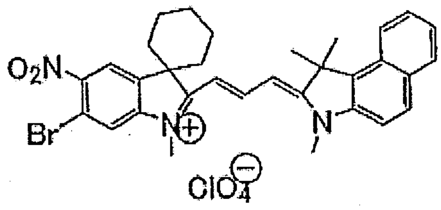

Structural Formula (O)

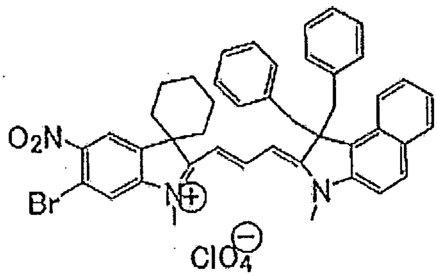

Structural Formula (P)

In Table 3, there were shown the measurement results of the jitter value when recorded at a laser power such that the jitter value became the minimum and the recording laser power, for 16× speed recording in Examples 36 to 50 and Comparative Exampled 4 to 6. It could be confirmed that DVD-R media shown in those Examples were excellent in high-speed recording sensitivity at a 16× speed and had excellent recording properties.

[Table 3]

| | Compound Nos. | | Mixing Ratio (Weight Ratio) | 16× Signal properties | |
|---|---|---|---|---|---|
| | | | | Laser power (mW) | Jitter value (%) |
| Example 36 | B-11 | - | - | 45.6 | 7.8 |
| Example 37 | B-12 | - | - | 42.1 | 7.9 |
| Example 38 | B-19 | - | - | 45.8 | 7.5 |
| Example 39 | B-22 | - | - | 48.5 | 7.2 |
| Example 40 | B-26 | - | - | 45.6 | 8.0 |
| Example 41 | B-30 | - | - | 43.7 | 6.9 |
| Example 42 | B-32 | - | - | 43.6 | 7.4 |
| Example 43 | B-43 | - | - | 44.8 | 7.6 |
| Example 44 | B-44 | - | - | 45.8 | 7.9 |
| Example 45 | B-50 | - | - | 42.6 | 7.1 |
| Example 46 | B-59 | - | - | 45.8 | 6.9 |
| Example 47 | B-60 | - | - | 48.5 | 6.9 |
| Example 48 | B-69 | - | - | 41.3 | 7.5 |
| Example 49 | B-5 | B-6 | 60:40 | 47.8 | 7.7 |
| Example 50 | B-32 | B-53 | 80:20 | 43.5 | 7.1 |
| Comparative Example 4 | Structural formula (N) | - | - | Unable to evaluate due to insufficient sensitivity | |
| Comparative Example 5 | Structural formula (O) | - | - | 52.5 | 11.2 |
| Comparative Example 6 | Structural formula (P) | - | - | 50.1 | 11.0 |

Examples 51 to 67

Each optical recording medium was prepared in the same manner as in Example 36, except that the trimethine compound described in Table 4 was properly used.

These optical recording media were evaluated in the same manner as in Example 36 and as a result, it could be confirmed that all of the media were excellent in the high-speed recording sensitivity at a 16× speed and had excellent recording properties.

Example 68

An optical recording medium was prepared in the same manner as in Example 36, except that a mixture of the trimethine dimer compounds (A-11) and (A-40) (weight ratio: 70:30) was dissolved in tetrafluoropropanol (20 g/1) instead of the trimethine dimer compound (B-11) described in Table 3.

This optical recording medium was evaluated in the same manner as in Example 36 and as a result, it could be confirmed that the medium was excellent in the high-speed recording sensitivity at a 16× speed and had excellent recording properties.

Example 69

An optical recording medium was prepared in the same manner as in Example 36, except that a mixture of the trimethine dimer compounds (A-92) and (A-72) (weight ratio: 80:20) was dissolved in tetrafluoropropanol (20 g/l) instead of the trimethine dimer compound (B-11) described in Table 3.

This optical recording medium was evaluated in the same manner as in Example 36 and as a result, it could be confirmed that the medium was excellent in the high-speed recording sensitivity at a 16× speed and had excellent recording properties.

[Table 4]

| | Compound Nos. | | Mixing Ratio | 16× Signal properties | |
|---|---|---|---|---|---|
| | | | | Laser power | 3T pit blur amount (degree of thermal interference |
| | | | (Weight Ratio) | (mW) | (%) |
| Example 51 | A-11 | - | - | 45.5 | 8.2 |
| Example 52 | A-12 | - | - | 45.3 | 8.5 |
| Example 53 | A-14 | - | - | 43.6 | 8.3 |
| Example 54 | A-22 | - | - | 44.8 | 8.4 |
| Example 55 | A-30 | - | - | 45.8 | 8.0 |
| Example 56 | A-36 | - | - | 46.2 | 8.1 |
| Example 57 | A-42 | - | - | 44.8 | 7.9 |
| Example 58 | A-15 | - | - | 45.3 | 8.9 |
| Example 59 | A-69 | - | - | 45.1 | 8.5 |
| Example 60 | A-91 | - | - | 46.8 | 8.5 |
| Example 61 | A-92 | - | - | 43.5 | 8.1 |
| Example 62 | A-93 | - | - | 44.5 | 7.8 |
| Example 63 | A-94 | - | - | 44.2 | 8.3 |
| Example 64 | A-96 | - | - | 46.9 | 8.4 |
| Example 65 | A-98 | - | - | 48.6 | 8.3 |
| Example 66 | A-101 | - | - | 47.6 | 8.1 |
| Example 67 | A-106 | - | - | 44.3 | 7.9 |
| Example 68 | A-11 | A-40 | 70:30 | 44.2 | 8.3 |
| Example 69 | A-92 | A-72 | 80:20 | 45.5 | 8.7 |

Examples 70 to 79

Each optical recording medium was prepared in the same manner as in Example 36, except that the trimethine compound described in Table 5 was properly used.

These optical recording media were evaluated in the same manner as in Example 36 and as a result, it could be confirmed that all of the media were excellent in the high-speed recording sensitivity at a 16× speed and had excellent recording properties.

[Table 5]

| | Compound Nos. | | Mixing Ratio | 16× Signal properties | |
|---|---|---|---|---|---|
| | | | | Laser power | Jitter value |
| | | | (Weight Ratio) | (mW) | (%) |
| Example 70 | C-1 | - | - | 45.6 | 9.1 |
| Example 71 | C-2 | - | - | 42.1 | 8.6 |
| Example 72 | C-3 | - | - | 45.8 | 7.8 |

(continued)

| | Compound Nos. | | Mixing Ratio (Weight Ratio) | 16× Signal properties | |
|---|---|---|---|---|---|
| | | | | Laser power (mW) | Jitter value (%) |
| Example 73 | C-4 | - | - | 48.5 | 8.9 |
| Example 74 | C-5 | - | - | 45.6 | 8.5 |
| Example 75 | C-11 | - | - | 43.7 | 6.9 |
| Example 76 | C-12 | - | - | 43.6 | 7.2 |
| Example 77 | C-15 | - | - | 44.8 | 6.7 |
| Example 78 | C-16 | - | - | 45.8 | 6.9 |
| Example 79 | C-11 | C-12 | 60:40 | 45.0 | 6.3 |

## Claims

**1.** A trimethine dimer compound represented by the following general formula (I),

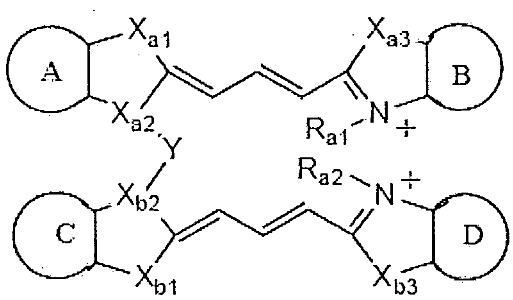

$b(Z^{a-})$ (I)

wherein, in the formula, A, B, C and D each independently represents a benzene ring which may have a substituent or a naphthalene ring which may have a substituent; $X_{a1}$, $X_{b1}$, $X_{a3}$ and $X_{b3}$ each independently represent an oxygen atom, a sulfur atom, a selenium atom, a methylene group which may have a substituent, a cycloalkane-1,1-diyl group having 3 to 6 carbon atoms which may have a substituent or an imino group which may have a substituent; $X_{a2}$ and $X_{b2}$ each independently represent an imino group or a methylene group which may have a substituent; $R_{a1}$ and $R_{a2}$ each independently represent an alkyl group which may have a substitutent or a benzyl group which may have a substitutent;

in $b(Z^{a-})$, $Z^-$ represents an anion; a and b represent an integer of 1 to 2, with the proviso that a × b = 2; and

Y represents the following general formula (II), (III) or (IV),

with the proviso that, when both $X_{a2}$ and $X_{b2}$ are imino groups, one of $X_{a1}$, $X_{b1}$, $X_{a3}$ and $X_{b3}$ is necessarily a 1-alkyl-1-benzylmethylene group which may have a substituent, a 1,1-dibenzylmethylene group which may have a substituent or a cycloalkane-1,1-diyl group having 3 to 6 carbon atoms which may have a substituent,

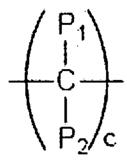

(II)

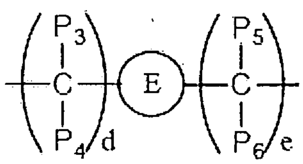

(III)

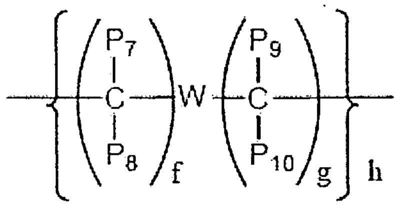

(IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring.

**2.** The trimethine dimer compound according to claim 1 represented by the following general formula (V),

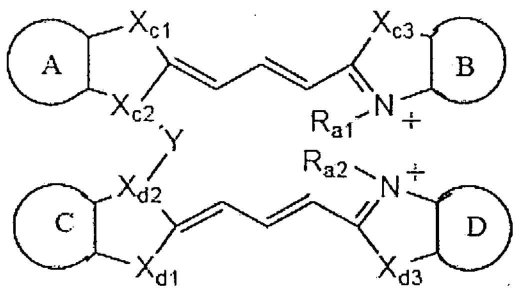

$b(Z^{a-})$ (V)

wherein, in the formula, A, B, C and D each independently represent a benzene ring which may have a substituent or a naphthalene ring which may have a substituent; $X_{c1}$, $X_{d1}$, $X_{c3}$ and $X_{d3}$ each independently represent an oxygen atom, a sulfur atom, a selenium atom, a 1,1-dialkylmethylene group, a 1-alkyl-1-benzylmethylene group which may have a substituent, a 1,1-dibenzylmethylene group which may have a substituent, a cycloalkane-1,1-diyl group having 3 to 6 carbon atoms which may have a substituent, an N-alkylimino group which may have a substituent or an N-benzylimino group which may have a substituent; $X_{c2}$ and $X_{d2}$ each independently represent an imino group or a methylene group which may have a substituent; $R_{a1}$ and $R_{a2}$ each independently represent an alkyl group which may have a substitutent or a benzyl group which may have a substitutent;
in b ($Z^{a-}$), $Z^-$ represents an anion; a and b represent an integer of 1 to 2, with the proviso that a $\times$ b = 2; and
Y represents the following general formula (II), (III) or (IV),
with the proviso that both $X_{c1}$ and $X_{c2}$, or both $X_{d1}$ and $X_{d2}$ are not imino groups at the same time, and when both $X_{c2}$ and $X_{d2}$ are imino groups, one of $X_{c1}$, $X_{d1}$, $X_{c3}$ and $X_{d3}$ is necessarily a 1-alkyl-1-benzylmethylene group which may have a substituent, a 1,1-dibenzylmethylene group which may have a substituent or a cycloalkane-1,1-diyl group having 3 to 6 carbon atoms which may have a substituent,

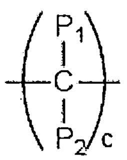
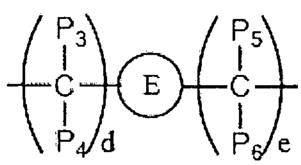
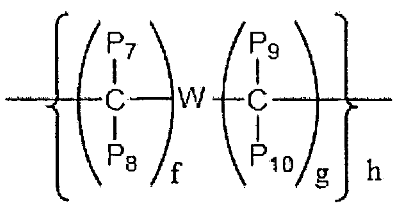

(II) (III) (IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring.

**3.** The trimethine dimer compound according to claim 2 represented by the following general formula (VI),

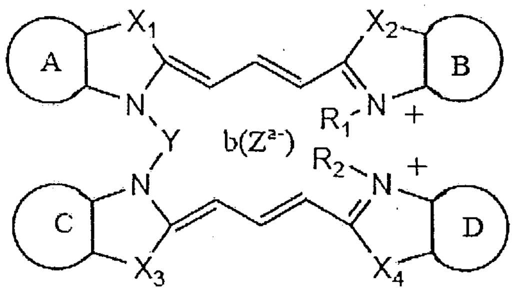

(VI)

wherein, in the formula, A, B, C and D each independently represent a benzene ring which may have a substituent or a naphthalene ring which may have a substituent; $X_1$, $X_2$, $X_3$ and $X_4$ each independently represent a 1,1-dialkylmethylene group, a 1-alkyl-1-benzylmethylene group which may have a substituent, a 1,1-dibenzylmethylene group which may have a substituent or a cycloalkane-1,1-diyl group having 3 to 6 carbon atoms which may have a substituent; $R_1$ and $R_2$ each independently represent an alkyl group which may have a substitutent; in $b(Z^{a-})$, $Z^-$ represents an anion; a and b represent an integer of 1 to 2, with the proviso that $a \times b = 2$; and Y represents the following general formula (II), (III) or (IV), with the proviso that one of $X_1$, $X_2$, $X_3$ and $X_4$ is necessarily a 1-alkyl-1-benzylmethylene group which may have a substituent, a 1,1-dibenzylmethylene group which may have a substituent or a cycloalkane-1,1-diyl group having 3 to 6 carbon atoms which may have a substituent,

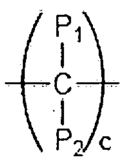

(II)

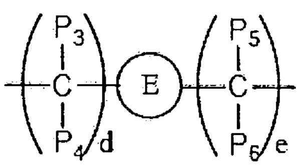

(III)

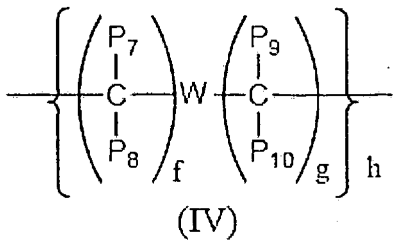

(IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring.

**4.** The trimethine dimer compound according to claim 3 represented by the following general formula (VII),

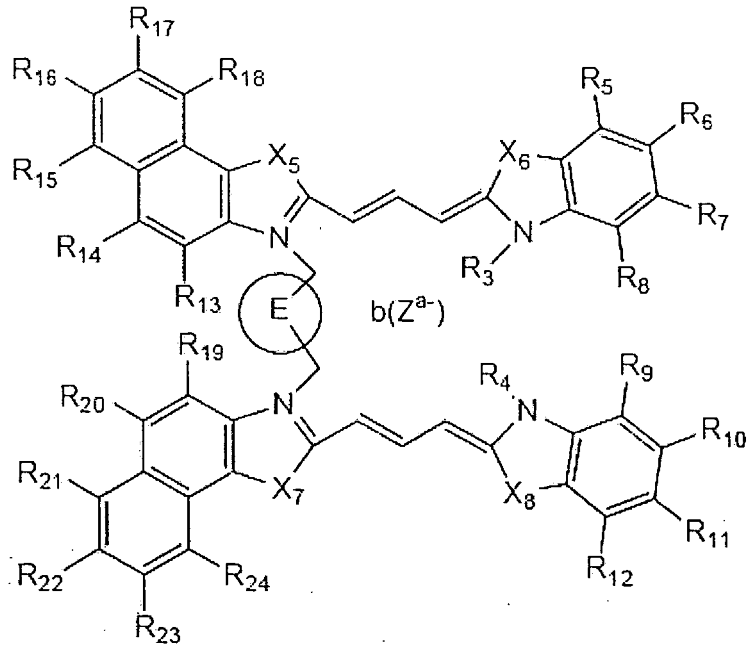

(VII)

wherein, in the formula, $X_5$, $X_6$, $X_7$ and $X_8$ each independently represent a 1,1-dialkylmethylene group, a 1-alkyl-1-benzylmethylene group which may have a substituent, a 1,1-dibenzylmethylene group which may have a substituent or a cycloalkane-1,1-diyl group having 3 to 6 carbon atoms which may have a substituent; $R_3$ and $R_4$ each independently represent an alkyl group which may have a substitutent; $R_5$ to $R_{24}$ each independently represent a hydrogen atom, a halogen atom, a nitro group, an alkyl group or an alkoxy group; a ring E represents a benzene ring or a naphthalene ring; in $b(Z^{a-})$, $Z^-$ represents an anion; a and b represent an integer of 1 to 2, with the proviso that a × b = 2; and one of $X_5$, $X_6$, $X_7$ and $X_8$ is necessarily a 1-alkyl-1-benzylmethylene group which may have a substitutent, a 1,1-dibenzylmethylene group which may have a substituent or a cycloalkane-1,1-diyl group having 3 to 6 carbon atoms which may have a substituent.

**5.** The trimethine dimer compound according to claim 3 represented by the following general formula (VIII),

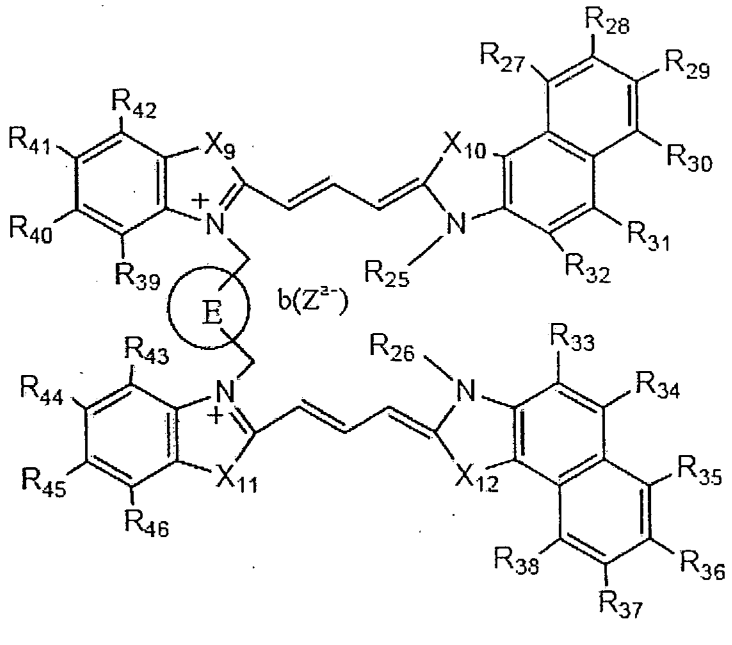

(VIII)

wherein, in the formula, $X_9$, $X_{10}$, $X_{11}$ and $X_{12}$ each independently represent a 1,1-dialkylmethylene group, a 1-alkyl-1-benzylmethylene group which may have a substitutent, a 1,1-dibenzylmethylene group which may have a substituent or a cycloalkane-1,1-diyl group having 3 to 6 carbon atoms which may have a substituent; $R_{25}$ and $R_{26}$ each independently represent an alkyl group which may have a substitutent; $R_{27}$ to $R_{46}$ each independently represent a hydrogen atom, a halogen atom, a nitro group, an alkyl group or an alkoxy group; a ring E represents a benzene ring or a naphthalene ring; in $b(Z^{a-})$, $Z^-$ represents an anion; a and b represent an integer of 1 to 2, with the proviso that a × b = 2; and one of $X_9$, $X_{10}$, $X_{11}$ and $X_{12}$ is necessarily a 1-alkyl-1-benzylmethylene group which may have a substitutent, a 1,1-dibenzylmethylene group which may have a substituent or a cycloalkane-1,1-diyl group having 3 to 6 carbon atoms which may have a substituent.

**6.** The trimethine dimer compound according to claim 2 represented by the following general formula (IX),

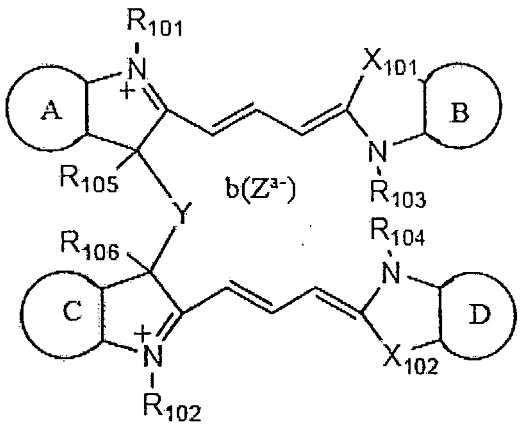

(IX)

wherein, in the formula, A, B, C and D each independently represent a benzene ring which may have a substituent or a naphthalene ring which may have a substituent; $X_{101}$ and $X_{102}$ each independently represent an oxygen atom, a sulfur atom, a selenium atom, a 1, 1-dialkylmethylene group which may have a substituent, a 1-alkyl-1-benzylmethylene group which may have a substituent, a 1,1-dibenzylmethylene group which may have a substituent or a cycloalkane-1,1-diyl group having 3 to 6 carbon atoms which may have a substituent; $R_{101}$ to $R_{106}$ each independently represent an alkyl group which may have a substitutent or a benzyl group which may have a substitutent; in $b(Z^{a-})$, $Z^-$ represents an anion; a and b represent an integer of 1 to 2, with the proviso that a × b = 2; and Y represents the following general formula (II), (III) or (IV),

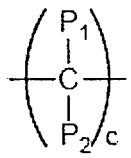

(II)

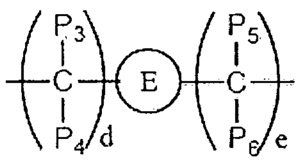

(III)

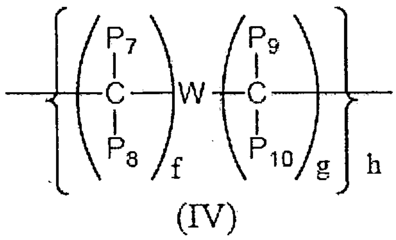

(IV)

wherein, in the formulae (II), (III) and (IV), $P_1$ to $P_{10}$ each independently represent a hydrogen atom or an alkyl group; W represents a sulfur atom, an oxygen atom, an imine residue which may have a substituent, a carbonyl residue or a thiocarbonyl residue; c represents an integer of 1 to 8; d to e represent an integer of 0 to 4; f to g represent an integer of 1 to 4; h represents an integer of 1 to 2; and a ring E represents a benzene ring or a naphthalene ring.

**7.** The trimethine dimer compound according to claim 6 represented by the following general formula (X),

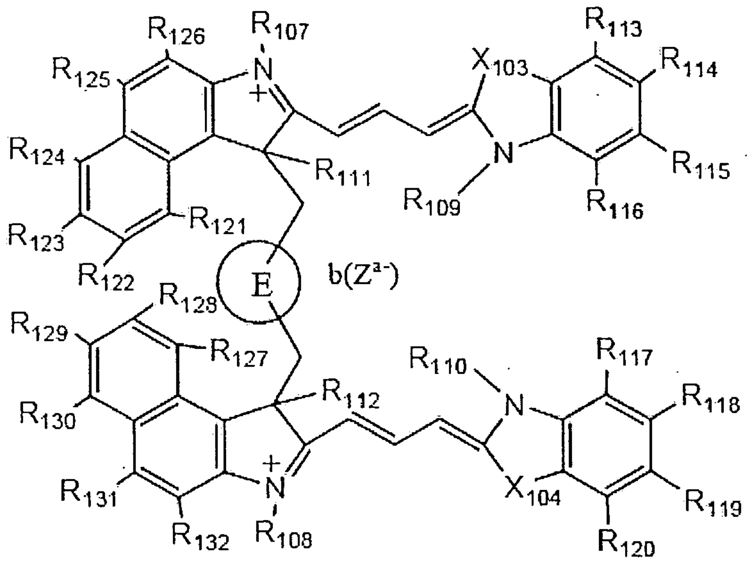

(X)

wherein, in the formula, $X_{103}$ and $X_{104}$ each independently represent an oxygen atom, a sulfur atom, a selenium atom, a 1,1-dialkylmethylene group which may have a substituent, a 1-alkyl-1-benzylmethylene group which may have a substituent, a 1,1-dibenzylmethylene group which may have a substituent or a cycloalkane-1,1-diyl group having 3 to 6 carbon atoms which may have a substituent; $R_{107}$ to $R_{112}$ each independently represent an alkyl group which may have a substitutent or a benzyl group which may have a substitutent; $R_{113}$ to $R_{132}$ each independently represent a hydrogen atom, a halogen atom, a nitro group, an alkyl group or an alkoxy group; a ring E represents a benzene ring or a naphthalene ring; in $b(Z^{a-})$, $Z^-$ represents an anion; and a and b represent an integer of 1 to 2, with the proviso that $a \times b = 2$.

**8.** The trimethine dimer compound according to claim 6 represented by the following general formula (XI),

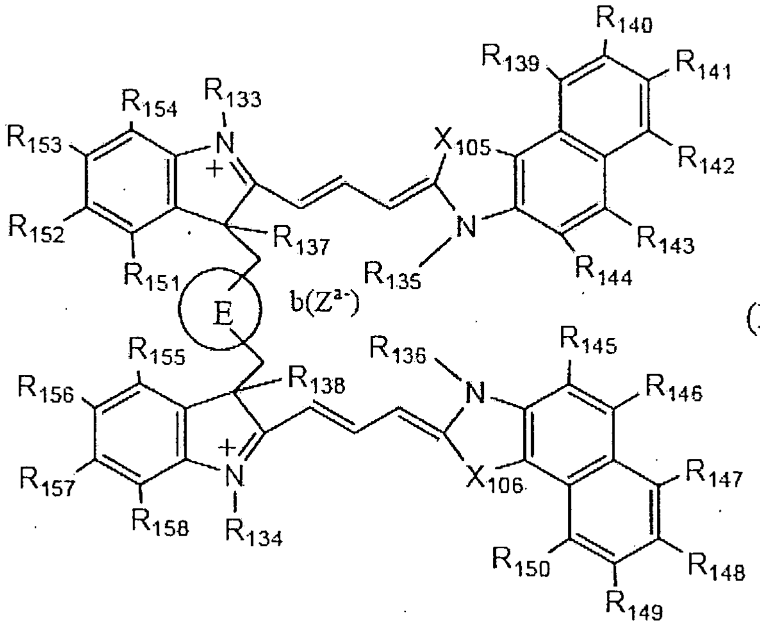

(XI)

wherein, in the formula, $X_{105}$ and $X_{106}$ each independently represent an oxygen atom, a sulfur atom, a selenium

atom, a 1,1-dialkylmethylene group which may have a substitutent, a 1-alkyl-1-benzylmethylene group which may have a substitutent, a 1,1-dibenzylmethylene group which may have a substituent or a cycloalkane-1,1-diyl group having 3 to 6 carbon atoms which may have a substituent; $R_{133}$ to $R_{138}$ each independently represent an alkyl group which may have a substitutent or a benzyl group which may have a substitutent; $R_{139}$ to $R_{158}$ each independently represent a hydrogen atom, a halogen atom, a nitro group, an alkyl group or an alkoxy group; a ring E represents a benzene ring or a naphthalene ring; in b ($Z^{a-}$), $Z^-$ represents an anion; and a and b represent an integer of 1 to 2, with the proviso that a $\times$ b = 2.

**9.** An optical recording medium having at least a recording layer containing an organic dye and a reflective layer on a substrate, using at least one kind of the trimethine dimer compounds according to any one of claims 1 to 8 as an organic dye.

Fig. 1

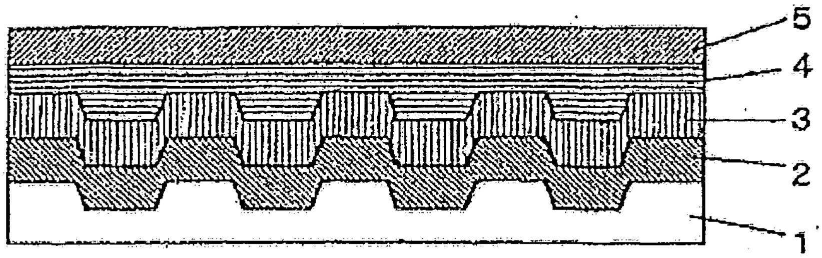


Fig. 2

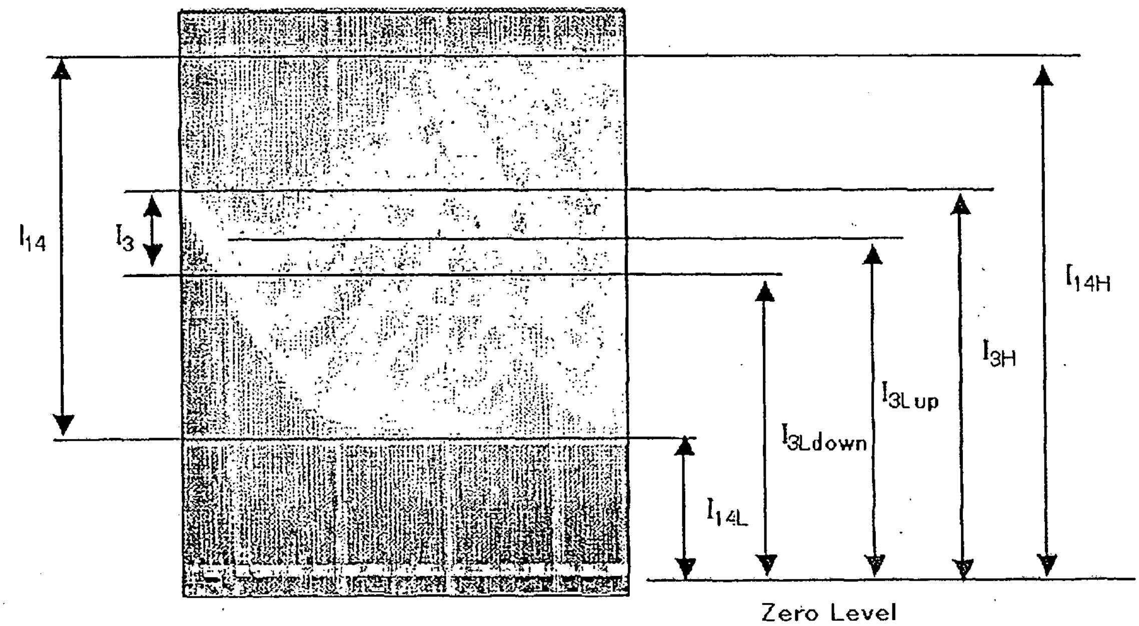

## INTERNATIONAL SEARCH REPORT

International application No.
PCT/JP2006/310087

A. CLASSIFICATION OF SUBJECT MATTER
***C09B23/00***(2006.01), ***B41M5/26***(2006.01), ***G11B7/244***(2006.01)

According to International Patent Classification (IPC) or to both national classification and IPC

B. FIELDS SEARCHED

Minimum documentation searched (classification system followed by classification symbols)
B41M5/26, C09B23/00, G11B7/244

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 11-58961 A (Nippon Kayaku Co., Ltd.), 02 March, 1999 (02.03.99), Claims | 1-9 |
| A | JP 2003-231359 A (Asahi Denka Kogyo Kabushiki Kaisha), 19 August, 2003 (19.08.03), Claims | 1-9 |
| A | CN 1563201 A (UNIV HUADONG TECH), 12 January, 2005 (12.01.05), Claims | 1-9 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 July, 2006 (04.07.06) | 11 July, 2006 (11.07.06) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**
Information on patent family members

International application No.
PCT/JP2006/310087

| | | |
|---|---|---|
| JP 11-58961 A | 1993.03.02 | (Family: none) |
| JP 2003-231359 A | 2003.08.19 | KR 2003068414 A<br>CN 1438639 A<br>TW 200306334 A |
| CN 1563201 A | 2005.01.12 | (Family: none) |

Form PCT/ISA/210 (patent family annex) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11053761 A
- JP 2000108510 A
- JP 2000289335 A
- JP 2002052829 A
- JP 2003231359 A
- JP 2005054150 A
- JP 2005053875 A
- JP 3627892 B